(19) Europäisches Patentamt / European Patent Office / Office européen des brevets

(11) **EP 4 498 278 A1**

(12) **EUROPEAN PATENT APPLICATION**
published in accordance with Art. 153(4) EPC

(43) Date of publication:
**29.01.2025 Bulletin 2025/05**

(21) Application number: **22933627.6**

(22) Date of filing: **24.11.2022**

(51) International Patent Classification (IPC):
**G06F 30/20** (2020.01)    **G06Q 10/04** (2023.01)

(52) Cooperative Patent Classification (CPC):
**G06F 30/20; G06Q 10/04**

(86) International application number:
**PCT/JP2022/043278**

(87) International publication number:
**WO 2023/181497 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2022 JP 2022046987**

(71) Applicant: **Panasonic Intellectual Property Management Co., Ltd.**
**Kadoma-shi, Osaka 571-0057 (JP)**

(72) Inventors:
• **USHIODA, Mikio**
  **Kadoma-shi, Osaka 571-0057 (JP)**
• **HARA, Nobuo**
  **Kadoma-shi, Osaka 571-0057 (JP)**

(74) Representative: **Grünecker Patent- und Rechtsanwälte PartG mbB**
**Leopoldstraße 4**
**80802 München (DE)**

(54) **EVALUATION DEVICE, EVALUATION METHOD, AND PROGRAM**

(57) Evaluation device (100A) is a device that evaluates, by Bayesian optimization, an unknown characteristic point corresponding to a candidate experimental point based on a known characteristic point corresponding to an experimented experimental point, the evaluation device including: reception controller (10A) that acquires experimental result data (222) indicating the experimented experimental point and the known characteristic point, objective data (212) indicating an optimization objective, constraint condition data (213) indicating a constraint condition, and region reduction rule data (214); evaluation value calculator (12A) that calculates an evaluation value of the unknown characteristic point based on experimental result data (222), objective data (212), constraint condition data (213), and region reduction rule data (214); and evaluation value output unit (13) that outputs the evaluation value, in which evaluation value calculator (12A) gives a weighting according to a degree of conformity of the constraint condition to the evaluation value for at least one objective characteristic.

FIG. 23

EP 4 498 278 A1

**Description**

TECHNICAL FIELD

The present disclosure relates to a technique for evaluating experimental conditions used for development of general industrial products, development of manufacturing processes, or the like.

BACKGROUND ART

In the development of industrial products or in the development of manufacturing processes, it is necessary to control the set control factors under optimal conditions so as to satisfy the requirements of the required objective characteristics. For example, in the development of a battery, a thickness of a positive electrode, a thickness of a negative electrode, the number of separators, the ionic conductivity of an electrolyte solution, and the like are set as control factors, and the capacity, the life, the expense cost, and the like are set as objective characteristics.

It is known that an optimal solution of a control factor can be searched by a mathematical optimization method in a case where a relationship between the control factor and an objective characteristic can be expressed by a physical formula. However, in a case where the relationship is unknown, a set of combinations (that is, experimental points) of the values of the set control factors is selected as experimental conditions, and an actual experiment is performed. Then, as an experimental result, a combination (that is, a characteristic point) of the values of the objective characteristics corresponding to the experimental points is acquired. By repeating such an experiment, an optimal solution of the control factor can be searched for.

Generally, in the development of complex industrial products or in the development of manufacturing processes, large monetary or time costs are incurred in order to execute a single experiment. Therefore, in order to perform development work efficiently, it is important to search for an optimal solution with as few experiments as possible.

Incidentally, conventionally, an approach using an experimental design method and a response surface method has been used for searching for an optimal solution thereof. However, in the approach using these methods, trial and error of an analyst is required at the stage of creating a prediction model or searching for an optimal solution, and thus quantitative evaluation with a consistent procedure is difficult.

In recent years, in the field of machine learning, a data-driven approach using Bayesian optimization has attracted attention (see, for example, PTL 1, NPL 1, and NPL 2). The Bayesian optimization is an optimization technique that assumes Gaussian process as a mathematical model that expresses a correspondence relationship between input and output. In the case of using the Bayesian optimization, each time an experimental result is obtained, a predictive distribution of characteristic points is calculated for each set experimental point. Then, the optimum next experimental condition is selected using the predictive distribution of each characteristic point and an evaluation criterion called an acquisition function. This makes it possible to perform quantitative evaluation regardless of the skill of analyst, and also possible to contribute to automation of the optimal solution search work.

Citation List

Patent Literature

PTL 1: Unexamined Japanese Patent Publication No. 2019-113985

Non-Patent Literature

NPL 1: M.Emmerich, A.Deutz, J.W.Klinkenberg, "The computation of the expected improvement in dominated hypervolume of Pareto front approximations," Repport Technique, Leiden University, Vol.34, 2008.
NPL 2: M.Abdolshah, A.Shilton, S.Rana, S.Gupta, S.Venkatesh, "Expected Hypervolume Improvement with Constraints," International Conference on Pattern Recognition (ICPR), 2018.

SUMMARY OF THE INVENTION

An evaluation device according to an aspect of the present disclosure is an evaluation device that evaluates, by Bayesian optimization, an unknown characteristic point corresponding to a candidate experimental point based on a known characteristic point corresponding to an experimented experimental point, the evaluation device including: a first receiver that acquires experimental result data indicating the experimented experimental point and the known characteristic point; a second receiver that acquires objective data indicating an optimization objective, the unknown characteristic point indicating values of one or a plurality of objective characteristics, and at least one objective characteristic having the optimization objective; a third receiver that acquires constraint condition data indicating a constraint condition given to the at least one objective characteristic; a fourth receiver that acquires region reduction rule data indicating a division method for a characteristic space represented by at least two objective characteristics and indicating a dimension for reducing an active region for each region of the characteristic space divided by the division method; a calculator that calculates an evaluation value of the unknown characteristic point based on the experimental result data, the objective data, the constraint condition data, and the region reduction rule data; and an output unit that outputs the evaluation value, in which the calculator gives a weighting according to a degree of conformity of the constraint condition to the evaluation value for the at least one objective characteristic.

BRIEF DESCRIPTION OF THE DRAWINGS

Fig. 1 is a diagram for explaining a schematic operation of an evaluation device according to a first exemplary embodiment.

Fig. 2 is a diagram illustrating an example in which each candidate experimental point and each characteristic point according to the first exemplary embodiment are represented by a graph.

Fig. 3 is a diagram illustrating a configuration of an evaluation device according to the first exemplary embodiment.

Fig. 4 is a block diagram illustrating a functional configuration of an arithmetic circuit according to the first exemplary embodiment.

Fig. 5 is a diagram illustrating an example of an acceptance image displayed on a display to accept an input of setting information according to the first exemplary embodiment.

Fig. 6 is a diagram illustrating an example of control factor data according to the first exemplary embodiment.

Fig. 7 is a diagram illustrating an example of objective data and constraint condition data according to the first exemplary embodiment.

Fig. 8A is a diagram illustrating an example of a standard range according to the first exemplary embodiment.

Fig. 8B is a diagram illustrating another example of the standard range according to the first exemplary embodiment.

Fig. 9 is a flowchart illustrating a processing operation of the evaluation device according to the first exemplary embodiment.

Fig. 10A is a diagram illustrating an example of candidate experimental point data according to the first exemplary embodiment.

Fig. 10B is a diagram illustrating another example of the candidate experimental point data of the first exemplary embodiment.

Fig. 11 is a diagram illustrating an example of experimental result data according to the first exemplary embodiment.

Fig. 12 is a diagram for explaining processing by an evaluation value calculator according to the first exemplary embodiment.

Fig. 13 is a diagram illustrating an example of predictive distribution data according to the first exemplary embodiment.

Fig. 14A is a diagram illustrating an example of an improvement region according to the first exemplary embodiment.

Fig. 14B is a diagram illustrating another example of the improvement region according to the first exemplary embodiment.

Fig. 15A is a diagram for describing a method of calculating a volume of the improvement region according to the first exemplary embodiment.

Fig. 15B is a diagram illustrating an example in which a whole characteristic space is divided into a plurality of small regions according to the first exemplary embodiment.

Fig. 15C is a diagram illustrating an example of a lower end point and an upper end point of the small region according to the first exemplary embodiment.

Fig. 16 is a diagram illustrating an example of evaluation value data according to the first exemplary embodiment.

Fig. 17 is a diagram illustrating an example of a standard range and a management range according to Modification 1 of the first exemplary embodiment.

Fig. 18 is a diagram for explaining processing by an evaluation value calculator according to Modification 2 of the first exemplary embodiment.

Fig. 19 is a diagram illustrating an example of a minimum distance according to Modification 2 of the first exemplary embodiment.

Fig. 20 is a diagram illustrating an example of minimum distance data according to Modification 2 of the exemplary embodiment.

Fig. 21 is a diagram illustrating an example of evaluation value data according to Modification 2 of the first exemplary embodiment.

Fig. 22 is a diagram illustrating a configuration of an evaluation device according to a second exemplary embodiment.

Fig. 23 is a block diagram illustrating a functional configuration of an arithmetic circuit according to the second exemplary embodiment.

Fig. 24 is a diagram illustrating an example of a region reduction rule region of an acceptance image displayed on a display to accept an input of region reduction rule data according to the second exemplary embodiment.

Fig. 25 is a diagram illustrating an example of region reduction rule data according to the second exemplary embodiment.

Fig. 26 is a flowchart illustrating a processing operation of the evaluation device according to the second exemplary embodiment.

Fig. 27 is a diagram for explaining processing by an evaluation value calculator according to the second exemplary embodiment.

Fig. 28 is a diagram illustrating an example of a characteristic space divided into regions in a case where the region reduction rule according to the second exemplary embodiment is applied.

Fig. 29A is a diagram illustrating another example of the characteristic space divided into regions in a case where the region reduction rule according to the second exemplary embodiment is applied.

Fig. 29B is a diagram illustrating another example of the characteristic space divided into regions in a case where the region reduction rule according to the second exemplary embodiment is applied.

Fig. 29C is a diagram illustrating another example of the characteristic space divided into regions in a case where the region reduction rule according to the second exemplary embodiment is applied.

Fig. 30A is a diagram describing a method of calculating a Pareto boundary according to the second exemplary embodiment.

Fig. 30B is a diagram describing a method of calculating the Pareto boundary according to the second exemplary embodiment.

Fig. 31A is a diagram describing a method of calculating the Pareto boundary according to the second exemplary embodiment.

Fig. 31B is a diagram describing a method of calculating the Pareto boundary according to the second exemplary embodiment.

Fig. 32A is a diagram describing a method of calculating the Pareto boundary according to the second exemplary embodiment.

Fig. 32B is a diagram describing a method of calculating the Pareto boundary according to the second exemplary embodiment.

Fig. 33A is a diagram describing a method of calculating the Pareto boundary according to the second exemplary embodiment.

Fig. 33B is a diagram describing a method of calculating the Pareto boundary according to the second exemplary embodiment.

Fig. 34 is a diagram illustrating an example of a pareto boundary in a case where there is no constraint condition according to form 2 of present implementation.

Fig. 35 is a diagram illustrating an example of an improvement region under the Pareto boundary illustrated in Fig. 34.

Fig. 36 is a diagram illustrating an example of the Pareto boundary in a case where there is a constraint condition according to the second exemplary embodiment.

Fig. 37 is a diagram illustrating an example of an improvement region determined in a case where there is a constraint condition under the Pareto boundary illustrated in Fig. 36.

Fig. 38A is a diagram conceptually illustrating search priorities in the divided regions illustrated in Fig. 28.

Fig. 38B is a diagram conceptually illustrating search priorities in the divided regions illustrated in Fig. 29B.

Fig. 39A is a diagram for describing a positional relationship between a predictive distribution and a Pareto boundary in a case where a region reduction rule is applied to a standard range according to the second exemplary embodiment.

Fig. 39B is a diagram for describing a positional relationship between the predictive distribution and the Pareto boundary in a case where the region reduction rule is applied to the standard range according to the second exemplary embodiment.

Fig. 40A is a diagram illustrating positions of characteristic points that can be observed in a case where the region reduction rule is applied to the standard range according to the second exemplary embodiment.

Fig. 40B is a diagram for explaining a relationship between an order of characteristic points observed and the Pareto boundary in a case where the region reduction rule is applied to the standard range according to the second exemplary embodiment.

Fig. 41 is a diagram for describing processing in a case where an evaluation value calculator according to the second exemplary embodiment also calculates a minimum distance.

Fig. 42 is a diagram illustrating an example of an experimental result data sheet obtained when an optimal solution is searched according to an example of the second exemplary embodiment.

Fig. 43A is a diagram illustrating another example of a dividing line that divides a region according to the region reduction rule of the second exemplary embodiment.

Fig. 43B is a diagram illustrating another example of the dividing line that divides the region according to the region reduction rule of the second exemplary embodiment.

DESCRIPTION OF EMBODIMENT

(Knowledge underlying present invention)

The present inventors have found that the following problems arise in PTL 1, NPL 1, and NPL 2 described in the section of "BACKGROUND ART".

There are several techniques proposed related to multi-objective Bayesian optimization for simultaneously optimizing a plurality of objective characteristics. For example, NPL 1 discloses an optimal solution search principle and a specific calculation method of expected hypervolume improvement (EHVI), which is a type of multi-objective Bayesian optimization. This makes it possible to perform quantitative evaluation of optimal solution search even when there are a plurality of objective characteristics desired to optimize.

Furthermore, in industrial product development or manufacturing process development, there is a case where a standard range is provided as a constraint condition regarding the value of the objective characteristic. For example, the standard range is "the battery capacity is desired to fall within the standard range of 1850 [mAh] to 1950 [mAh]", "with 3 years as the minimum value, the longer the life is, the better it is (that is, the minimum value of the standard range of the life is 3 years, and the maximum value is $+\infty$)", or the like. When the conventional Bayesian optimization is applied in a case where there is a standard range, there is a possibility that search has a poor calculation efficiency or a search proceeds to another region that is not the optimal solution.

Therefore, there are also some techniques proposed related to constrained Bayesian optimization. For example, the method of PTL 1 includes, for each candidate experimental point, calculating, from a predictive distribution obtained by Gaussian process regression, a probability of falling within a standard range, extracting only the candidate experimental point whose probability exceeds a certain threshold, and evaluating an acquisition function. This corresponds to the constrained optimization problem.

It is also possible to adopt EHVI to the method of PTL 1 as an acquisition function. However, among the plurality of candidate experimental points, those with the objective characteristic value falling within the standard range can be expected to have significant improvement from the provisional optimal solution, but those with the objective characteristic value that is low in probability of falling within the standard range is excluded from the evaluation target of the acquisition function. Therefore, the technique of PTL 1 in which EHVI is adopted contributes to reduction of the calculation cost, but it is not necessarily possible to search for a true optimal solution.

Furthermore, for example, NPL 2 discloses expected hypervolume improvement with constraints (EHVIC) in which EHVI is extended in a case where there is a constraint condition. The design method of the acquisition function described in NPL 2 comprehensively indexes the probability of falling within the standard range and the improvement amount, and evaluates them for all candidate experimental points. Therefore, there is a high possibility of improving the search efficiency (that is, a true optimal solution is obtained). However, in the design method of the acquisition function described in NPL 2, the objective characteristic desired to be maximized or minimized is different from the objective characteristic desired to fall within the standard range. Therefore, the design method of the acquisition function described in NPL 2 can be applied to an optimization problem such as "the battery capacity is 1850 [mAh] to 1950 [mAh], and it is desired to search for an experimental point that maximizes the life" in the above example. However, the method of NPL 2 cannot be applied to an optimization problem in which a constraint condition such as a standard range is given to an objective characteristic having an objective such as maximization or minimization, such as "it is desired to search for an experimental point that maximizes the life three years or more".

Moreover, in the method of designing an acquisition function of NPL 2, there is also a problem that a calculation amount increases in an exponential function order with respect to the number of objective characteristics to be maximized or minimized and the number of Pareto points that are provisional optimal solutions (non-inferior solutions) in evaluating the acquisition function.

As described above, the evaluation device using the method described in each of the above literatures has a problem that the application scene is limited.

Therefore, an object of the evaluation device of the present disclosure is to apply Bayesian optimization to an optimization problem in which a constraint condition is given to an objective characteristic having an objective of the optimization problem.

An evaluation device according to an aspect of the present disclosure is an evaluation device that evaluates, by Bayesian optimization, an unknown characteristic point corresponding to a candidate experimental point based on a known characteristic point corresponding to an experimented experimental point, the evaluation device including: a first receiver that acquires experimental result data indicating the experimented experimental point and the known characteristic point; a second receiver that acquires objective data indicating an optimization objective, the unknown characteristic point indicating values of one or a plurality of objective characteristics, and at least one objective characteristic having the optimization objective; a third receiver that acquires constraint condition data indicating a constraint condition given to the at least one objective characteristic; a fourth receiver that acquires region reduction rule data indicating a division method for a characteristic space represented by at least two objective characteristics and indicating a dimension for reducing an active region for each region of the characteristic space divided by the division method; a calculator that calculates an evaluation value of the unknown characteristic point based on the experimental result data, the objective data, the constraint condition data, and the region reduction rule data; and an output unit that outputs the evaluation value, in which the calculator gives a weighting according to a degree of conformity of the constraint condition to the evaluation value for the at least one objective characteristic.

As a result, when the calculator calculates the evaluation value of the unknown characteristic point on the basis of the experimental result data, the objective data, the constraint condition data, and the region reduction rule data, the weighting according to the degree of conformity of the constraint condition is given to the evaluation value for the at least one objective characteristic. This at least one objective characteristic has an optimization objective. Therefore, it is possible to apply Bayesian optimization to an optimization problem in which a constraint condition is given to an objective characteristic having an objective of the optimization problem. As a result, it is possible to extend the application scene.

Furthermore, in the calculation of the acquisition function, the entire characteristic space is divided into an active region and an inactive region at a pareto boundary determined by a certain rule from the pareto point. Therefore, since the calculator can further change the definition of the pareto boundary on the basis of the region reduction rule data, the acquisition function in the Bayesian optimization can be calculated only by calculating an expectation value of the volume of a single super-cuboid. As a result, the calculator can suppress a calculation amount of the acquisition function while maintaining the search efficiency, so that the evaluation of the unknown characteristic point can be performed at high speed.

Furthermore, the optimization objective may include a first objective of keeping an objective characteristic within any one of at least one constraint range and a second objective of minimizing or maximizing the objective characteristic, and the calculator may calculate the evaluation value by performing different weighting processing for each of the at least one objective characteristic in a case (i) where an interval of the objective characteristic used to calculate the evaluation value is outside each of the at least one constraint range, in a case (ii) where the interval is within any one of the at least one constraint range, and the optimization objective is the first objective, and in a case (iii) where the interval is within any one of the at least one constraint range, and the optimization objective is the second objective. For example, the at least one constraint range may be one standard range, or may be a standard range and a management range. Furthermore, the interval of the objective characteristic is, for example, an interval divided by a constraint range, one or more characteristic points (more specifically, pareto points), and the like in a characteristic space represented by at least one objective characteristic.

Due to this, since the evaluation value calculated for each candidate experimental point is output, the user of the evaluation device can select a candidate experimental point as the next experimental point based on those evaluation values, and use the characteristic point obtained by the experiment using the experimental point, for calculation of the evaluation value of next each candidate experimental point. By repetition of calculation and output of such an experiment and an evaluation value, it is possible to obtain a solution of a candidate experimental point that satisfies an optimization objective of each objective characteristic, that is, an optimal solution.

Furthermore, the evaluation device according to one aspect of the present disclosure performs weighting processing different from one another among in the cases (i) to (iii) for each of at least one objective characteristic. Therefore, regardless of whether the optimization objective of the objective characteristic is the first objective or the second objective, the evaluation value of the candidate experimental point can be appropriately calculated based on Bayesian optimization. That is, the evaluation value of the candidate experimental point can be appropriately calculated based on Bayesian optimization, regardless of whether the optimization objective of the objective characteristic is within the constraint range or maximization or minimization. Furthermore, in the case of (iii), since the interval of the objective characteristic is within the constraint range and the optimization objective is the second objective, unlike the method of NPL 2, the evaluation value can be quantitatively and appropriately calculated even in a case where the objective characteristic whose optimization objective is maximization or minimization has a constraint range as a constraint condition.

As a result, it is possible to apply the present disclosure also to an optimization problem having a constraint range such as a standard range, that is, a constraint condition. That is, it is possible to extend the application scene, and perform quantitative evaluation for improving the search efficiency of the optimal solution.

Furthermore, the evaluation device may further include a candidate experimental point creation unit that creates the candidate experimental point by combining values that satisfy predetermined conditions of a plurality of control factors.

For example, each of the predetermined conditions is a condition that the sum of the values of the respective ratio variables of the plurality of control factors is 1. In a more specific example, the ratio variable is a compound ratio of materials such as compounds corresponding to the control factor. Therefore, for each combination of compound ratios of a plurality of types of compounds, an evaluation value for the combination can be calculated. As a result, it is possible to appropriately search for an optimal solution for at least one objective characteristic of the synthetic material obtained by compounding these compounds.

Furthermore, the calculator may calculate the evaluation value based on a constraint range having a shape different from a rectangle of the at least one constraint range.

Due to this, in a characteristic space expressed by two objective characteristics, for example, an evaluation value is calculated based on a constraint range such as a circle, an ellipse, or a star. Therefore, not limited to a case where the shape of the constraint range is rectangular, the application scene can be further extended.

Furthermore, in a case where a plurality of constraint ranges is present as the at least one constraint range, the calculator may calculate the evaluation value by further dividing the case (ii) into a plurality of cases and performing different weighting processing in each of the plurality of cases, and in each of the plurality of cases, the interval may be included in mutually different constraint ranges among the plurality of constraint ranges.

For example, the plurality of constraint ranges are a standard range and a management range included in the standard range. Then, the case of (ii) is divided into a first case where the interval is within the standard range and out of the management range and the optimization objective is the first objective, and a second case where the interval is within the management range and the optimization objective is the first objective. Furthermore, weighting processing, for example, in which a larger weight is used in the second case than in the first case is performed. Thus, when the plurality of constraint ranges are present, and by further dividing the case (ii) into the plurality of cases, it is possible to perform weighting on each of the plurality of constraint ranges in a stepwise manner. Therefore, it is possible to appropriately calculate the evaluation value even in a case where the value of the objective characteristic falls within the standard range and is desired to fall within the management range as much as possible. As a result, it is possible to further extend the application scene for the optimization problem.

Furthermore, the calculator may further calculate a minimum distance of distances between the candidate experimental point and respective one or more of the experimented experimental points, and the output unit may further output the minimum distance corresponding to the candidate experimental point.

Due to this, since the minimum distance corresponding to each candidate experimental point is output, the user of the evaluation device can select the candidate experimental point that becomes the next experimental point based on not only the evaluation value but also the minimum distance. For example, at an initial stage of the optimal solution search, the evaluation value of a candidate experimental point close to the experimental point already used in the experiment tends to become large, and there is a possibility that such a candidate experimental point does not greatly contribute to optimization even if selected for next experiment. Therefore, the user can improve the accuracy of the evaluation value and perform appropriate optimization, for example, by selecting, as a next experimental point, a candidate experimental point having a relatively large evaluation value and corresponding to an evaluation value having a relatively long minimum distance.

Furthermore, the calculator may calculate a predictive distribution at the candidate experimental point using Gaussian process regression or a Kalman filter, and calculate the evaluation value using the calculated predictive distribution.

Furthermore, the calculator may calculate the evaluation value using a Monte Carlo method.

Due to this, since the Monte Carlo method is an approximation method, the processing load for calculation of the evaluation value can be reduced.

Furthermore, the calculator may calculate the evaluation value using at least one of probability of improvement (PI) and expected improvement (EI), each of which is an evaluation method.

Due to this, for each candidate experimental point, it is possible to calculate, as an optimization improvement amount, the volume within the constraint range in the characteristic space, and appropriately calculate the evaluation value from the improvement amount.

Hereinafter, exemplary embodiments are specifically described with reference to the drawings.

Note that the exemplary embodiments described below illustrate comprehensive or specific examples. Numerical values, shapes, materials, constituent elements, disposition positions and connection modes of the constituent elements, steps, order of the steps, and the like illustrated in the following exemplary embodiments are merely examples, and therefore are not intended to limit the present disclosure. Furthermore, among the components in the following exemplary embodiments, components not recited in the independent claims are described as arbitrary components. Furthermore, each of the drawings is a schematic view, and is not necessarily illustrated precisely. Furthermore, in the drawings, identical reference marks are given to the identical elements.

(First exemplary embodiment)

[Outline]

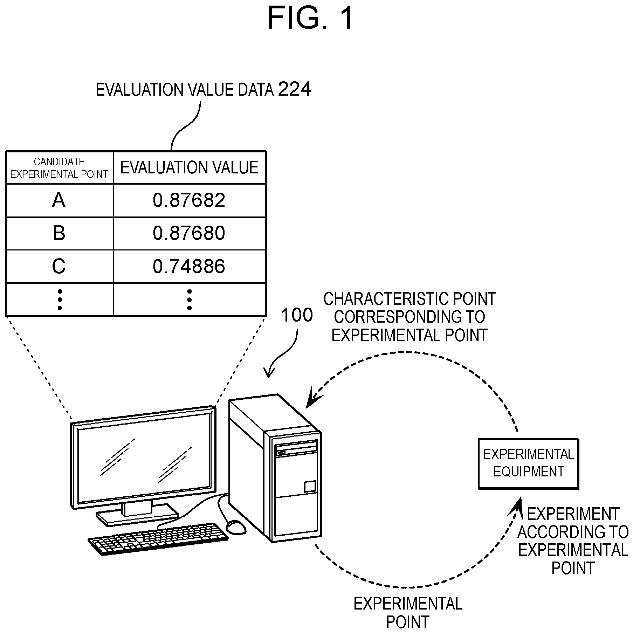

Fig. 1 is a diagram for explaining a schematic operation of an evaluation device according to the present exemplary embodiment.

Evaluation device 100 on the present exemplary embodiment calculates an evaluation value for each of a plurality of candidate experimental points, and displays evaluation value data 224 indicating those evaluation values. The candidate experimental point is a point that is a candidate for the experimental point. The experimental point is a point on the experimental space indicating the experimental conditions (combination of values of each control factor on the experimental space). The evaluation value is a value indicating an evaluation result of an objective characteristic predicted to be obtained by an experiment according to the candidate experimental point. For example, the evaluation value indicates a degree to which the objective characteristic predicted to be obtained by the experiment matches an optimization objective, and the larger the evaluation value is, the larger the degree is.

With reference to the evaluation value of each candidate experimental point indicated by evaluation value data 224, the user selects one of those candidate experimental points as a next experimental point. Using experimental equipment, the user conducts an experiment according to the selected experimental point. Through an experiment, a characteristic point corresponding to the experimental point is obtained. The characteristic point indicates, for example, the value of an objective characteristic, and where there are a plurality of objective characteristics, the characteristic point is indicated as a combination of the values of the plurality of objective characteristics. The user inputs the obtained characteristic point into evaluation device 100 in association with an experimental point. As a result, evaluation device 100 calculates again an evaluation value for each unselected candidate experimental point using the characteristic points obtained by the experiment, and displays again evaluation value data 224 indicating those evaluation values. That is, evaluation value data 224 is updated. By repeating such update of evaluation value data 224, evaluation device 100 searches for an optimal solution of the objective characteristic.

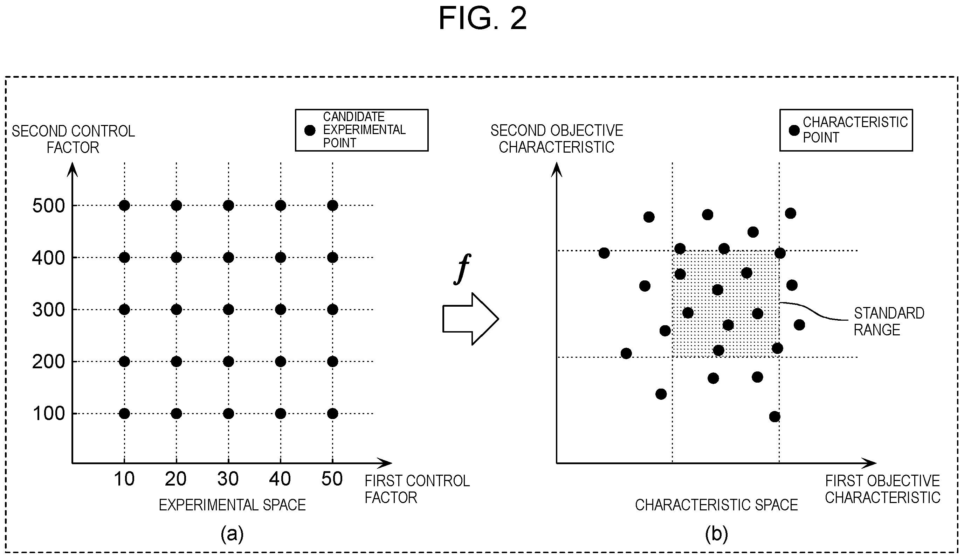

Fig. 2 is a view illustrating an example in which each candidate experimental point and each characteristic point are represented by a graph. Specifically, the graph in part (a) of Fig. 2 illustrates candidate experimental points arranged in the experimental space, and the graph in part (b) of Fig. 2 illustrates characteristic points arranged in the characteristic space.

The candidate experimental points in the experimental space are arranged on the grid points corresponding to the combination of the values of a first control factor and a second control factor as illustrated in part (a) of Fig. 2. The characteristic points corresponding to respect candidate experimental points illustrated in part (a) of Fig. 2 are arranged in the characteristic space as illustrated in part (b) of Fig. 2. Specifically, when the candidate experimental point is selected as the experimental point, and the respective values of a first objective characteristic and a second objective characteristic are obtained through an experiment according to the experimental point, the characteristic point corresponding to the experimental point is arranged at the position expressed by a combination of the value of the first objective characteristic and the value of the second objective characteristic. Here, there is a one-to-one correspondence relationship between the candidate experimental points and the characteristic points, but the correspondence relationship (that is, function f in Fig. 2) is unknown.

Executing an experiment once can be rephrased as selecting one candidate experimental point and acquiring one set of correspondence relationship with the characteristic point corresponding to the selected candidate experimental point.

Furthermore, as illustrated in (b) of Fig. 2, depending on the set standard range, the characteristic space is divided into a region within the standard range and a region outside the standard range. Furthermore, in the present exemplary embodiment, a constraint condition that is a standard range may be given to an objective characteristic having the optimization objective. The constraint condition is a condition given to the objective characteristic, and for example, there is a constraint range designating a range of the value of an objective characteristic as a condition. Examples of the constraint range include a standard range defined by the standard of the objective characteristic, and a management range that can be appropriately set by the user.

Note that, in the present exemplary embodiment, an example in which the number of control factors is two as in the first control factor and the second control factor and the number of objective characteristics is two as in the first objective characteristic and the second objective characteristic will be mainly explained. However, the number of control factors and the number of objective characteristics are not limited to two. The number of control factors may be one or three or more, and the number of objective characteristics may be one or three or more. Furthermore, the number of control factors and the number of objective characteristics may be equal to or different from each other.

[Hardware configuration]

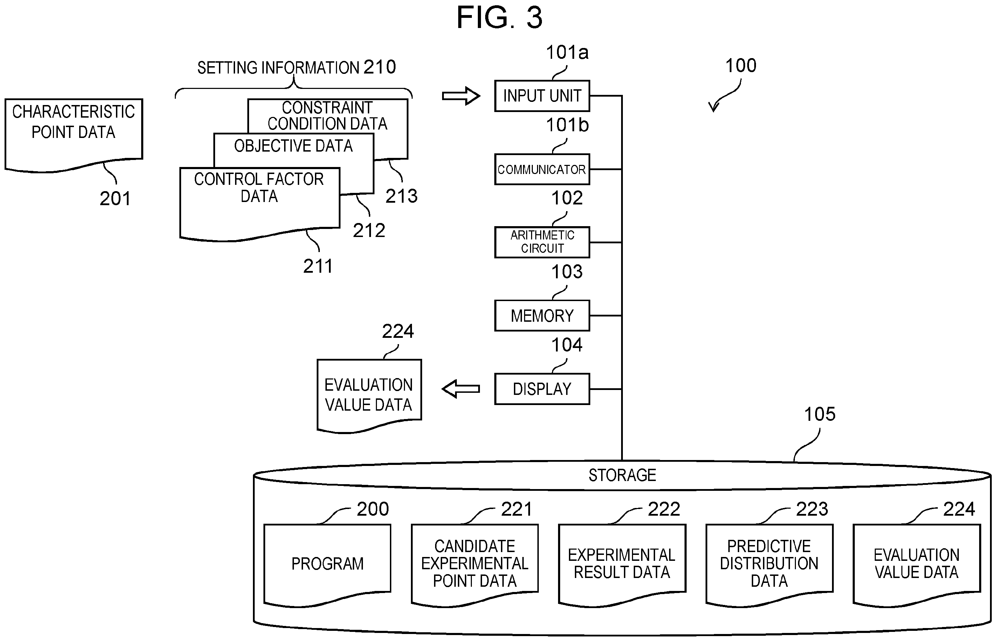

Fig. 3 is a diagram illustrating a configuration of evaluation device 100 according to the present exemplary embodiment.

Evaluation device 100 includes input unit 101a, communicator 101b, arithmetic circuit 102, memory 103, display 104, and storage 105.

Input unit 101a is a human machine interface (HMI) that accepts an input operation by the user. Input unit 101a is, for example, a keyboard, a mouse, a touch sensor, a touchpad, or the like.

For example, input unit 101a accepts setting information 210 as an input from the user. Setting information 210 includes control factor data 211, objective data 212, and constraint condition data 213. Control factor data 211 is, for example, data indicating possible values of the control factor as illustrated in part (a) of Fig. 2. The value of the control factor may be a continuous value or a discrete value. Objective data 212 is, for example, data indicating an optimization objective of an objective characteristic such as minimization or maximization. Constraint condition data 213 is, for example, data indicating a constraint condition such as a constraint range.

Communicator 101b is connected to another device in a wired or wireless manner, and transmits and receives data to and from the other device. For example, communicator 101b receives characteristic point data 201 from another device (for example, an experimental device).

Display 104 displays an image, a character, or the like. Display 104 is, for example, a liquid crystal display, a plasma display, an organic electro-luminescence (EL) display, or the like. Note that display 104 may be a touchscreen integrated with input unit 101a.

Storage 105 stores program (that is, computer program) 200 in which commands to arithmetic circuit 102 are described and various data. Storage 105 is a nonvolatile recording medium, and is, for example, a magnetic storage device such as a hard disk, a semiconductor memory such as a solid state drive (SSD), an optical disk, or the like. Note that program 200 and various data may be provided, for example, from the above-described other device to evaluation device 100 via communicator 101b and stored in storage 105. Storage 105 stores, as various data, candidate experimental point data 221, experimental result data 222, predictive distribution data 223, and evaluation value data 224.

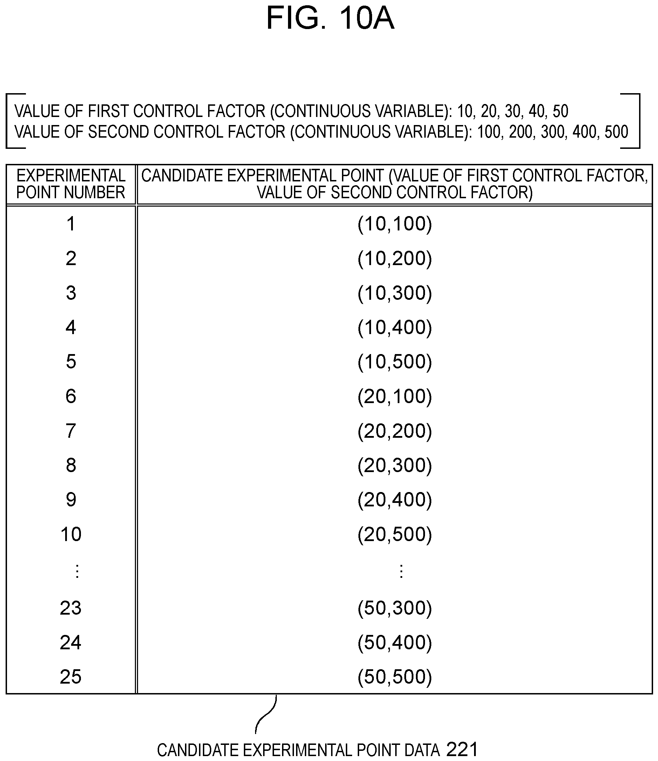

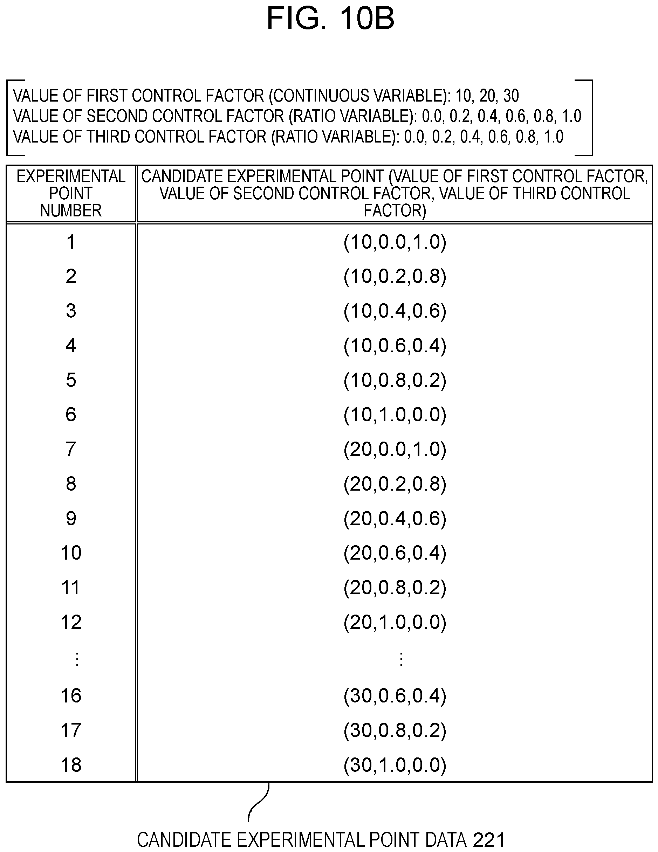

Candidate experimental point data 221 is data indicating each candidate experimental point. In the example of part (a) of Fig. 2, each candidate experimental point is expressed by a combination of values of the first control factor and the second control factor. Candidate experimental point data 221 may be data in a table format in which combinations of values of the first control factor and the second control factor are listed. A specific example of such candidate experimental point data 221 will be described in detail with reference to Figs. 10A and 10B.

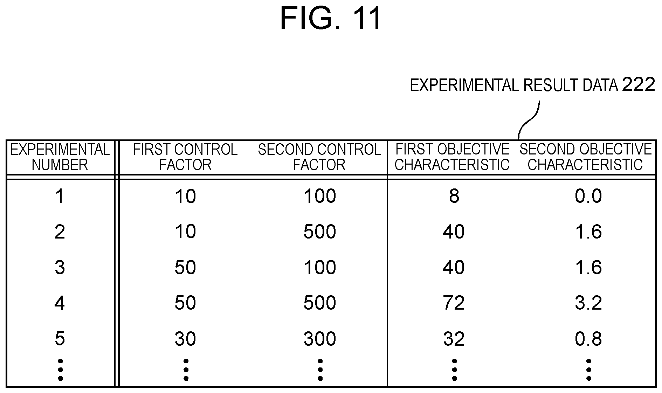

Experimental result data 222 is data indicating one or more experimental points used in an experiment and characteristic points respectively corresponding to the one or more experimental points. For example, experimental result data 222 indicates a combination of an experimental point on the experimental space in part (a) of Fig. 2 and a characteristic point on the characteristic space in part (b) of Fig. 2 obtained by an experiment using the experimental point. The experimental point is expressed by a combination of values of the first control factor and the second control factor, and the characteristic point is expressed by a combination of values of the first objective characteristic and the second objective characteristic. Experimental result data 222 may be data in a table format in which combinations of the experimental points and the characteristic points are listed. A specific example of experimental result data 222 will be described in detail with reference to Fig. 11.

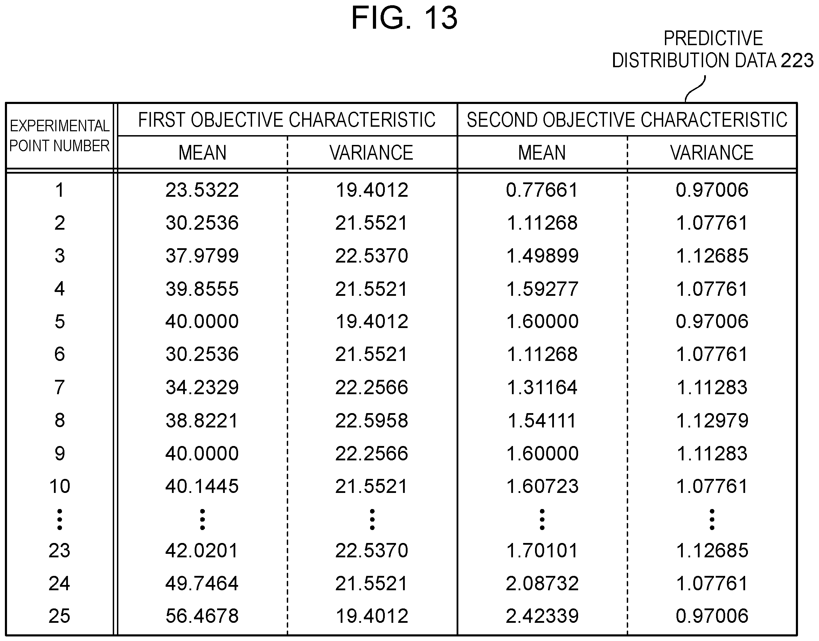

Predictive distribution data 223 is data indicating the predictive distribution of all the candidate experimental points indicated by candidate experimental point data 221. Note that predictive distribution data 223 may include data indicating the predictive distribution of the already selected experimental point in a case where the result is different (has no reproducibility) by the amount of noise when the experiment is performed at the same experimental point. The predictive distribution is a distribution obtained by Gaussian process regression as described above, and is expressed by a mean and a variance, for example. For example, predictive distribution data 223 may be data in a table format indicating the predictive distribution of the first objective characteristic and the predictive distribution of the second objective characteristic in association with each candidate experimental point. A specific example of predictive distribution data 223 will be described in detail with reference to Fig. 13.

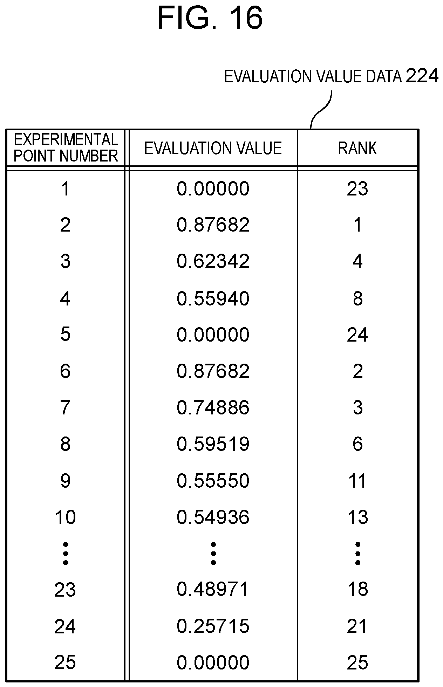

Evaluation value data 224 is data indicating an evaluation value for each of the plurality of candidate experimental points as illustrated in Fig. 1, for example. For example, evaluation value data 224 may be data in a table format indicating the evaluation value in association with each of the plurality of candidate experimental points. Another specific example of evaluation value data 224 will be described in detail with reference to Fig. 16.

Arithmetic circuit 102 is a circuit that reads program 200 from storage 105 to memory 103 and executes program 200 having been expanded. Arithmetic circuit 102 is, for example, a central processing unit (CPU), a graphics processing unit (GPU), or the like.

[Functional configuration]

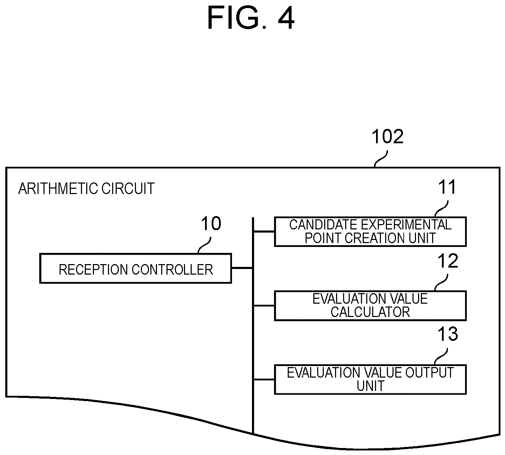

Fig. 4 is a block diagram illustrating a functional configuration of arithmetic circuit 102.

Arithmetic circuit 102 implements a plurality of functions for generating evaluation value data 224 by executing program 200. Specifically, arithmetic circuit 102 includes reception controller (first receiver, second receiver, third receiver, and fourth receiver) 10, candidate experimental point creation unit (candidate experimental point creation unit) 11, evaluation value calculator (calculator) 12, and evaluation value output unit (output unit) 13. Note that, in the present exemplary embodiment, a case where the fourth receiver is not used will be described.

Reception controller 10 receives characteristic point data 201, control factor data 211, objective data 212, and constraint condition data 213 via input unit 101a or communicator 101b. For example, when characteristic point data 201 is input by an input operation to input unit 101a by the user, reception controller 10 writes the characteristic point indicated in characteristic point data 201 into experimental result data 222 of storage 105 in association with the experimental point. Due to this, experimental result data 222 is updated. When experimental result data 222 is updated, reception controller 10 causes evaluation value calculator 12 to execute processing using experimental result data 222 having been updated. That is, reception controller 10 causes evaluation value calculator 12 to execute calculation of the evaluation value. Note that, at this time, evaluation value calculator 12 executes calculation of the evaluation value using candidate experimental point data 221 already stored in storage 105. In this manner, reception controller 10 causes evaluation value calculator 12 to start calculation of the evaluation value with the input of characteristic point data 201 as a trigger.

Furthermore, reception controller 10 may cause evaluation value calculator 12 to start calculation of the evaluation value in response to another trigger. For example, when experimental result data 222 has already been stored in storage 105, reception controller 10 may cause evaluation value calculator 12 to start calculation of the evaluation value with the input of the level of the experimental point by the user as a trigger. Note that the level of the experimental point is, for example, a minimum value, a maximum value, and a discrete width of possible values of the control factor. That is, when the level of the experimental point is input by the user and candidate experimental point data 221 is generated based on the level, reception controller 10 causes evaluation value calculator 12 to start calculation of the evaluation value based on candidate experimental point data 221 and experimental result data 222.

Alternatively, when candidate experimental point data 221 has already been stored in storage 105, reception controller 10 may cause evaluation value calculator 12 to start calculation of the evaluation value with the input of experimental result data 222 by the user as a trigger. When experimental result data 222 is input by the user, reception controller 10 causes evaluation value calculator 12 to start calculation of the evaluation value based on experimental result data 222 and candidate experimental point data 221.

Alternatively, when candidate experimental point data 221 has already been stored in storage 105, reception controller 10 may cause evaluation value calculator 12 to start calculation of the evaluation value with the reception of experimental result data 222 by communicator 101b as a trigger. For example, experimental equipment, an experimental device, a manufacturing device, or the like transmits experimental result data 222 to evaluation device 100, and communicator 101b receives experimental result data 222. When experimental result data 222 is received by communicator 101b, reception controller 10 causes evaluation value calculator 12 to start calculation of the evaluation value based on experimental result data 222 and candidate experimental point data 221.

Thus, when there are candidate experimental point data 221 and experimental result data 222, reception controller 10 causes evaluation value calculator 12 to start calculation of the evaluation value based on them. Note that when experimental result data 222 has already been stored in storage 105, reception controller 10 may cause evaluation value calculator 12 to start calculation of the evaluation value with the input of candidate experimental point data 221 by the user as a trigger. Furthermore, when candidate experimental point data 221 and experimental result data 222 have already been stored in storage 105, reception controller 10 may cause evaluation value calculator 12 to start calculation of the evaluation value with the input of a start instruction by the user as a trigger.

Candidate experimental point creation unit 11 generates candidate experimental point data 221 based on control factor data 211 acquired by reception controller 10. That is, candidate experimental point creation unit 11 creates each of the plurality of candidate experimental points using the value of respective one or more control factors. Then, candidate experimental point creation unit 11 stores, in storage 105, candidate experimental point data 221 having been generated.

Evaluation value calculator 12 reads candidate experimental point data 221 and experimental result data 222 from storage 105, generates predictive distribution data 223 based on these data, and stores predictive distribution data 223 into storage 105. Moreover, evaluation value calculator 12 generates evaluation value data 224 based on predictive distribution data 223, and objective data 212 and constraint condition data 213 acquired by reception controller 10, and stores evaluation value data 224 into storage 105.

Evaluation value output unit 13 reads evaluation value data 224 from storage 105 and outputs evaluation value data 224 to display 104. Alternatively, evaluation value output unit 13 may output evaluation value data 224 to an external device via communicator 101b. That is, evaluation value output unit 13 outputs the evaluation value of each candidate experimental point. Note that evaluation value output unit 13 may directly acquire evaluation value data 224 from evaluation value calculator 12 and output evaluation value data 224 to display 104. Similarly, evaluation value output unit 13 reads predictive distribution data 223 from storage 105 and outputs predictive distribution data 223 to display 104. Note that evaluation value output unit 13 may directly acquire predictive distribution data 223 from evaluation value calculator 12 and output predictive distribution data 223 to display 104.

[Input]

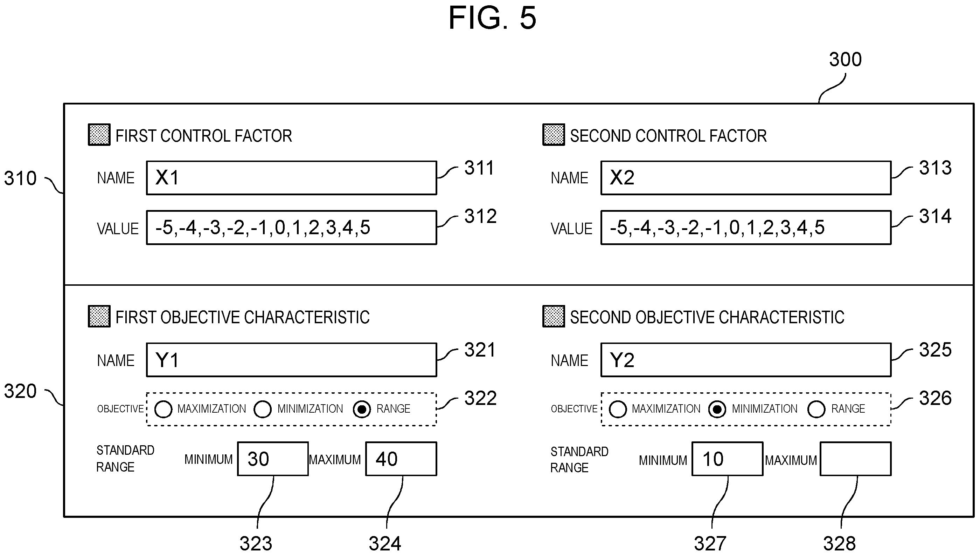

Fig. 5 is a view illustrating an example of an acceptance image displayed on display 104 for accepting input of setting information 210.

Acceptance image 300 includes control factor region 310 and objective characteristic region 320. Control factor region 310 is a region for accepting input of control factor data 211. Objective characteristic region 320 is a region for accepting input of objective data 212 and constraint condition data 213.

Control factor region 310 has input fields 311 to 314. Input field 311 is a field for inputting the name of the first control factor. For example, in input field 311, "X1" is input as the name of the first control factor. Input field 312 is a field for inputting the value of the first control factor. For example, in input field 312, "-5, -4, -3, -2, -1, 0, 1, 2, 3, 4, 5" is input as the value of the first control factor. Similarly, input field 313 is a field for inputting the name of the second control factor. For example, in input field 313, "X2" is input as the name of the second control factor. Input field 314 is a field for inputting the value of the second control factor. For example, in input field 314, "-5, -4, -3, -2, -1, 0, 1, 2, 3, 4, 5" is input as the value of the second control factor.

By such input to input fields 311 to 314, control factor data 211 corresponding to the input result is input to evaluation device 100.

Objective characteristic region 320 has input fields 321 to 328. Input fields 321 and 325 are fields for inputting the names of the first objective characteristic and the name of the second objective characteristic. For example, "Y1" is input as the name of the first objective characteristic into input field 321, and "Y2" is input as the name of the second objective characteristic into input field 325. Input fields 322 and 326 are fields for selecting an optimization objectives of the first objective characteristic and the second objective characteristic. Specifically, each of input fields 322 and 326 has three radio buttons for selecting any one of "maximization", "minimization", and "within the standard range" as an objective. The objective of "maximization" as an objective is maximization of the value of the first objective characteristic or the second objective characteristic, and the objective "minimization" is minimization of the value of the first objective characteristic or the second objective characteristic. The object of "within the standard range" is that the value of the first objective characteristic or the second objective characteristic falls within the standard range. For example, in a case where the radio button indicating "within the standard range" is selected by the input operation to input unit 101a by the user, evaluation device 100 selects "within the standard range" as the optimization objective of the first objective characteristic or the second objective characteristic. Input fields 323 and 324 are fields for inputting the minimum value and the maximum value, respectively, indicating the standard range of the first objective characteristic. For example, in a case where "30" is input as the minimum value into input field 323 and "40" is input as the maximum value into input field 324, evaluation device 100 sets the standard range to 30 to 40. Input fields 327 and 328 are fields for inputting the minimum value and the maximum value, respectively, in the standard range of the second objective characteristic. For example, in a case where "10" is input as the minimum value of the standard range to input field 327 and input field 328 is not input, evaluation device 100 sets the standard range to 10 to $+\infty$. Note that, in a case where nothing has yet input into input field 327, evaluation device 100 sets the minimum value of the standard range to $-\infty$.

By such input to input fields 321 to 328, objective data 212 and constraint condition data 213 corresponding to the input result are input to evaluation device 100. That is, reception controller 10 acquires objective data 212 according to the input into input fields 322 and 326, and acquires constraint condition data 213 according to the input into input fields 323, 324, 327, and 328. In the example of Fig. 5, objective data 212 indicates that the value of the first objective characteristic falls within the standard range as the optimization objective of the first objective characteristic, and indicates the minimization of the value of the second objective characteristic as the optimization objective of the second objective characteristic. Constraint condition data 213 indicates that the standard range of the first objective characteristic is 30 to 40 and the standard range of the second objective characteristic is 10 to $+\infty$.

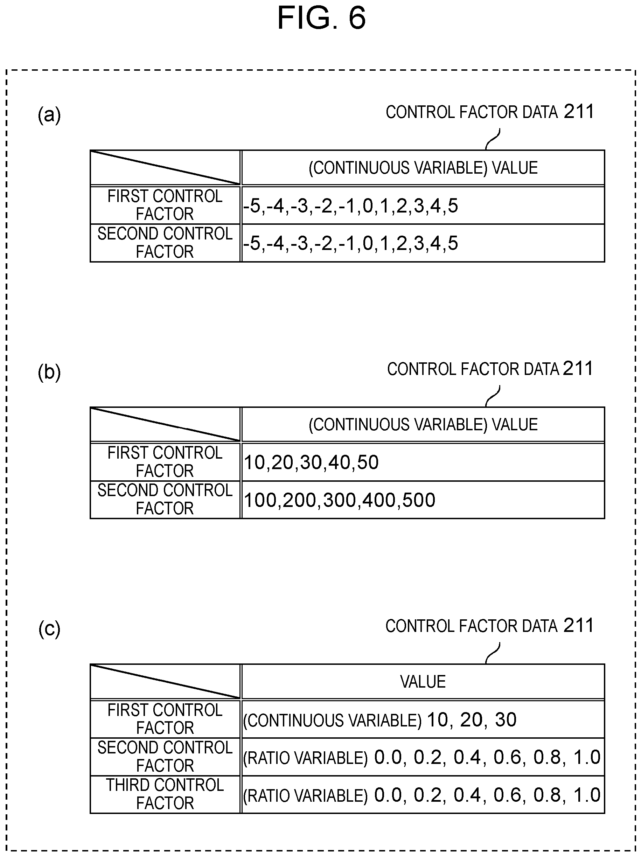

Fig. 6 is a view illustrating an example of control factor data 211.

For example, in the example of control factor data 211 illustrated in part (a) of Fig. 6, the first control factor and the second control factor can take values discrete by 1 from -5 to 5. In the example illustrated in part (a) of Fig. 6, the first control factor and the second control factor are continuous variables. The continuous variable can take a continuous value, but it is difficult to perform arithmetic processing with the continuous value. Therefore, it is preferable to discretize the value of each control factor and set a finite number of candidate experimental points. Therefore, when the control factor is a continuous variable, the user inputs a level (minimum value, maximum value, and discrete width) of the control factor, and evaluation device 100 decides a possible value of the control factor. Note that the discrete width may not be constant, and for example, may be set irregularly so as to be at a level, such as "1, 3, 7, 15". That is, reception controller 10 receives the level of the control factor according to the input operation to input unit 101a by the user, and decides the possible value of the control factor based on the level. Then, reception controller 10 generates control factor data 211 indicating the decided possible value of the control factor, and displays it in input field 312 or 314 included in control factor region 310 of acceptance image 300 in Fig. 5, for example.

Note that the variable includes a discrete variable different from a continuous variable. When the control factor is a discrete variable, the discrete variable does not have a magnitude relationship and a numerical magnitude such as "apple, orange, and banana" or "with catalyst, and without catalyst".

In the example in part (a) of Fig. 6, the first control factor and the second control factor can take the same value, but the present disclosure is not limited to this. For example, as illustrated in part (b) of Fig. 6, possible values of the first control factor and the second control factor may be different from each other. In the example of control factor data 211 illustrated in part (b) of Fig. 6, the first control factor can take a value discrete by 10 from 10 to 50. On the other hand, the second control factor can take a value discrete by 100 from 100 to 500.

In the examples illustrated in parts (a) and (b) of Fig. 6, the value of the control factor is an absolute value, but the present disclosure is not limited to this. The value of the control factor may be a relative value such as a ratio to the sum of the value of another control factor or the values of all control factors. In the example illustrated in part (c) of Fig. 6, control factor data 211 indicates the value of a ratio variable different from the value of a continuous variable. The ratio variable can take a relative value such as the ratio described above. For example, as illustrated in part (c) of Fig. 6, control factor data 211 may indicate the value of the continuous variable of the first control factor, the value of the ratio variable of the second control factor, and the value of the ratio variable of the third control factor. Specifically, the value of the continuous variable of the first control factor can be a value discrete by 10 from 10 to 30, for example. The value of the ratio variable of the second control factor is, for example, "0.0, 0.2, 0.4, 0.6, 0.8, 1.0", and the value of the ratio variable of the third control factor is, for example, "0.0, 0.2, 0.4, 0.6, 0.8, 1.0". The ratio variable indicates a compound ratio of the material of the first control factor or the second control factor in a synthetic material generated by compounding the material of the first control factor and the material of the second control factor, for example.

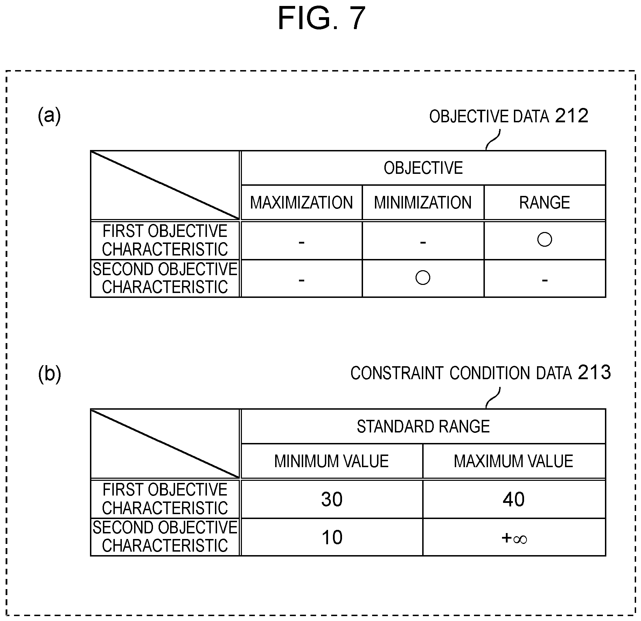

Part (a) of Fig. 7 is a view illustrating an example of objective data 212, and part (b) of Fig. 7 is a view illustrating an example of constraint condition data 213.

Objective data 212 input by objective characteristic region 320 of acceptance image 300 of Fig. 5 indicates the optimization objective of the first objective characteristic and the optimization objective of the second objective characteristic as illustrated in part (a) of Fig. 7, for example. Furthermore, constraint condition data 213 input by objective characteristic region 320 of acceptance image 300 in Fig. 5 indicates the standard range of the first objective characteristic and the standard range of the second objective characteristic as illustrated in part (b) of Fig. 7, for example. Specifically, objective data 212 indicates "within the standard range" as the optimization objective of the first objective characteristic, and indicates "minimization" as the optimization objective of the second objective characteristic. Furthermore, constraint condition data 213 indicates a range from the minimum value "30" to the maximum value "40" as the standard range of the first objective characteristic, and indicates a range from the minimum value "10" to the maximum value "$+\infty$" as the standard range of the second objective characteristic. Therefore, the optimization objective of the second objective characteristic is minimization of the value of the second objective characteristic within the standard range greater than or equal to the minimum value "10".

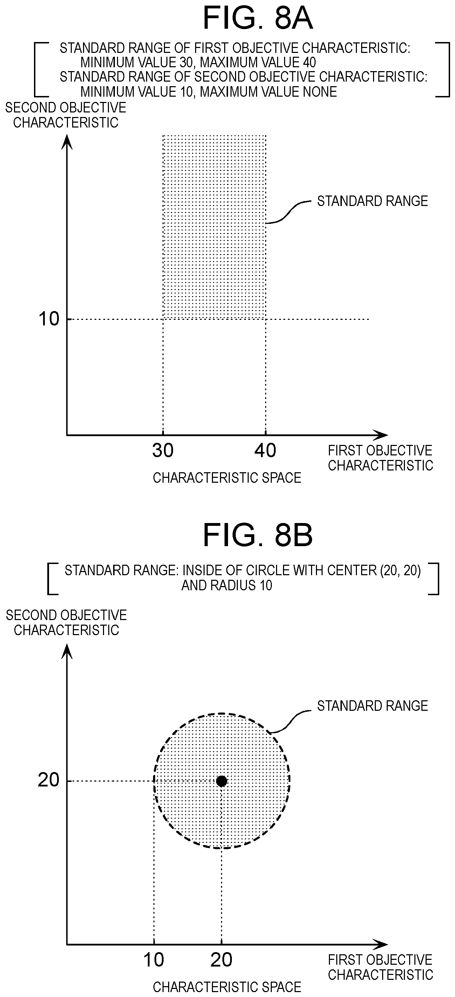

Fig. 8A is a view illustrating an example of the standard range.

The standard range indicated by constraint condition data 213 in part (b) of Fig. 7 is expressed by a rectangular range on the characteristic space as in Fig. 8A, for example. Note that, in the example illustrated in Fig. 8A, the shape of the standard range is rectangular, but it may be another shape. That is, the shape of the standard range may be any shape as long as calculation of the evaluation value described later is implementable.

Fig. 8B is a view illustrating another example of the standard range.

The standard range may have, for example, a circular shape as illustrated in Fig. 8B. In a specific example, the standard range in the characteristic space of the first objective characteristic and the second objective characteristic is expressed by the center (20, 20) and the radius 10 of a circle. Note that the shape of the standard range may be a shape other than the circle, and may be an ellipse, a star, or the like.

Thus, in the present exemplary embodiment, evaluation value calculator 12 may calculate the evaluation value of each candidate experimental point based on the standard range having the shape different from a rectangle. Due to this, in a characteristic space, an evaluation value is calculated based on a standard range such as a circle, an ellipse, or a star. Therefore, not limited to a case where the shape of the standard range is rectangular, the application scene can be further extended.

[Processing operation]

Evaluation device 100 performs processing related to calculation and output of the evaluation value using each data having been input as described above.

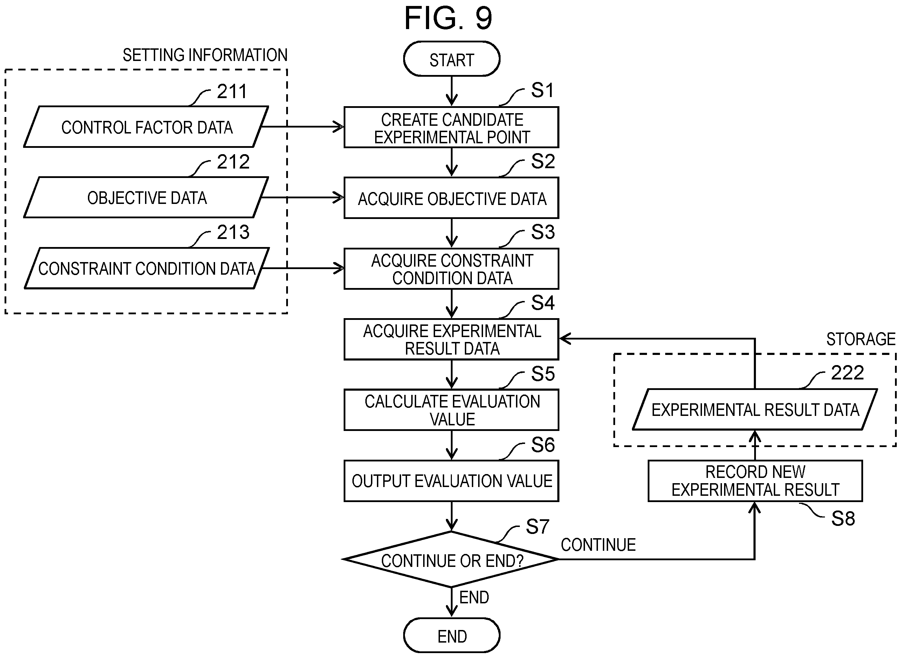

Fig. 9 is a flowchart illustrating a processing operation of evaluation device 100 according to the present exemplary embodiment.

First, candidate experimental point creation unit 11 generates candidate experimental point data 221 using control factor data 211 (step S1).

Next, reception controller 10 acquires objective data 212 (step S2). That is, reception controller 10 executes the second receiving of acquiring the objective data indicating the optimization objective. Reception controller 10 acquires constraint condition data 213 (step S3). That is, reception controller 10 executes the third receiving of acquiring constraint condition data 213 indicating the constraint condition given to at least one objective characteristic. Reception controller 10 reads experimental result data 222 from storage 105 (step S4). That is, reception controller 10 executes the first receiving of acquiring experimental result data 222 indicating an experimented experimental point and a known characteristic point. Note that, in a case where none of the characteristic points is indicated in experimental result data 222, the processing of steps S4 to S6 including step S4 is skipped.

Then, evaluation value calculator 12 calculates the evaluation value of each candidate experimental point based on objective data 212, constraint condition data 213, candidate experimental point data 221, and experimental result data 222 (step S5). That is, evaluation value calculator 12 executes calculating of the evaluation value of an unknown characteristic point based on those data. Specifically, evaluation value calculator 12 calculates the evaluation value of each candidate experimental point not yet used in experiment among the plurality of candidate experimental points indicated in candidate experimental point data 221. Furthermore, in this calculating, evaluation value calculator 12 gives weighting according to the degree of compatibility of the constraint condition to the evaluation value for at least one objective characteristic as in (Formula 4) and (Formula 5) described later. Then, evaluation value calculator 12 generates evaluation value data 224 indicating the calculated evaluation value of each candidate experimental point.

Next, evaluation value output unit 13 outputs, to display 104, the evaluation value calculated in step S5, that is, evaluation value data 224 (step S6). That is, evaluation value output unit 13 executes outputting the evaluation value. Due to this, evaluation value data 224 is displayed on display 104, for example.

Then, reception controller 10 acquires an operation signal from input unit 101a in response to an input operation to input unit 101a by the user. The operation signal indicates end of search for an optimal solution or continuation of the search for the optimal solution. Note that the search for the optimal solution is processing of performing calculation and output of the evaluation value of each candidate experimental point based on a new experimental result. Reception controller 10 determines whether the operation signal indicates end of search for the optimal solution or indicates continuation (step S7).

When determining that the operation signal indicates the end of the search for the optimal solution ("end" in step S7), reception controller 10 ends all the processing. On the other hand, when determining that the operation signal indicates continuation of the search for the optimal solution ("continue" in step S7), reception controller 10 writes, into experimental result data 222 of storage 105, the candidate experimental point selected as the next experimental point. For example, when the user performs an input operation on input unit 101a, reception controller 10 selects the candidate experimental point as the next experimental point from evaluation value data 224. Reception controller 10 writes the thus selected candidate experimental point into experimental result data 222. Then, when the characteristic point corresponding to the next experimental point is obtained by experiment, the user performs an input operation on input unit 101a, thereby inputting, into evaluation device 100, characteristic point data 201 indicating the characteristic point. Reception controller 10 acquires characteristic point data 201 having been input, and writes the characteristic point indicated by characteristic point data 201 into experimental result data 222 of storage 105. At this time, the characteristic point is associated with the most recently selected and written experimental point. Due to this, a new experimental result is recorded in experimental result data 222 (step S8). That is, experimental result data 222 is updated. When experimental result data 222 is updated, evaluation value calculator 12 repeatedly executes the processing from step S4.

In a process through the above flow, the optimal experimental condition (that is, candidate experimental point) to be performed next can be quantitatively analyzed from a past experimental result. As a result, the development cycle can be expected to be shortened regardless of the skill of the analyst such as a user.

Fig. 10A is a view illustrating an example of candidate experimental point data 221.

Candidate experimental point creation unit 11 generates candidate experimental point data 221 illustrated in Fig. 10A based on control factor data 211 illustrated in part (b) of Fig. 6, for example. For example, in a case where each value of all the control factors indicated by control factor data 211 is a value of a continuous variable and there is no constraint regarding the value, candidate experimental point creation unit 11 creates, as a candidate experimental point, each of all combinations of the values of the control factors. In the case of control factor data 211 illustrated in part (b) of Fig. 6, control factor data 211 indicates the value "10, 20, 30, 40, 50" of the continuous variable of the first control factor and the value "100, 200, 300, 400, 500" of the continuous variable of the second control factor. Therefore, candidate experimental point creation unit 11 creates, as a candidate experimental point, each of all combinations such as a combination of the value "10" of the first control factor and the value "100" of the second control factor and a combination of the value "10" of the first control factor and the value "200" of the second control factor. Candidate experimental point creation unit 11 associates an experimental point number with the created candidate experimental point, and generates candidate experimental point data 221 indicating the candidate experimental point with which the experimental point number is associated.

In a specific example, as illustrated in Fig. 10A, candidate experimental point data 221 indicates a candidate experimental point (10, 100) associated with the experimental point number "1", a candidate experimental point (10, 200) associated with the experimental point number "2", a candidate experimental point (10, 300) associated with the experimental point number "3", and the like. The first component of these candidate experimental points indicates the value of the first control factor, and the second component indicates the value of the second control factor.

Here, only a combination of values satisfying a certain constraint among all combinations of values may be created as a candidate experimental point. For example, in material development, in a case where the first compound and the second compound are set as the first control factor and the second control factor, respectively, and the compound ratio of them is set as a value, candidate experimental point creation unit 11 adopts, as the candidate experimental point, only a combination of values whose sum satisfies 1. Candidate experimental point data 221 in Fig. 10B illustrates an example of it.

Fig. 10B is a view illustrating another example of candidate experimental point data 221.

Candidate experimental point creation unit 11 generates candidate experimental point data 221 illustrated in Fig. 10B based on control factor data 211 illustrated in part (c) of Fig. 6, for example. In this case, control factor data 211 indicates "0.0, 0.2, 0.4, 0.6, 0.8, 1.0" as the value of the ratio variable of the second control factor, and indicates "0.0, 0.2, 0.4, 0.6, 0.8, 1.0" as the value of the ratio variable of the third control factor. The combination of the values of these ratio variables corresponds to the compound ratio of the first compound and the second compound described above. Therefore, candidate experimental point creation unit 11 generates, as the candidate experimental point, a combination of the value of the first control factor, the value of the second control factor, and the value of the third control factor so that the sum of the value of the ratio variable of the second control factor and the value of the ratio variable of the third control factor satisfies 1. For example, candidate experimental point creation unit 11 creates, as the candidate experimental point, a combination of values in which the sum of the values of the ratio variables satisfies 1, such as a combination of the value "10" of the first control factor, the value "0.2" of the second control factor, and the value "0.8" of the third control factor. Candidate experimental point creation unit 11 associates an experimental point number with the created candidate experimental point, and generates candidate experimental point data 221 indicating the candidate experimental point with which the experimental point number is associated.

In a specific example, as illustrated in Fig. 10B, candidate experimental point data 221 indicates a candidate experimental point (10, 0.0, 1.0) associated with the experimental point number "1", a candidate experimental point (10, 0.2, 0.8) associated with the experimental point number "2", a candidate experimental point (10, 0.4, 0.6) associated with the experimental point number "3", and the like. Note that the first component of these candidate experimental points indicates the value of the first control factor, the second component indicates the value of the second control factor, and the third component indicates the value of the third control factor.

Thus, in the present exemplary embodiment, in a case where there are a plurality of control factors, when creating each of the plurality of candidate experimental points, candidate experimental point creation unit 11 creates the candidate experimental point by combining values that satisfy a predetermined condition of each of the plurality of control factors. For example, as illustrated in Fig. 10B, the predetermined condition is a condition that the sum of the values of the ratio variables of the plurality of control factors is 1. In a more specific example, the ratio variable is a compound ratio of materials such as compounds corresponding to the control factor. Therefore, for each combination of compound ratios of a plurality of types of compounds, an evaluation value for the combination can be calculated. As a result, it is possible to appropriately search for an optimal solution for one or more objective characteristics of the synthetic material obtained by compounding these compounds.

Fig. 11 is a view illustrating an example of experimental result data 222.

Evaluation value calculator 12 reads experimental result data 222 stored in storage 105 in order to calculate the evaluation value. As illustrated in Fig. 11, experimental result data 222 indicates, for each experimental number, the experimental point used in the experiment identified by the experimental number and the characteristic point that is an experimental result obtained by the experiment. The experimental point is represented by a combination of values of each control factor. For example, the experimental point is expressed by a combination of values that is a combination of the value "10" of the first control factor and the value "100" of the second control factor. The characteristic point is expressed by a combination of values of the objective characteristics obtained in the experiment. Note that the value of the objective characteristic is hereinafter also referred to as objective characteristic value. For example, the characteristic point is expressed by a combination of the value "8" of the first objective characteristic and the value "0.0" of the second objective characteristic.

In a specific example, as illustrated in Fig. 11, experimental result data 222 indicates an experimental point (10, 100) and a characteristic point (8, 0.0) associated with the experimental number "1", an experimental point (10, 500) and a characteristic point (40, 1.6) associated with the experimental number "2", an experimental point (50, 100) and a characteristic point (40, 1.6) associated with the experimental number "3", and the like.

[Calculation processing of evaluation value]

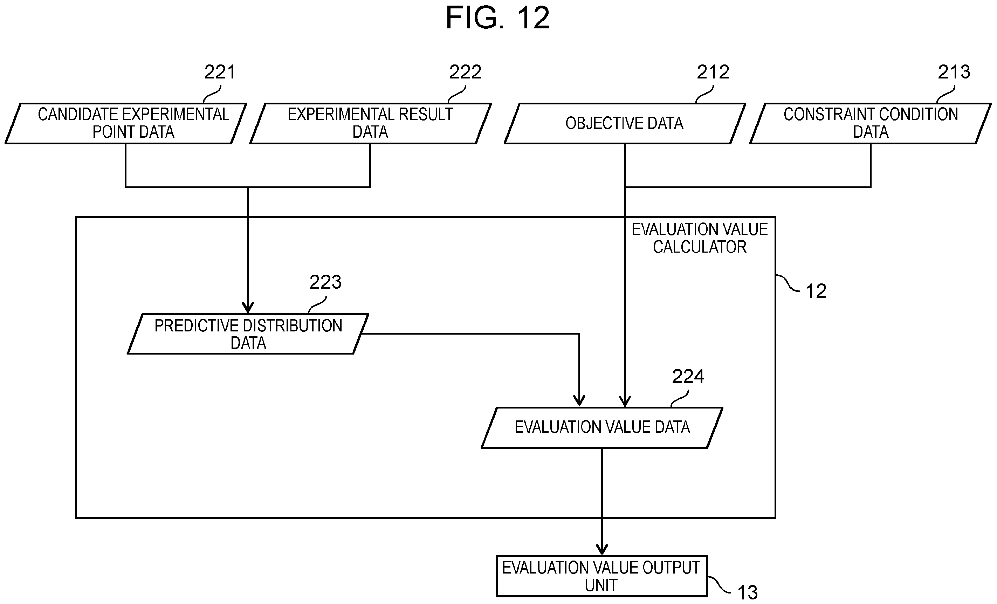

Fig. 12 is a view for explaining the processing by evaluation value calculator 12. Evaluation value calculator 12 generates predictive distribution data 223 based on candidate experimental point data 221 generated by candidate experimental point creation unit 11 and experimental result data 222 present in storage 105. Then, evaluation value calculator 12 generates evaluation value data 224 based on objective data 212 indicating the optimization objective of each objective characteristic, constraint condition data 213 indicating the standard range of each objective characteristic, and predictive distribution data 223.

Here, experimental result data 222 indicates one or more experimental points that are one or more candidate experimental points already used in the experiment among the plurality of candidate experimental points, and the characteristic points corresponding to respective one or more experimental points, the characteristic points being an experimental result of one or more objective characteristics using the experimental points. Therefore, evaluation value calculator 12 according to the present exemplary embodiment calculates, based on Bayesian optimization, the evaluation value of each of the remaining candidate experimental points excluding one or more experimental points among the plurality of candidate experimental points based on (a) the optimization objective and the standard range of each of one or more objective characteristics, (b) one or more experimental points that are one or more candidate experimental points already used for experiments among the plurality of candidate experimental points, and (c) characteristic points corresponding to respective one or more experimental points, the characteristic points indicating experimental results of one or more objective characteristics using the experimental points.

Evaluation value calculator 12 outputs, to evaluation value output unit 13, evaluation value data 224 having been generated. Note that evaluation value calculator 12 may also output predictive distribution data 223 to evaluation value output unit 13. Alternatively, evaluation value calculator 12 may store predictive distribution data 223 into storage 105, and evaluation value output unit 13 may read predictive distribution data 223 from storage 105 in response to an input operation to input unit 101a by the user.

Evaluation value calculator 12 describes the correspondence relationship between the candidate experimental point and the characteristic point in Gaussian process. The Gaussian process is a probability process in which output values corresponding to a plurality of inputs follow a Gaussian distribution (normal distribution). In the present exemplary embodiment, the Gaussian process is a probability process in which a vector $f(x^N)$ of a characteristic point corresponding to a vector $x^N$ of a finite number of candidate experimental points is assumed to follow an N-dimensional normal distribution. A distance between the experimental point x and the experimental point x' is determined by a positive definite kernel $k(x, x')$, and a covariance matrix is represented using this kernel. Note that N is an integer of 1 or more, and is the number of executed experimental results.

Furthermore, normality of the multidimensional normal distribution is preserved even if the multidimensional normal distribution is conditioned with some elements. In the present exemplary embodiment, by using this property, a simultaneous distribution of an executed experimental result having a known correspondence relationship with a candidate experimental point and a next experimental result having an unknown correspondence relationship with the candidate experimental point is considered, and a distribution conditioned with the known correspondence relationship is defined as a predictive distribution. The mean of the predictive distribution is calculated by following (Formula 1) for each dimension, and the variance of the predictive distribution is calculated by following (Formula 2) for each dimension.

[Mathematical formula 1]

$$\widehat{m}\big(x_{(N+1)}\big) = m\big(x_{(N+1)}\big) + (k_{N+1})^T\big(K_{N,N} + \sigma^2 I\big)^{-1}\big(y^N - m(x^N)\big) \;\ldots\; (\text{Formula 1})$$

$$\widehat{v}\big(x_{(N+1)}, x_{(N+1)}\big) = k\big(x_{(N+1)}, x_{(N+1)}\big) - (k_{N+1})^T\big(K_{N,N} + \sigma^2 I\big)^{-1} k_{N+1} + \sigma^2 \;\ldots\; (\text{Formula 2})$$

In (Formula 1) and (Formula 2), $x^N = (x_{(1)}, ..., x_{(N)})^T$ represents a matrix summarizing past experimental points, and $x(N + 1)$ represents a new candidate experimental point. $y^N = (y_{(1)}, ..., y_{(N)})^T$ represents a matrix in which characteristic points corresponding to past experimental points are collected. $k_{N+1}$ represents an N-dimensional vector having $k(x_{(i)}, x_{(N+1)})$ as an i-th component, and $K_{N,N}$ represents an N × N-gram matrix having $k(x_{(i)}, x_{(j)})$ as an (i, j) component. $\sigma 2$ represents an observation error, and is set to an appropriate value according to the degree of influence of an assumed observation error. I represents an N-order identity matrix. Kernel $k(\bullet, \bullet)$ and its hyperparameters are appropriately set by the analyst such as a user, for example. Note that each of i and j is an integer from 1 to N inclusive. Furthermore, m is called an average function, and is set to an appropriate function when the behavior of $y_{(N+1)}$ with respect to $x_{(N+1)}$ is known to some extent. In a case where the behavior is unknown, m may be set to a constant such as 0.

Evaluation value calculator 12 generates predictive distribution data 223 by performing calculation using (Formula 1) and (Formula 2) on the known experimental result indicated in experimental result data 222 read from storage 105 in step S4.

Fig. 13 is a view illustrating an example of predictive distribution data 223. Predictive distribution data 223 indicates the mean and variance of the predictive distribution at each candidate experimental point. This predictive distribution is a distribution calculated by (Formula 1) and (Formula 2) as a conditional distribution by Gaussian process for each objective characteristic. For example, as illustrated in Fig. 13, predictive distribution data 223 indicates, for each experimental point number, the mean and variance of the predictive distribution of the first objective characteristic and the mean and variance of the predictive distribution of the second objective characteristic corresponding to the experimental point number.

In a specific example, as illustrated in Fig. 13, predictive distribution data 223 indicates a mean "23.5322" and a variance "19.4012" of the first objective characteristic and a mean "0.77661" and a variance "0.97006" of the second objective characteristic corresponding to the experimental point number "1". Predictive distribution data 223 indicates a mean "30.2536" and a variance "21.5521" of the first objective characteristic and a mean "1.11268" and a variance "1.07761" of the second objective characteristic corresponding to the experimental point number "2". Note that the experimental point number is associated with the candidate experimental point as illustrated in Fig. 10A or 10B.

Evaluation value calculator 12 calculates an evaluation value based on an evaluation criterion called acquisition function in Bayesian optimization. The above-described predictive distribution is used to calculate this evaluation value. Furthermore, the acquisition function in the present exemplary embodiment is an acquisition function in Bayesian optimization with a constraint condition.

First, before description of the acquisition function in the present exemplary embodiment, the acquisition function of Bayesian optimization without a constraint condition (that is, EHVI of NPL 1) will be described. However, regarding maximization and minimization, minimization will be described as a representative of the both of them because when one of them is inverted, it becomes equivalent to the other. In EHVI, it is considered that the larger the volume of the improvement region (also referred to as an improvement amount), the more improved the characteristic point was obtained from the provisional experimental result. The improvement region is a region surrounded by a pareto boundary determined from the coordinates of a pareto point (that is, a non-inferior solution) among at least one characteristic point already obtained from the performed experiment and a pareto boundary newly determined by the new characteristic point when the new characteristic point is observed. Note that the Pareto point is a characteristic point that is provisionally a Pareto solution at the present time point. For example, in a case where the optimization objective of each of the first objective characteristic and the second objective characteristic is minimization, there is no other characteristic point at which both the values of the first objective characteristic and the second objective characteristic are smaller than the pareto point. The pareto boundary is a boundary line determined by connecting the coordinates of the pareto point along the directions of the first objective characteristic and the second objective characteristic. Furthermore, in the following description, among the entire characteristic space divided by the Pareto boundary, a side having a smaller value for each objective characteristic is referred to as an active region, and a side having a larger value is referred to as an inactive region. The amount of improvement when the new characteristic point enters the inactive region is set to 0.

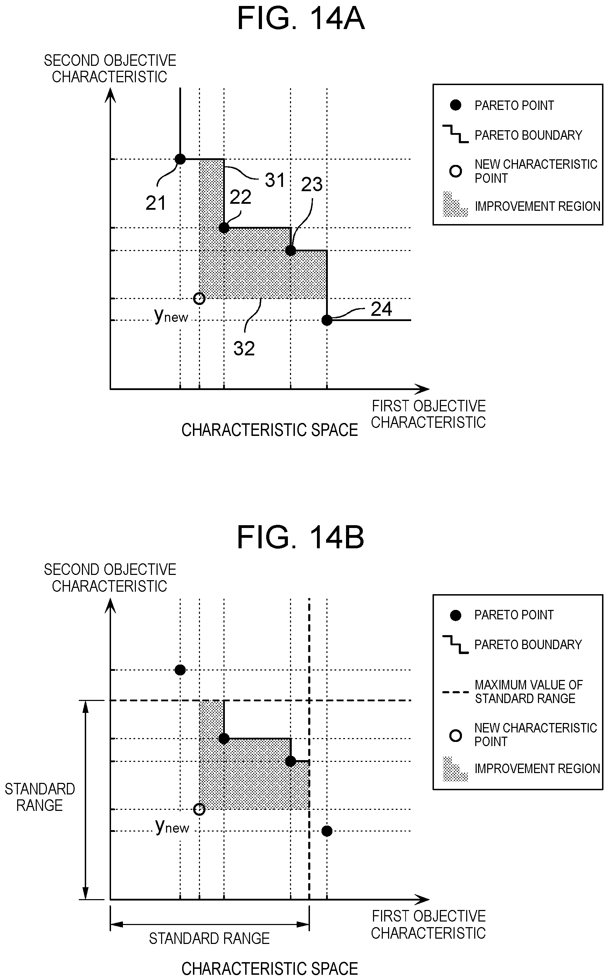

Fig. 14A is a view illustrating an example of improvement region.

For example, as illustrated in Fig. 14A, a region surrounded by Pareto boundary 31 determined from four Pareto points 21 to 24 and Pareto boundary 32 newly determined when one new characteristic point $y_{new}$ is obtained is specified as the improvement region.

Here, the behavior of each objective characteristic value in a case where each candidate experimental point is selected by Gaussian process regression is expressed in the form of normal distribution, and the improvement amount also varies depending on the position of the observed characteristic point. EHVI is defined as an amount in which an expectation value of an improvement amount in a predictive distribution is taken for each candidate experimental point as in following (Formula 3). A candidate experimental point having a larger value obtained by EHVI has a larger expectation value of the improvement amount, and represents an experimental point to be executed next.

[Mathematical formula 2]

$$EHVI(x_{new}) = \int_{\mathbb{R}^D} I(y_{new})\, p(y_{new}|x_{new})\, dy_{new} \quad \cdots \text{ (Formula 3)}$$

In (Formula 3), D represents the number of objective characteristics (that is, the number of dimensions), and

[Mathematical formula 3]

$$\mathbb{R}^D$$

represents a D-dimensional Euclidean space, and $I(y_{new})$ represents an improvement amount. Furthermore, $p(y_{new}|x_{new})$ represents a predictive distribution of the characteristic point $y_{new}$ corresponding to the new experimental point $x_{new}$ when one candidate experimental point is selected from at least one candidate experimental point as the new experimental point $x_{new}$. The predictive distribution of each dimension of the characteristic point $y_{new}$, that is, the mean and the variance are obtained by the above (Formula 1) and (Formula 2).

Next, the acquisition function in the present exemplary embodiment will be described. The acquisition function in the present exemplary embodiment is an acquisition function of Bayesian optimization in a case where there is a constraint condition. It is assumed that among the D objective characteristics, optimization objectives of $D_{minimize}$ objective characteristics of $y_i$ to $y_{Dminimize}$ are minimized, and optimization objectives of remaining $D_{range}$ ($= D - D_{minimize}$) objective characteristics of $y_{Dminimize+1}$ to $y_D$ are within a standard range. At this time, the acquisition function in the present exemplary embodiment, that is, the constrained EHVIC is defined as following (Formula 4).

[Mathematical formula 4]

$$EHVIC(x_{new}) = \int_{R_{minimize}} IC(y_{new}) \, p\big(y_{new,minimize}|x_{new}\big) dy_{new,minimize}$$

$$\times Pr\big\{y_{new,range} \in R_{range}\big\} \ \dots \ (\text{Formula 4})$$

In (Formula 4), $R_{minimize}$ represents a region where all the objective characteristics $y_1$ to $y_{Dminimize}$ whose optimization objective is minimized are within the standard range. $R_{range}$ represents a region in which all the objective characteristics $y_{Dminimize+1}$ to $y_D$ whose optimization objective is within the standard range are within the standard range. Note that each region of $R_{minimize}$ and $R_{range}$ is expressed by a function indicating a shape of a standard range corresponding to the region. As illustrated in Fig. 8B, when the shape of the standard range is a circle, each region of $R_{minimize}$ and $R_{range}$ is expressed by a function indicating the circle. Furthermore, when the shape of the standard range is a star shape, each region of $R_{minimize}$ and $R_{range}$ is expressed by a function indicating the star shape. $y_{new,minimize}$ represents a vector obtained by extracting each dimension of the objective characteristic whose optimization objective is minimization from all dimensions of the characteristic point $y_{new}$. $y_{new,range}$ represents a vector obtained by extracting each dimension of the objective characteristic whose optimization objective is within the standard range from all dimensions of the characteristic point $y_{new}$. $IC(y_{new})$ is an amount of improvement in a case where there is a constraint condition, and represents a volume of a region surrounded by an existing Pareto boundary and a newly determined Pareto boundary. The existing Pareto boundary is a boundary determined from respective coordinates of at least one Pareto point existing within the standard range and the standard range. The newly determined Pareto boundary is a boundary determined from respective coordinates of the Pareto point that is a new characteristic point and the standard range when the new characteristic point is observed. $Pr\{A\}$ represents a probability that event A is established, and is expressed using the mean and variance of (Formula 1) and (Formula 2), for example.

Fig. 14B is a diagram illustrating another example of the improvement region according to the present exemplary embodiment. A major difference between the present exemplary embodiment and NPL 2 is that, regarding the objective characteristic where the optimization objective is minimization, in the present exemplary embodiment, an integration range is limited within a standard range from the entire characteristic space, and the way of measuring the improvement amount changes according to the standard range. When the maximum value and the minimum value in the standard range are not designated, the maximum value is set as $+\infty$, and the minimum value is set as $-\infty$. When the maximum value and the minimum value in the standard range of all the objective characteristics whose optimization objective is the minimization are $+\infty$ and $-\infty$, respectively, and $D_{range} = 0$, the EHVIC that is the acquisition function in this exemplary embodiment results in the EHVI of NPL 1. Furthermore, when the maximum value and the minimum value in the standard range of all the objective characteristics whose optimization objective is minimization are $+\infty$ and $-\infty$, respectively, and Drange $> = 1$, EHVIC that is the acquisition function in the present exemplary embodiment is reduced to EHVIC of NPL 2. Therefore, evaluation device 100 in the present exemplary embodiment can calculate the evaluation value also by the conventional method.

Furthermore, NPL 2 assumes an optimization problem in which one or more objective characteristics whose optimization objective is minimization exist, that is, $D_{minimize} > = 1$, but in the acquisition function in the present exemplary embodiment, formulation can be performed without any inconvenience even in a case of $D_{minimize} = 0$ (that is, $D_{range} = D$). Therefore, the acquisition function in the present exemplary embodiment is naturally extended to the optimization problem in which the optimization objective of all the objective characteristics is within the standard range.

Next, a specific calculation method for EHVIC, which is the acquisition function in the present exemplary embodiment, will be described.

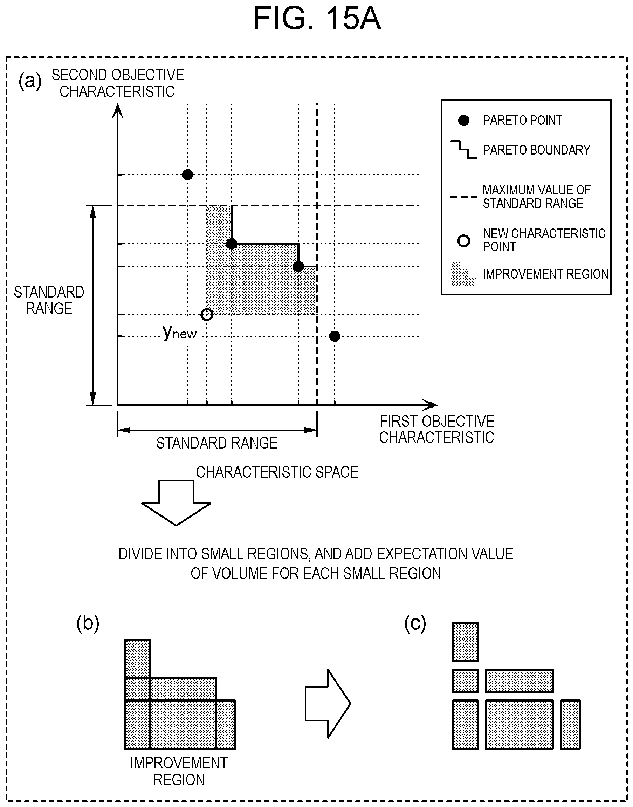

Fig. 15A is a view for explaining a calculation method for a volume of an improvement region. Note that part (a) of Fig. 15A illustrates an improvement region in a characteristic space, part (b) of Fig. 15A illustrates an improvement region that is a target of division, and part (c) of Fig. 15A illustrates a plurality of small regions obtained by dividing the improvement region.

Evaluation value calculator 12 calculates the improvement amount (that is, $IC(y_{new})$), which is the volume of the improvement region, as illustrated in Fig. 15A for the dimension of the objective characteristic of which the optimization objective is minimization. That is, evaluation value calculator 12 divides the improvement region into a plurality of small regions at the coordinates of each of the pareto point and the new characteristic point, calculates the expected value of the volume of each small region, and then calculates the amount of improvement (that is, $IC(y_{new})$) by calculating the sum of the expected values. Furthermore, evaluation value calculator 12 calculates the probability that each objective characteristic value falls within the standard range for the dimension of the objective characteristic whose optimization objective is within the standard range.

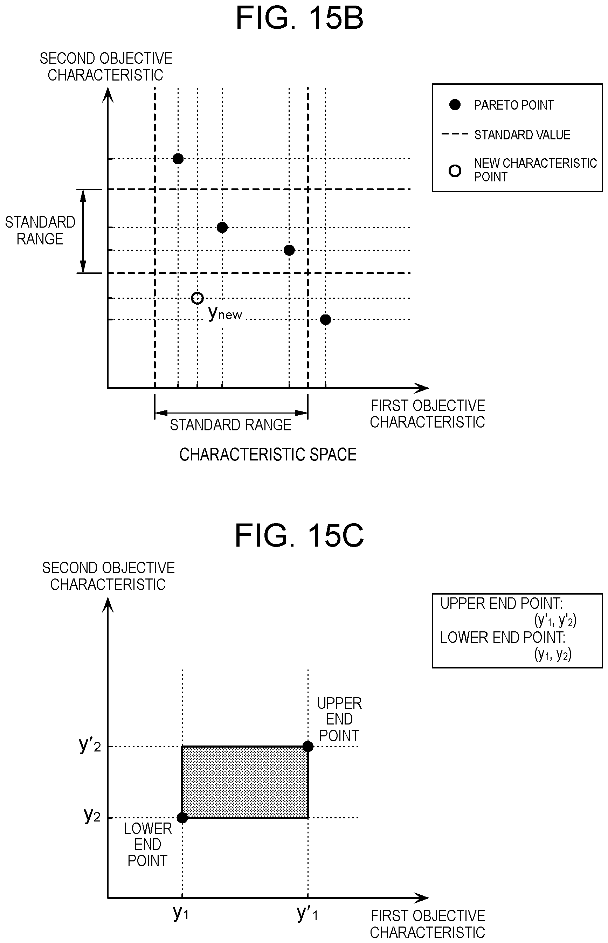

Fig. 15B is a view illustrating an example in which an entire characteristic space is divided into a plurality of small regions.

Evaluation value calculator 12 divides the entire characteristic space into a plurality of small regions as illustrated in Fig. 15B with respect to the dimension of the objective characteristic whose optimization objective is minimization and the dimension of the objective characteristic whose optimization objective is within the standard range, and uniformly calculates the acquisition function by using following (Formula 5). That is, evaluation value calculator 12 divides the entire characteristic space into a plurality of small regions at the coordinates of each of the Pareto point, the new characteristic point, and the standard value, and executes calculation of the volume of each small region by case classification calculation as in (Formula 5) below. Note that the standard values described above are the maximum value and the minimum value of the standard range. Then, by calculating the sum of the volumes of those small regions subjected to expectation value processing, evaluation value calculator 12 uniformly calculates the acquisition function in a case where there is a constraint condition. Note that the volume is also referred to as N-dimensional hypervolume.

[Mathematical formula 5]

$$(\text{Volume of small region}) = \prod_{d=1}^{D} c_d \times l(y_d, y'_d)$$

$$l(y_d, y_d') = \begin{cases} 0 & (i) \\ 1 & (ii) \\ (y'_d - y_d) & (iii) \end{cases} \quad \dots \text{ (Formula 5)}$$

In (Formula 5), $y_d$ represents a d-th component of the lower end point $(y_1,..., y_D)$ of the small region, and $y_d'$ represents a d-th component of the upper end point $(y_1',..., y_D')$ of the small region.

Fig. 15C is a view illustrating an example of a lower end point and an upper end point of the small region.

In the case of D = 2, as illustrated in Fig. 15C, $(y_1, y_2)$ represents the lower end point of the small region, and $(y_1', y_2')$ represents the upper end point of the small region.

Furthermore, (i) in (Formula 5) is applied when the section $[y_d, y_d']$ is out of the standard range with respect to dimension d. (ii) is applied when the interval $[y_d, y_d']$ is within the standard range with respect to the dimension d and the objective of optimizing the objective characteristic of dimension d is within the standard range. (iii) is applied when the interval $[y_d, y_d']$ is within the standard range with respect to dimension d and the objective of optimizing the objective property of dimension d is minimized. $c_d$ is a weighting coefficient, and is appropriately set, for example, when a search priority is given for each dimension d of the objective characteristic. For example, as the priority of dimension d is higher, smaller weighting coefficient $c_d$ is used, and conversely, as the priority of dimension d is lower, larger weighting coefficient $c_d$ is used. The reciprocal of weighting coefficient $c_d$ may be the priority. Unless otherwise specified, that is, in a case where the priority of each dimension d is equal, $c_d$ of each dimension d is set to 1, for example. The above is the description of the acquisition function in the present exemplary embodiment and the specific calculation method for the acquisition function.

The calculation method for the acquisition function described above is a method for obtaining a strict solution, and in particular, in a case where the number of objective characteristics whose optimization objective is minimization is large, there is a possibility that the calculation amount becomes enormous. Therefore, in order to improve calculation efficiency, the acquisition function may be calculated by an approximate method such as a Monte Carlo method. Even in that case, the division of the characteristic space into small regions, the improvement region, and the like are the same as those described above.

[Output]

Evaluation value output unit 13 acquires evaluation value data 224 indicating the evaluation value of each candidate experimental point calculated as described above by evaluation value calculator 12, and causes display 104 to display evaluation value data 224. Note that evaluation value output unit 13 may directly acquire evaluation value data 224 from evaluation value calculator 12, or may acquire evaluation value data 224 by reading evaluation value data 224 stored in storage 105 by evaluation value calculator 12.

Fig. 16 is a view illustrating an example of evaluation value data 224. For example, as illustrated in Fig. 16, evaluation value data 224 indicates the evaluation value and its rank at each candidate experimental point. Specifically, evaluation value data 224 indicates, for each experimental point number, the evaluation value corresponding to the experimental point number and the rank of the evaluation value. As illustrated in Figs. 10A and 10B, each experimental point number is associated with a candidate experimental point. Therefore, it can be said that evaluation value data 224 indicates, for each candidate experimental point, the evaluation value corresponding to the candidate experimental point and the rank of the evaluation value. Furthermore, the larger the evaluation value is, the smaller numerical value the rank shows, and conversely, the small the evaluation value is, the larger numerical value the rank shows.

In a specific example, as illustrated in Fig. 16, evaluation value data 224 indicates an evaluation value "0.00000" and a rank "23" corresponding to the experimental point number "1", an evaluation value "0.87682" and a rank "1" corresponding to the experimental point number "2", an evaluation value "0.62342" and a rank "4" corresponding to the experimental point number "3", and the like.

Displaying of such evaluation value data 224 on display 104 allows the user to judge whether to continue or end the search for the optimal solution. Moreover, when continuing the search for the optimal solution, the user can select a candidate experimental point to be the next experimental point from all the displayed experimental point numbers, that is, all the candidate experimental points, based on each displayed evaluation value and each rank. For example, the user selects the candidate experimental point corresponding to the largest evaluation value (that is, the evaluation value whose rank is 1). At this time, the user may perform an input operation on input unit 101a to sort the evaluation values of evaluation value data 224 in descending order. That is, evaluation value output unit 13 sorts the evaluation values and the ranks in evaluation value data 224 such that the evaluation values are in descending order and the ranks are in ascending order. This makes it easy to find the largest evaluation value.

As described above, reception controller 10 in the present exemplary embodiment acquires experimental result data 222, objective data 212, and constraint condition data 213. Evaluation value calculator 12 calculates the evaluation value of an unknown characteristic point based on experimental result data 222, objective data 212, and constraint condition data 213, and evaluation value output unit 13 outputs the evaluation value. Here, evaluation value calculator 12 gives weighting according to the degree of compatibility of the constraint condition to the evaluation value for at least one objective characteristic. Due to this, when evaluation value calculator 12 calculates the evaluation value of an unknown characteristic point based on experimental result data 222, objective data 212, and constraint condition data 213, weighting according to the degree of compatibility of the constraint condition is given to the evaluation value for at least one objective characteristic. This at least one objective characteristic has an optimization objective. Therefore, it is possible to apply Bayesian optimization to an optimization problem in which a constraint condition is given to an objective characteristic having an objective of the optimization problem. As a result, it is possible to extend the application scene.

Furthermore, in the present exemplary embodiment, the constraint condition is a standard range, and the optimization objective includes the first objective of keeping the objective characteristic within the standard range and the second objective of minimizing or maximizing the objective characteristic. Then, for each of at least one objective characteristic, evaluation value calculator 12 calculates the evaluation value by performing weighting processing different from one another among (i) a case where the interval of the objective characteristic used for calculating the evaluation value is out of the standard range, (ii) a case where the interval is within the standard range and the optimization objective is the first objective, and (iii) a case where the interval is within the standard range and the optimization objective is the second objective. That is, the evaluation value is calculated based on (Formula 4) and (Formula 5) described above. Due to this, regardless of whether the optimization objective of the objective characteristic is the first objective or the second objective, the evaluation value of the candidate experimental point can be appropriately calculated based on Bayesian optimization. That is, the evaluation value of the candidate experimental point can be appropriately calculated based on Bayesian optimization, regardless of whether the optimization objective of the objective characteristic is within the standard range or maximization or minimization. Furthermore, in the case of (iii), since the interval of the objective characteristic is within the standard range and the optimization objective is the second objective, unlike the method of NPL 2, the evaluation value can be quantitatively and appropriately calculated even in a case where the objective characteristic whose optimization objective is maximization or minimization has a standard range as a constraint condition.

As a result, it is possible to apply the present disclosure also to an optimization problem having a constraint condition such as a standard range. That is, it is possible to extend the application scene, and perform quantitative evaluation for improving the search efficiency of the optimal solution.

Furthermore, evaluation value calculator 12 assigns a priority to each of at least one objective characteristic, such as $c_d$ in (Formula 5), and calculates an evaluation value of each candidate experimental point using the assigned priority. Due to this, since one or more objective characteristics are given priority, the objective characteristic given high priority can be brought close to the optimization objective earlier than the objective characteristic given low priority.

Furthermore, evaluation value calculator 12 may calculate the evaluation value of each candidate experimental point using a Monte Carlo method. Due to this, since the Monte Carlo method is an approximation method, the processing load for calculation of the evaluation value can be reduced. Specifically, evaluation value calculator 12 calculates the sum of expectation values of the volumes of the small regions determined by (Formula 5) for each small region for arithmetic operation of (Formula 4). Therefore, for example, in a case where the number of small regions is large, a large calculation amount is required for the arithmetic operation of (Formula 4). Therefore, the processing load can be reduced by using the Monte Carlo method without strictly performing the arithmetic operation of (Formula 4). Note that, as long as an approximation method is used, not only the Monte Carlo method but also another method may be used.

(Modification 1)

In the above-described exemplary embodiment, the standard range is provided as a constraint condition. In the present modification, not only the standard range but also a range other than the standard range is provided. For example, a case where a management range in which the characteristic point is desired to fall as much as possible is set in a standard range in which the characteristic point is desired to fall at the very least is also often required in practice. Note that each of the standard range and the management range is an example of a constraint range that is a constraint condition.

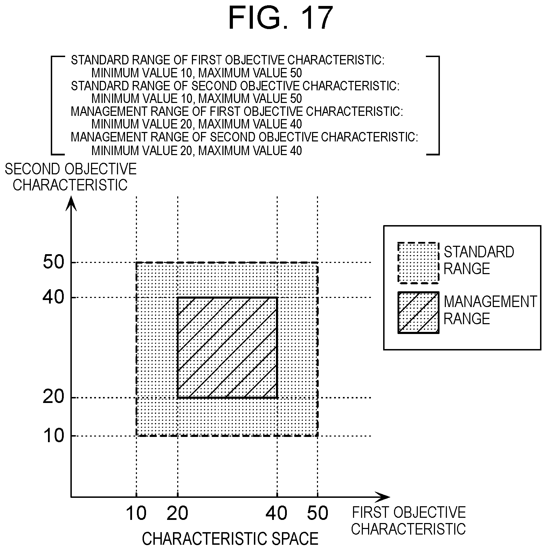

Fig. 17 is a diagram illustrating an example of a standard range and a management range.

For example, the standard range of the first objective characteristic is from the minimum value "10" to the maximum value "50", and the standard range of the second objective characteristic is from the minimum value "10" to the maximum value "50". Furthermore, the management range of the first objective characteristic is a range narrower than the standard range, that is, from the minimum value "20" to the maximum value "40", and the management range of the second objective characteristic is a range narrower than the standard range, that is, from the minimum value "20" to the maximum value "40". As described above, the management range is included in the standard range.

In such a case, evaluation value calculator 12 calculates the evaluation value by further setting an intermediate value between 0 and 1, such as 0.5, for example, for $l(y_d, y_d')$ as in the following (Formula 6). Note that 0.5 is an example, and may be another numerical value.

[Mathematical formula 6]

$$l(y_d, y_d') = \begin{cases} 0 & (i) \\ 0.5 & (ii) \\ 1 & (iii) \\ (y'_d - y_d) & (iv) \end{cases} \ \dots \ [\text{Formula 6}]$$

(i) in (Formula 6) is applied when the interval $[y_d, y_d']$ falls outside each of the management range and the standard range with respect to dimension d. (ii) is applied when the interval $[y_d, y_d']$ is within the standard range and outside the management range with respect to dimension d, and the optimization objective of the objective characteristic of dimension d is within the constraint range. (iii) is applied when the interval $[y_d, y_d']$ is within the management range with respect to dimension d and the objective of optimizing the objective characteristic of dimension d is within the constraint range. (iv) is applied when the interval $[y_d, y_d']$ is within the management range with respect to dimension d and the objective of optimizing the objective characteristic of dimension d is minimized.

As described above, in the present modification, in a case where a plurality of constraint ranges are provided as the constraint condition, the number of case classifications is increased according to those constraint ranges, and weighting processing different from one another is performed in those cases. That is, when there are a plurality of constraint ranges as the constraint condition, evaluation value calculator 12 further divides the case of (ii) in (Formula 5) into a plurality of cases such as in the case of (ii) and the case of (iii) in (Formula 6), and calculates the evaluation value by performing weighting processing different from one another among the plurality of cases. In each of the plurality of cases, intervals are included in constraint ranges different from one another among the plurality of constraint ranges. For example, as in (ii) and (iii) in (Formula 6), in the case of (ii), the interval is included in the standard range out of the management range, and in the case of (iii), the interval is included in the management range. Thus, when the plurality of constraint ranges are present, and by further dividing the case (ii) into the plurality of cases, it is possible to perform weighting on each of the plurality of constraint ranges in a stepwise manner. Therefore, it is possible to appropriately calculate the evaluation value even in a case where the value of the objective characteristic falls within the standard range and is desired to fall within the management range as much as possible. That is, the acquisition function can be appropriately applied to the practical requirements as described above. As a result, it is possible to further extend the application scene for the optimization problem.

Note that the standard range used for the condition for case classification of (i) to (iv) in (Formula 6) above may be replaced with the management range, and conversely, the management range may be replaced with the standard range. Moreover, the present modification uses the standard range and the management range each as an example of the constraint range, but constraint ranges other than these may be used. That is, three or more constraint ranges may be used. Furthermore, the shapes of the plurality of constraint ranges may be the same or different from one another. The shapes may be any shape such as a rectangle, a circle, an ellipse, or a star. Furthermore, the present modification has an inclusion relationship in a plurality of constraint ranges as the standard range includes the management range, but the present disclosure is not limited to such an inclusion relationship, and the respective constraint ranges may be separated from one another, and only a part of the respective constraint ranges may overlap one another.

Furthermore, as in the above-described exemplary embodiment and the present modification, the present disclosure is only required to have at least one constraint range. Therefore, the standard ranges used for the conditions in the cases (i) to (iii) in (Formula 5) described above and the first objective may be replaced with any constraint range of the at least one constraint range. The constraint ranges used for the conditions in each of the cases (i) to (iii) in (Formula 5) described above and the first objective may be the same constraint ranges or may be constraint ranges different from one another.

(Modification 2)

In the above-described exemplary embodiment, evaluation value calculator 12 calculates the evaluation value. Evaluation value calculator 12 in the present modification calculates not only the evaluation value but also a minimum distance. The minimum distance is the smallest distance of the distances between the candidate experimental points and respective experimental points already used in the experiment.

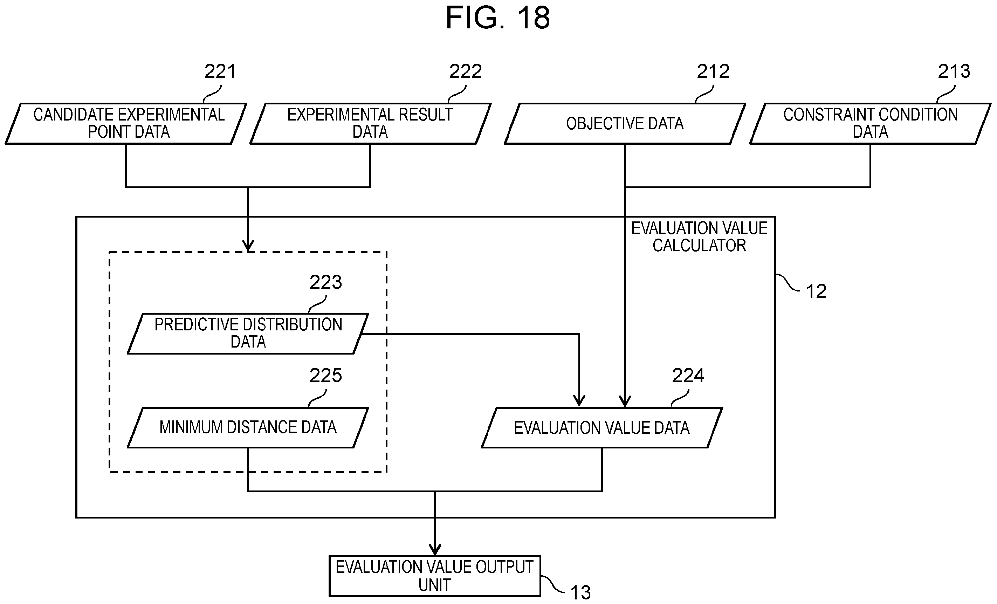

Fig. 18 is a diagram for explaining processing by evaluation value calculator 12 according to the present modification.

Evaluation value calculator 12 calculates the minimum distance of candidate experimental points based on candidate experimental point data 221 and experimental result data 222. This minimum distance is, as described above, the smallest distance of the distances on the experimental space between the candidate experimental point and each of at least one experimental point already used in the experiment. Then, evaluation value calculator 12 generates minimum distance data 225 indicating the minimum distance of candidate experimental points. Evaluation value calculator 12 outputs evaluation value data 224 to evaluation value output unit 13 as in the above-described exemplary embodiment, and also outputs minimum distance data 225 to evaluation value output unit 13. Note that evaluation value calculator 12 may store minimum distance data 225 into storage 105, and evaluation value output unit 13 may read minimum distance data 225 from storage 105 in response to an input operation to input unit 101a by the user.

Using Lp distance or the like as in following (Formula 7), for example, evaluation value calculator 12 may calculate the distance between the candidate experimental point and the experimental point already used in the experiment.

[Mathematical formula 7]

$$Lp(x, x') \begin{cases} = \sqrt[p]{\sum_{i=1}^{D} |x_i - x_i'|^p} & (p > 0) \\ = \text{Number of non-zero elements of } (x - x') & (p = 0) \end{cases}$$

$\dots$ [Formula 7]

In (Formula 7), D represents the number of control factors, one of x and x' represents a candidate experimental point, and the other represents an experimental point already used in the experiment. When p = 2, Lp(x, x') indicates a Euclidean distance (that is, a straight line distance), and when p = 1, Lp(x, x') indicates a Manhattan distance (that is, a road distance). Furthermore, when p = 0, Lp(x, x') indicates the number of different level factors, and when p = ∞, Lp(x, x') indicates the maximum level difference.

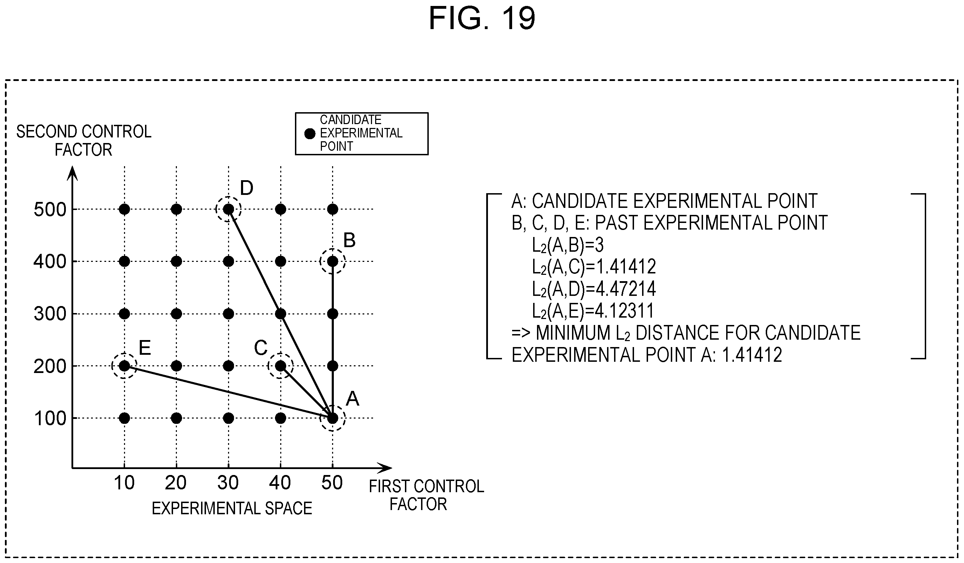

Fig. 19 is a diagram illustrating an example of the minimum distance.

For example, as illustrated in Fig. 19, evaluation value calculator 12 calculates the Lp distance (that is, the $L_2$ distance) in a case where p = 2. In the example illustrated in Fig. 19, evaluation value calculator 12 calculates $L_2$ distances between candidate experimental point A and experimental points B, C, D, and E that are the candidate experimental points already used in the experiment in the experimental space. For example, evaluation value calculator 12 calculates $L_2(A, B)$ = 3 as the $L_2$ distance between candidate experimental point A and experimental point B, and calculates $L_2(A, C)$ = 1.41412 as the $L_2$ distance between candidate experimental point A and experimental point C. Similarly, evaluation value calculator 12 calculates $L_2(A, D)$ = 4.47214 as the $L_2$ distance between candidate experimental point A and experimental point D, and calculates $L_2(A, E)$ = 4.12311 as the $L_2$ distance between candidate experimental point A and experimental point E. Then, evaluation value calculator 12 determines "1.41412", which is the minimum distance among these $L_2$ distances, as the minimum $L_2$ distance. Note that, in the example of Fig. 19, evaluation value calculator 12 sets the minimum value of the difference between the two values in each control factor to the reference distance 1 and calculates the Lp distance so that the distance does not depend on the scale of each control factor.

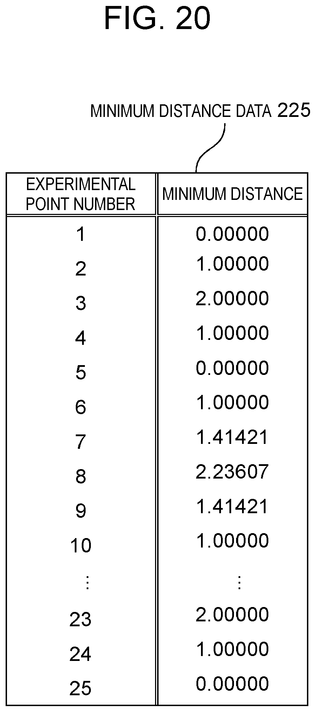

Fig. 20 is a diagram illustrating an example of minimum distance data 225.

Minimum distance data 225 indicates, for each experimental point number, the minimum distance corresponding to the experimental point number. As illustrated in Figs. 10A and 10B, each experimental point number is associated with a candidate experimental point. Therefore, it can be said that minimum distance data 225 indicates, for each candidate experimental point, the minimum distance corresponding to the candidate experimental point.

In a specific example, as illustrated in Fig. 20, minimum distance data 225 indicates a minimum distance "0.00000" corresponding to the experimental point number "1", a minimum distance "1.00000" corresponding to the experimental point number "2", a minimum distance "2.00000" corresponding to the experimental point number "3", and the like. Note that the candidate experimental point of the experimental point number corresponding to the minimum distance "0.00000" is an experimental point already used in the experiment.

By including the content of minimum distance data 225 into evaluation value data 224, evaluation value output unit 13 may change evaluation value data 224 and display changed evaluation value data 224 onto display 104.

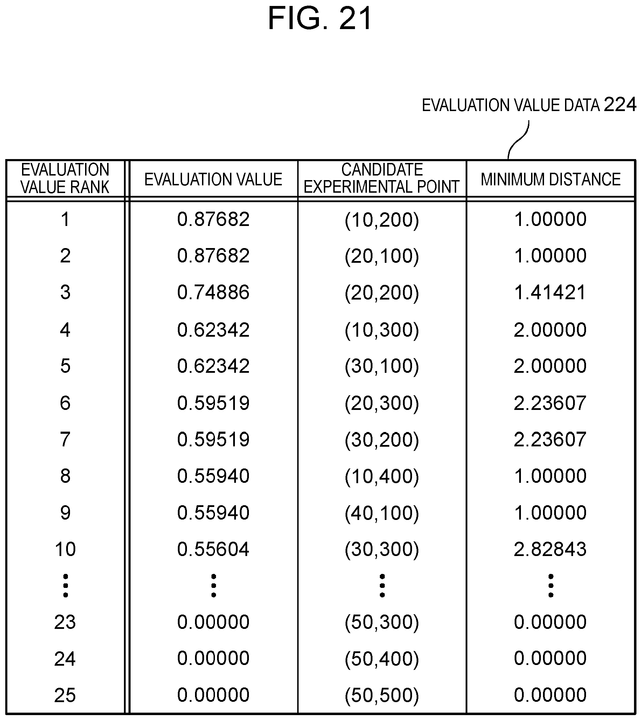

Fig. 21 is a diagram illustrating an example of changed evaluation value data 224 displayed on display 104.

For example, as illustrated in Fig. 21, changed evaluation value data 224 indicates, for each rank of the evaluation values, the evaluation value corresponding to the rank, the candidate experimental point corresponding to the evaluation value, and the minimum distance corresponding to the candidate experimental point. Furthermore, the rank of the evaluation values is arranged in ascending order. That is, the candidate experimental points are arranged in descending order of the evaluation value. For example, evaluation value data 224 indicates an evaluation value "0.87682" corresponding to the rank "1", a candidate experimental point (10, 200) corresponding to the evaluation value, and a minimum distance "1.00000" corresponding to the candidate experimental point. Evaluation value data 224 indicates an evaluation value "0.87682" corresponding to the rank "2", a candidate experimental point (20, 100) corresponding to the evaluation value, and a minimum distance "1.00000" corresponding to the candidate experimental point.

Displaying of such evaluation value data 224 on display 104 allows the user to judge whether to continue or end the search for the optimal solution. When continuing the search for the optimal solution, the user selects the next experimental point from one or more candidate experimental points indicated in evaluation value data 224. Here, in the present modification, the user decides the next experimental point based on the evaluation value and the minimum distance. Specifically, the user decides a candidate experimental point of a basically large evaluation value as the next experimental point. However, at a stage where the number of experimental results is small in particular, evaluation values of candidate experimental points close to past experimental points, such as candidate experimental points near the experimental point with the best score in the past experimental results, tend to appear in the upper rank. Even if the experiment is executed at such a candidate experimental point, there is a high possibility that a characteristic point with a large improvement amount cannot be obtained. Furthermore, in a case where it is desired to select a plurality of experimental points to perform batch processing, when experimental points with a distance far from each other are selected, accuracy of a predictive distribution and an evaluation value to be calculated next is easily improved. Therefore, the user preferably refers to the minimum distance in addition to the evaluation value as a criterion for decision of the next experimental point.

Furthermore, the user may refer to the evaluation value and the minimum distance as a criterion for judgement whether to continue or end the search for the optimal solution. For example, in a case where all the candidate experimental points whose evaluation values are non-zero exist near the executed experimental point, and all the evaluation values of the candidate experimental points far from the executed experimental point are almost 0, no improvement is expected even if the experiment is continued further. Therefore, in such a case, the user preferably ends the search.

As described above, evaluation value calculator 12 in the present modification calculates, for each candidate experimental point, the minimum distance of the distances between the candidate experimental point and respective one or more experimental points Evaluation value output unit 13 outputs the minimum distance corresponding to each candidate experimental point. This allows the user of evaluation device 100 to select a candidate experimental point to be the next experimental point based on not only the evaluation value but also the minimum distance. For example, at the initial stage of optimal solution search, the user can improve the accuracy of the evaluation value and perform appropriate optimization by selecting, as the next experimental point, a candidate experimental point corresponding to an evaluation value having a relatively large evaluation value and a relatively long minimum distance.

(Modification 3)

While evaluation device 100 according to one aspect of the present disclosure has been described above based on the above-described exemplary embodiment and each modification, the present disclosure is not limited to the exemplary embodiment and each modification. The present disclosure may include various modifications conceivable by those skilled in the art may be applied to the above-described exemplary embodiment or each modification described above without departing from the scope of the present disclosure.

For example, in the above-described exemplary embodiment and each modification, evaluation value calculator 12 calculates the evaluation value using EHVI based on expected improvement (EI), but may calculate the evaluation value using probability of improvement (PI). That is, in the above-described exemplary embodiment, the evaluation value is calculated by application of EHVI as in (Formula 4) and (Formula 5). However, the evaluation value may be calculated by application of PI. When PI is used, evaluation value calculator 12 calculates the evaluation value using following (Formula 8) instead of (Formula 5).

[Mathematical formula 8]

$$(\text{Volume of small region}) = \prod_{d=1}^{D} c_d \times l(y_d, y'_d)$$

$$l(y_d, y_d') = \begin{cases} 0 & (i) \\ 1 & (ii) \\ 1 & (iii) \end{cases} \quad \ldots \text{[Formula 8]}$$

Similarly to EHVI, evaluation value calculator 12 calculates the evaluation value by performing expectation value processing on the volume calculated by (Formula 8). Note that the case classification conditions of (i) to (iii) in (Formula 8) are the same as those in (Formula 5). Furthermore, calculation of the evaluation value using PI and calculation of the evaluation value using EI may be combined. For example, PI may be used for the first objective characteristic, and EI may be used for the second objective characteristic.

In this manner, evaluation value calculator 12 of the present disclosure calculates the evaluation value of each candidate experimental point using at least one of PI and EI, which are evaluation methods. Due to this, for each candidate experimental point, it is possible to calculate, as an optimization improvement amount, the volume within the constraint range in the characteristic space, and appropriately calculate the evaluation value from the improvement amount.

Furthermore, in the above-described exemplary embodiment, the case where the number of dimensions of the objective characteristic is two as in the first objective characteristic and the second objective characteristic has been described, but the number of dimensions may be one or three or more. Similarly, in the above-described exemplary embodiment, the case where the total number of control factors is two, such as the first control factor and the second control factor, has been mainly described, but the total number may be one or three or more.

(Second exemplary embodiment)

According to the first exemplary embodiment, quantitative evaluation with a consistent procedure is possible even in a multi-objective optimization problem with a constraint condition. More specifically, the volume within the constraint range in the characteristic space is calculated as the optimization improvement amount for each candidate experimental point using the acquisition function of the Bayesian optimization in a case where there is a constraint condition, and the evaluation value can be appropriately calculated from the improvement amount.

However, in the first exemplary embodiment, when calculating the acquisition function of the Bayesian optimization in a case where there is a constraint condition, for example, it is necessary to divide the improvement region into a plurality of small regions as illustrated in Fig. 15A, calculate an expected value of the volume of each small region, and then take the sum of the expected values. More generally, when the number of objective characteristics, that is, the number of dimensions is D, the improvement region can be represented by a sum region of a plurality of D-dimensional super-cuboids. For this reason, when the acquisition function of the Bayesian optimization in a case where there is a constraint condition is calculated, it is necessary to calculate by dividing the improvement region into a plurality of D-dimensional super-cuboids, calculating an expected value of the volume of each super-cuboid, and then taking the sum of the expected values. Therefore, the calculation amount of the acquisition function greatly depends on the number of super-cuboids constituting the improvement region. The number of super-cuboids is calculated by using D, which is the number of objective characteristics (number of dimensions), and $N_{pareto}$, which is the number of pareto points among the observed characteristic points.

[Mathematical formula 9]

$$O\left(N^{D^2}{}_{pareto}\right)$$

It increases exponentially on the order of magnitude. Note that, in practical use, three-dimensional (D = 3) calculation is limited.

Therefore, in the second exemplary embodiment, a method for calculating the volume of the improvement region improved for reducing the calculation amount while maintaining the search efficiency and performing quantitative evaluation at high speed will be described.

Hereinafter, differences from the first exemplary embodiment will be mainly described.

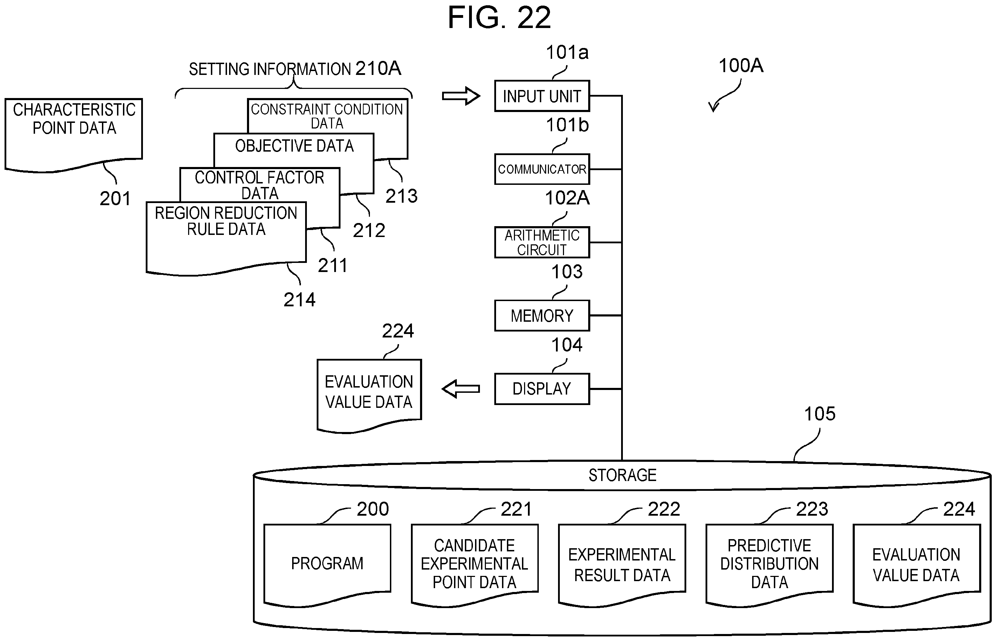

[Hardware configuration] Fig. 22 is a diagram illustrating a configuration of evaluation device 100 according to the present exemplary embodiment. Elements similar to those in Fig. 3 are denoted by the same reference marks, and a detailed description thereof will be omitted.

Evaluation device 100A illustrated in Fig. 22 is different from evaluation device 100 illustrated in Fig. 3 according to the first exemplary embodiment in that region reduction rule data 214 is added to setting information 210A and a partial function of arithmetic circuit 102A.

Region reduction rule data 214 indicates a rule for calculating the pareto boundary, and changes the method of calculating the amount of improvement. More specifically, region reduction rule data 214 indicates a method of dividing the characteristic space represented by at least two objective characteristics, and indicates a dimension for reducing the active region for each region of the characteristic space divided by the division method. Details will be described later.

[Functional configuration]

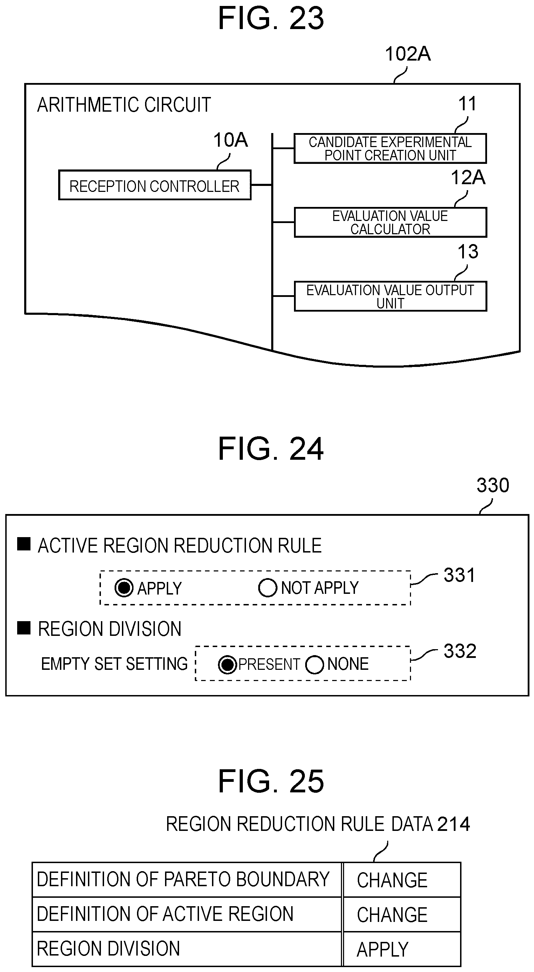

Fig. 23 is a block diagram illustrating a functional configuration of arithmetic circuit 102A according to the present exemplary embodiment. Elements similar to those in Fig. 4 are denoted by the same reference marks, and a detailed description thereof will be omitted.

Arithmetic circuit 102A illustrated in Fig. 23 is different from arithmetic circuit 102 illustrated in Fig. 4 according to the first exemplary embodiment in a part of functions of reception controller 10A and evaluation value calculator 12A.

Reception controller 10A corresponds to the first receiver, the second receiver, the third receiver, and the fourth receiver, and receives characteristic point data 201, control factor data 211, objective data 212, constraint condition data 213, and region reduction rule data 214 via input unit 101a or communicator 101b. The other functions are as described in the first exemplary embodiment, and thus the description thereof is omitted.

Evaluation value calculator 12A reads candidate experimental point data 221 and experimental result data 222 from storage 105, generates predictive distribution data 223 based on these data, and stores predictive distribution data 223 in storage 105. Moreover, evaluation value calculator 12A generates evaluation value data 224 on the basis of predictive distribution data 223, objective data 212, constraint condition data 213, and region reduction rule data 214 acquired by reception controller 10A, and stores evaluation value data 224 in storage 105.

[Input]

Fig. 24 is a diagram illustrating an example of the region reduction rule region of the acceptance image displayed on display 104 to accept the input of region reduction rule data 214 according to the present exemplary embodiment.

Acceptance image 300 includes region reduction rule region 330 illustrated in Fig. 24 in addition to control factor region 310 and objective characteristic region 320 described in Fig. 5. Region reduction rule region 330 is a region for receiving an input of region reduction rule data 214.

Region reduction rule region 330 has input fields 331 and 332. Input field 331 is a field for inputting whether to apply the region reduction rule. Input field 332 is a field for inputting whether or not an empty set is included in the region division when the region reduction rule is applied. Specifically, input field 331 has two radio buttons for selecting "apply" or "not apply" the region reduction rule. Furthermore, input field 332 includes two radio buttons for selecting "present" or "none" indicating whether to perform empty set setting in region division.

For example, in a case where the radio button indicating "apply" is selected by the input operation to input unit 101a by the user, evaluation device 100A applies the region reduction rule in the evaluation value calculation processing. Moreover, in a case where the radio button indicating "apply" is selected by the input operation to input unit 101a by the user, evaluation device 100A divides the region including the empty set and then applies the region reduction rule to calculate the volume of the improvement region in the calculation processing of the evaluation value.

Fig. 25 is a diagram illustrating an example of region reduction rule data 214 according to the present exemplary embodiment. Region reduction rule data 214 input by region reduction rule region 330 of acceptance image 300 in Fig. 24 indicates that the definition of the pareto boundary is changed, the definition of the active region is changed, and the region division is applied as illustrated in Fig. 25, for example. As a result, the method of calculating the amount of improvement is changed. Note that a specific example of the changed definition and the applied region division will be described later, and thus the description thereof will be omitted here.

[Processing operation]

Evaluation device 100 performs processing related to calculation and output of the evaluation value using each data input as described above.

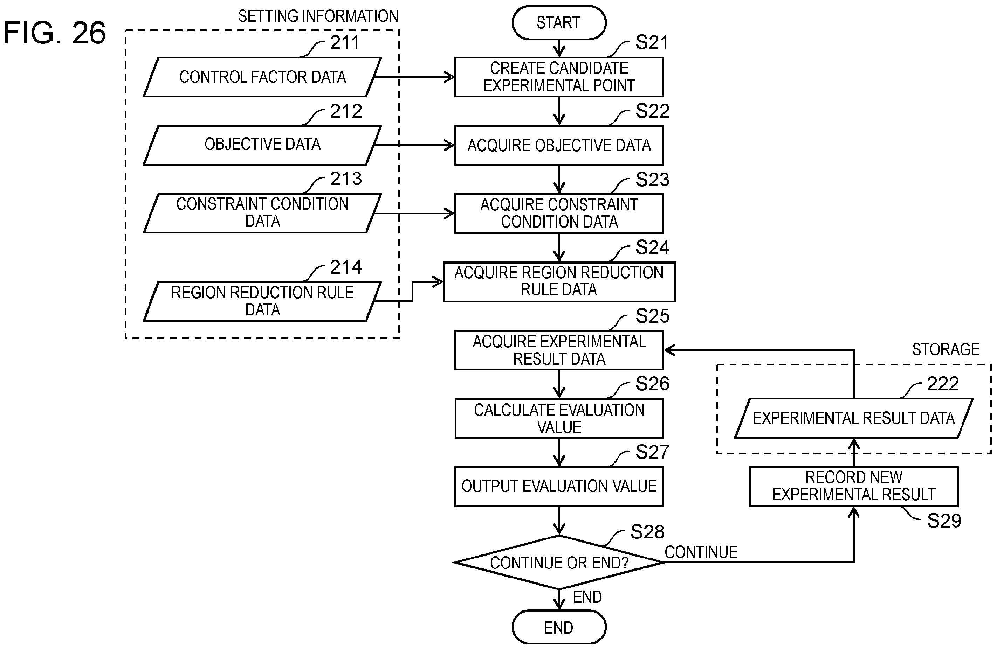

Fig. 26 is a flowchart illustrating processing operation of evaluation device 100 according to the present exemplary embodiment. Steps S21 to S23, step S25, and steps S27 to S29 illustrated in Fig. 26 are the same processes as steps S1 to S4 and steps S6 to S8 described in Fig. 9, and thus the description thereof is omitted here.

In step S24, reception controller 10A acquires region reduction rule data 214 indicating the rule for calculating the pareto boundary. More specifically, reception controller 10A executes a fourth reception step of acquiring region reduction rule data 214 indicating the method of dividing the characteristic space expressed by at least two objective characteristics and indicating the dimension for reducing the active region for each region of the characteristic space divided by the division method.

Then, in step S26, evaluation value calculator 12A calculates the evaluation value of each candidate experimental point on the basis of objective data 212, constraint condition data 213, candidate experimental point data 221, experimental result data 222, and region reduction rule data 214. That is, evaluation value calculator 12A executes the calculation step of calculating the evaluation value of the unknown characteristic point on the basis of the above data. Specifically, evaluation value calculator 12A calculates evaluation value of each candidate experimental point indicated in candidate experimental point data 221 by using a method of calculating the amount of improvement changed based on the region reduction rule. Furthermore, in this calculation step, evaluation value calculator 12A may give a weighting according to the degree of conformity of the constraint condition to the evaluation value for at least one objective characteristic. Then, evaluation value calculator 12A generates evaluation value data 224 indicating the calculated evaluation value of each candidate experimental point.

[Calculation processing of evaluation value]

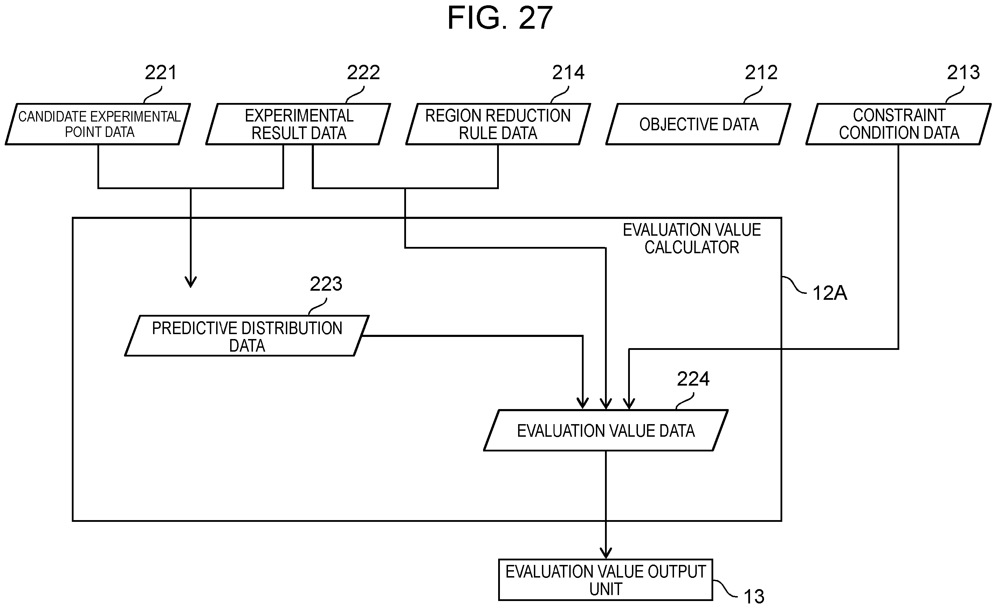

Fig. 27 is a diagram for explaining processing by evaluation value calculator 12A. Evaluation value calculator 12A generates predictive distribution data 223 based on candidate experimental point data 221 generated by candidate experimental point creation unit 11 and experimental result data 222 in storage 105. Then, evaluation value calculator 12A generates evaluation value data 224 on the basis of objective data 212 indicating the optimization objective of each objective characteristic, constraint condition data 213 indicating a standard range of each objective characteristic, region reduction rule data 214 indicating the rule for calculating the pareto boundary, and predictive distribution data 223.

Evaluation value calculator 12A according to the present exemplary embodiment calculates the evaluation value of each candidate experimental point based on the Bayesian optimization as in the first exemplary embodiment. That is, evaluation value calculator 12A also generates predictive distribution data 223 by performing calculation using the above (Formula 1) and (Formula 2) on the known experimental result indicated in experimental result data 222 read from storage 105 in the above step S25.

Furthermore, evaluation value calculator 12A calculates an evaluation value on the basis of an evaluation criterion called an acquisition function in Bayesian optimization. The above-described predictive distribution is used to calculate this evaluation value. Furthermore, the acquisition function in the present exemplary embodiment is an acquisition function in Bayesian optimization with a constraint condition, and is expressed by the above (Formula 4). Note that, in a case where there is no constraint condition, evaluation value calculator 12A may use the acquisition function represented by the above (Formula 3).

Also in the present exemplary embodiment, the IC ($y_{new}$) indicated in (Formula 4) is an improvement amount in a case where there is a constraint condition, and represents the volume of the region surrounded by the existing Pareto boundary and the newly determined Pareto boundary. However, in the present exemplary embodiment, the definition of the pareto boundary and the definition of the active region are changed by the region reduction rule indicating the rule for calculating the pareto boundary. As a result, the method of calculating the improvement region is changed.

Hereinafter, before the method for calculating an improvement region in the present exemplary embodiment, a region reduction rule will be described that indicates a rule for calculating a pareto boundary and changes the method for calculating an improvement amount.

The region reduction rule indicates a method of dividing the characteristic space into a predetermined number of regions and a method of calculating a pareto boundary. In the following description, it is assumed that a standard range is not set in order to simplify the description.

When the region reduction rule is applied, the entire characteristic space is divided (region division) into D + 1 regions for the number D of objective characteristics, that is, D-dimensional objective characteristics. The region division method may be any method. The regions of the characteristic space divided into the regions are sequentially named as region 1, region 2, •••, region D, and region D + 1.

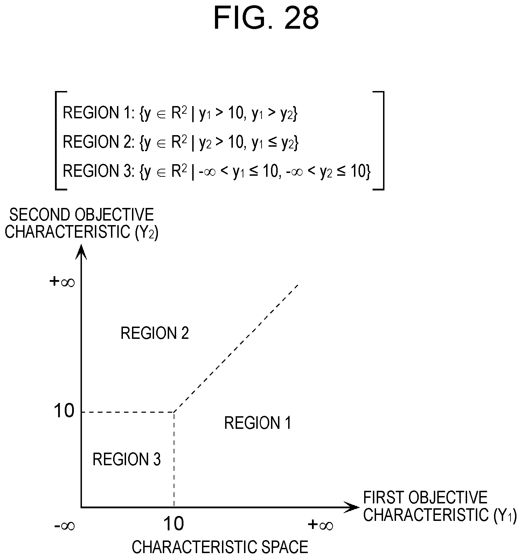

Fig. 28 is a diagram illustrating an example of a characteristic space divided into regions in a case where the region reduction rule according to the present exemplary embodiment is applied. In the example illustrated in Fig. 28, since the number of objective characteristics is two (D = 2), the characteristic space is divided into three regions, that is, region 1, region 2, and region 3.

In the example illustrated in Fig. 28, a third region including a range of the first objective characteristic of "-∞" to "10" and a range of the second objective characteristic of "-∞" to "10" in the characteristic space is illustrated. Furthermore, a first region that is a region below a straight line defined by an inclination of 45 degrees in a region excluding the third region in the characteristic space and a second region that is a region above a straight line defined by an inclination of 45 degrees in a region excluding the third region are illustrated.

Note that, in a case where the region reduction rule is applied, an empty set may be set in the D + 1 regions of the segmented characteristic space, but since all the D + 1 regions are nonsense, at least one of the D + 1 regions is set as a set that is not empty.

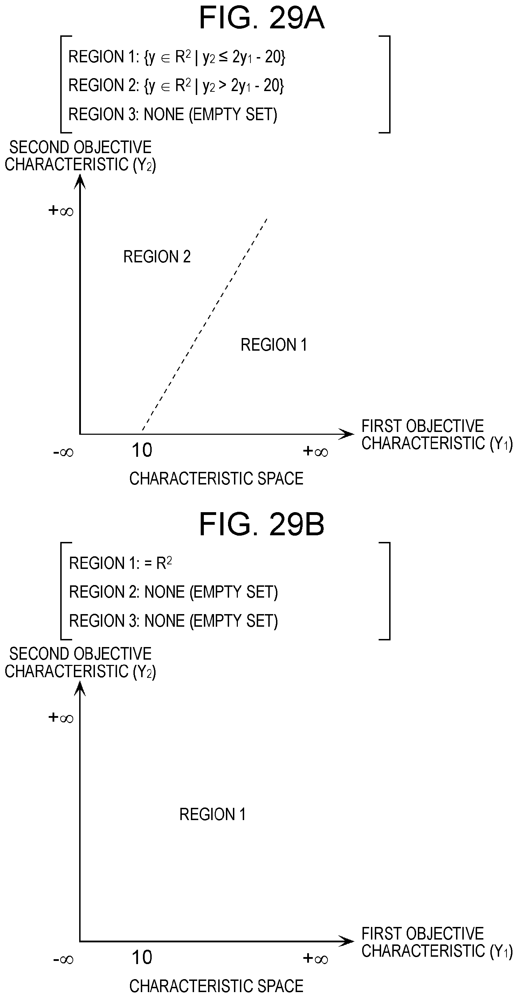

Figs. 29A to 29C are diagrams illustrating another example of the characteristic space divided into regions in a case where the region reduction rule according to the present exemplary embodiment is applied.

The example illustrated in Fig. 29A illustrates a case where the characteristic space is divided into two regions by setting region 3 to an empty set for the two-dimensional objective characteristic. More specifically, as illustrated in Fig. 29A, since the third region is an empty set, the third region is divided into a first region that is a region below a straight line defined by $y_2 = 2y_1 - 20$ in the characteristic space and a second region that is a region above a straight line defined by an inclination of 45 degrees in the characteristic space.

The example illustrated in Fig. 29B illustrates a case where the characteristic space is divided into one region 1 by setting region 2 and region 3 to an empty set with respect to the two-dimensional objective characteristic. More specifically, as illustrated in Fig. 29B, since the second region and the third region are empty sets, the entire characteristic space is divided into only the first region.

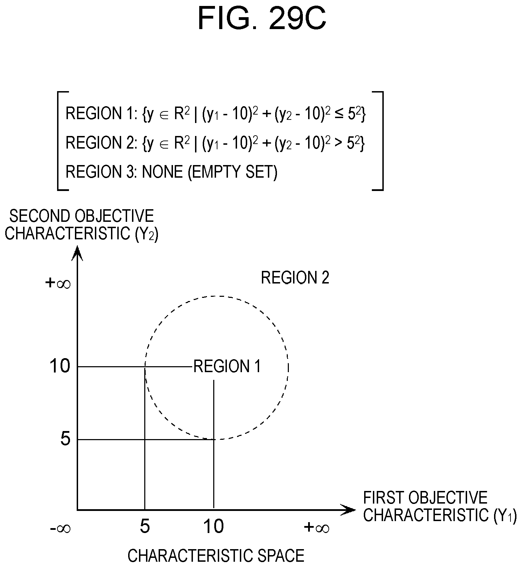

The example illustrated in Fig. 29C illustrates a case where the characteristic space is divided into two regions by setting region 3 to an empty set for the two-dimensional objective characteristic. That is, in the example illustrated in Fig. 29C, since the third region is an empty set, the entire characteristic space is divided into the first region and the second region. More specifically, as illustrated in Fig. 29C, the region is divided into a first region that is a region expressed by the center (10, 10) of the circle and the radius 5 in the characteristic space, and a second region that is a region other than the first region in the characteristic space.

In this way, when the region reduction rule is applied, an empty set may be set in the D + 1 regions of the segmented characteristic space. However, in this case, an arbitrary point on the characteristic space is allocated to any one region other than the empty set.

Next, a method of calculating a pareto boundary in a case where the region reduction rule is applied will be described.

Here, as described above, the Pareto point is a characteristic point that is temporarily regarded as a Pareto solution at the present time, and is also referred to as a non-inferior solution. For example, in a characteristic space including a two-dimensional objective characteristic, it is assumed that the optimization objective of each of the first objective characteristic and the second objective characteristic is minimization. In this case, the pareto point is a characteristic point at which there is no other characteristic point at which both the values of the first objective characteristic and the second objective characteristic are smaller than all the observed other characteristic points.

Furthermore, the pareto boundary is a boundary determined from the coordinates of at least one pareto point. In the first exemplary embodiment, for example, as illustrated in Fig. 14A, the pareto boundary is a boundary line determined by extending and connecting the coordinates of the pareto point in a direction in which the values of the first objective characteristic and the second objective characteristic are large. On the other hand, in the present exemplary embodiment, when the region reduction rule is applied, the method of calculating the pareto boundary is changed. That is, when the region reduction rule is applied, the definition of the pareto boundary is changed by determining the dimension for reducing the active region for each region.

Here, a method of calculating a pareto boundary in a case where the definition of the pareto boundary is changed by applying the region reduction rule will be described.

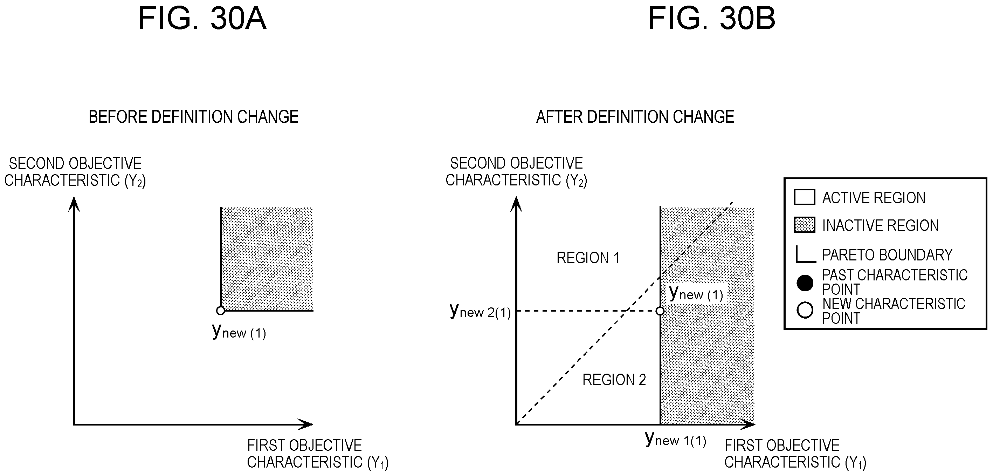

Figs. 30A to 33B are diagrams for explaining a method of calculating a Pareto boundary according to the present exemplary embodiment. Figs. 30A, 31A, 32A, and 33A illustrate examples of the method of calculating a Pareto boundary before the definition change, that is, the method of calculating a Pareto boundary in the first exemplary embodiment to which the region reduction rule is not applied. Figs. 30B, 31B, 32B, and 33B illustrate examples of the method of calculating a Pareto boundary after the definition change, that is, the method of calculating a Pareto boundary in the present exemplary embodiment to which the region reduction rule is applied. Note that, in Figs. 30A to 33B, it is assumed that the optimization objective of each of the first objective characteristic and the second objective characteristic is minimization in a characteristic space including, for example, a two-dimensional objective characteristic. Furthermore, in Figs. 30B, 31B, 32B, and 33B, it is assumed that the region is divided into region 1 and region 2 by a straight line passing through the origin and defined by an inclination of 45 degrees in the characteristic space.

For example, in Figs. 30A and 30B, when the first new characteristic point $y_{new(1)}$ is obtained, the new characteristic point $y_{new(1)}$ is the Pareto point. In this case, as illustrated in Fig. 30A, when the region reduction rule is not applied and the definition is not changed, a boundary line determined by connecting the coordinates of the new characteristic point $y_{new(1)}$ along the directions of the first objective characteristic and the second objective characteristic is the Pareto boundary. On the other hand, as illustrated in Fig. 30B, when the region reduction rule is applied and the definition is changed, since the new characteristic point $y_{new(1)}$ is located in the region 2, the boundary line that passes through the coordinates of the first objective characteristic of the new characteristic point $y_{new(1)}$ and is determined in parallel to the axis of the second objective characteristic becomes the pareto boundary. In other words, the coordinate $y_{new1(1)}$ of the first objective characteristic of the new characteristic point $y_{new(1)}$ is larger than the coordinate $y_{new2(1)}$ of the second objective characteristic of the new characteristic point $y_{new(1)}$. Therefore, the region on the right side of the new characteristic point $y_{new1(1)}$ is set as the inactive region. Furthermore, this can also be expressed as reducing (reducing) the active region at the coordinate $y_{new1(1)}$ of the new characteristic point $y_{new(1)}$.

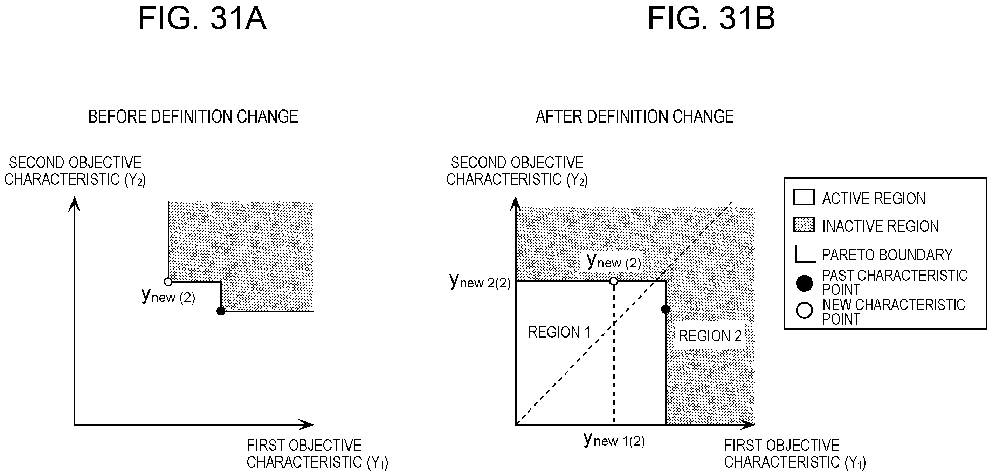

Next, for example, in Figs. 31A and 31B, when the second new characteristic point $y_{new(2)}$ is obtained, the new characteristic point $y_{new(2)}$ is a pareto point. In this case, as illustrated in Fig. 31A, when the region reduction rule is not applied and the definition is not changed, a boundary line determined by extending and connecting the coordinates of the characteristic point $y_{new(1)}$ and the coordinates of the new characteristic point $y_{new(2)}$ in a direction in which the values of the first objective characteristic and the second objective characteristic are large is the pareto boundary. On the other hand, as illustrated in Fig. 31B, when the region reduction rule is applied and the definition is changed, the new characteristic point $y_{new(2)}$ is located in region 1. Therefore, a boundary line including a line that passes through the coordinates of the second objective characteristic of the new characteristic point $y_{new(2)}$ and is determined in parallel with the axis of the first objective characteristic and a line that passes through the coordinates of the first objective characteristic of the characteristic point $y_{new(1)}$ and is determined in parallel with the axis of the second objective characteristic is a Pareto boundary. In other words, the coordinate $y_{new2(2)}$ of the second objective characteristic of the new characteristic point $y_{new(2)}$ is larger than the coordinate $y_{new1(2)}$ of the first objective characteristic of the new characteristic point $y_{new(2)}$. Therefore, a region on the right side of the new characteristic point $y_{new1(1)}$ or a region on the upper side of the new characteristic point $y_{new2(2)}$ is set as the inactive region. Furthermore, this can also be expressed as further reducing (reducing) the active region at the coordinate $y_{new2(2)}$ of the new characteristic point $y_{new(2)}$.

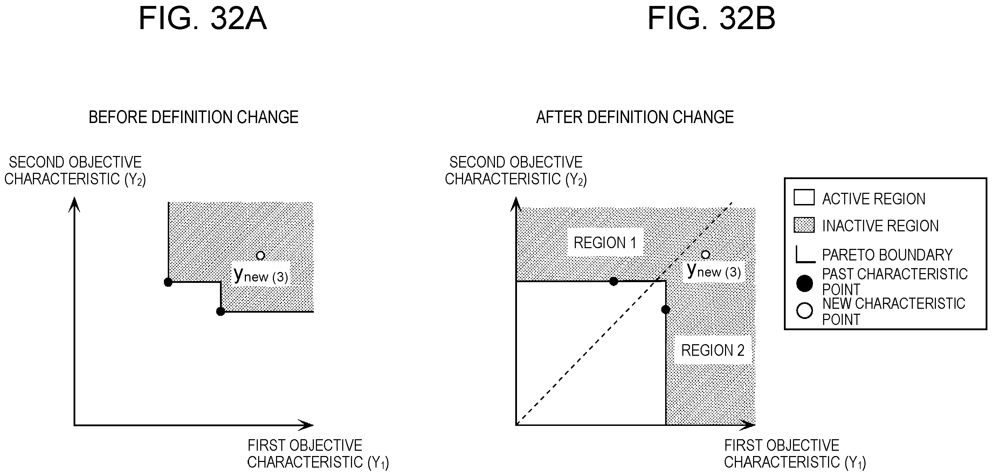

Note that, for example, in Figs. 32A and 32B, when the third new characteristic point $y_{new(3)}$ is obtained, the new characteristic point $y_{new(3)}$ is not a pareto point. In this case, as illustrated in Figs. 32A and 32B, the pareto boundary is not changed. In other words, in a case where the new characteristic point $y_{new(3)}$ is not included in the active region and is included in the inactive region, the new characteristic point $y_{new(3)}$ does not become the pareto point, and thus the pareto boundary is not changed.

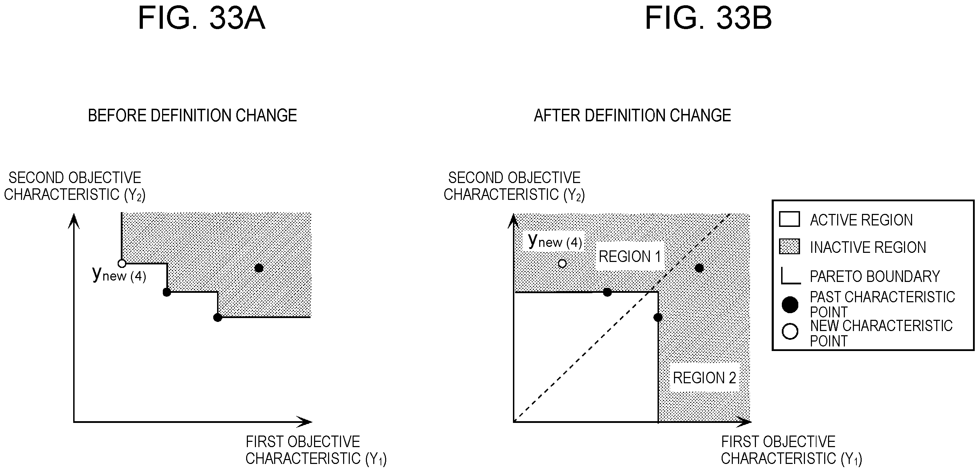

Next, for example, in Fig. 33A, when a fourth new characteristic point $y_{new(4)}$ is obtained, the new characteristic point $y_{new(4)}$ is a pareto point. In this case, in Fig. 33A, since the new characteristic point $y_{new(4)}$ is included in the active region, the pareto boundary is changed. On the other hand, in Fig. 33B, since the new characteristic point $y_{new(4)}$ is included in the inactive region, the pareto boundary is not changed.

As described above, in the present exemplary embodiment, when the region reduction rule is applied, the definition of the pareto boundary is changed by determining the dimension for reducing the active region for each region.

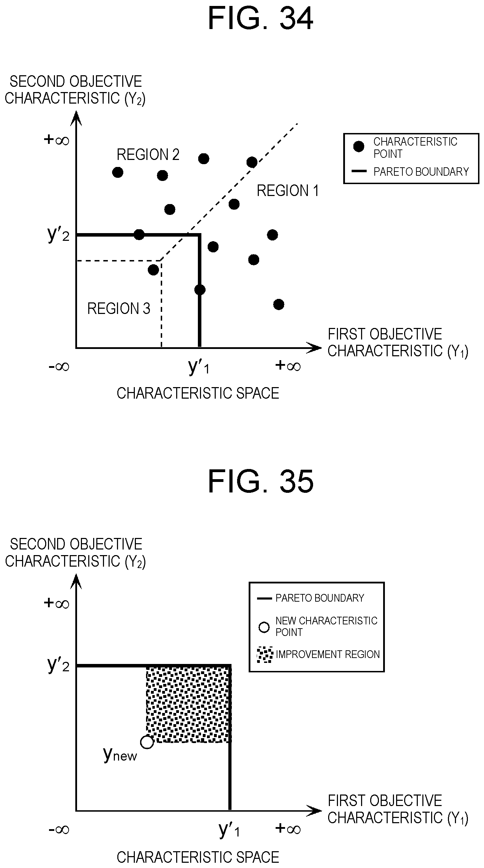

Fig. 34 is a diagram illustrating an example of a pareto boundary in a case where there is no constraint condition according to the present exemplary embodiment. Fig. 34 illustrates an example of the pareto boundary calculated in a case where the region is divided as illustrated in Fig. 28. Note that, in Fig. 34, the optimization objective of each of the first objective characteristic and the second objective characteristic is minimization in a characteristic space including, for example, a two-dimensional objective characteristic. Furthermore, in the example illustrated in Fig. 34, region 1 and region 2 are used for calculating the Pareto boundary, while region 3 is not used for calculating the Pareto boundary.

Such a Pareto boundary can be formulated as in (Formula 9).

[Mathematical formula 10]

$$\{y \in \mathbb{R}^D \mid {}^\forall d \in \{1, \dots, D\}, y_d \le y'_d\} \setminus \{y \in \mathbb{R}^D \mid {}^\forall d \in \{1, \dots, D\}, y_d < y'_d\} \ \dots \text{(Forumla 9)}$$

Here, with respect to the D-dimensional objective characteristic, the entire characteristic space is divided into D + 1 regions, and for each d = 1,... D, a coordinate having the smallest $y_d$ coordinate among the characteristic points included in the region d among the observed characteristic points is set as y'd. Note that nothing is performed on the characteristic points included in the region D + 1. Furthermore, the initial value of y'd is set as each standard upper limit value. At this time, the region represented by (Formula 9) is the pareto boundary in the present exemplary embodiment. In (Formula 9), D represents the number of objective characteristics (number of dimensions), and

[Mathematical formula 11]

$$y \in \mathbb{R}^D$$

represents that y is an element of a D-dimensional Euclidean space. ¥ indicates a set (difference set) obtained by removing an element included in the right set of backlash from the left set of backlash.

[Mathematical formula 12]

$$\forall$$

That is, turn A represents taking an "arbitrary" element in the set.

Therefore, evaluation value calculator 12A calculates, as the pareto boundary, a boundary determined by the coordinate $y'_d$ at the characteristic point having the coordinate $y'_d$ having the smallest $y_d$ coordinate among the characteristic points included in the region d by (Formula 9).

Fig. 35 is a diagram illustrating an example of an improvement region under the Pareto boundary illustrated in Fig. 34.

As described above, evaluation value calculator 12A can calculate the amount of improvement (that is, $I(y_{new})$), which is the volume of the improvement region, as illustrated in Fig. 35 for the dimension of the objective characteristic whose optimization objective is minimization and the dimension of the objective characteristic whose optimization objective is within the standard range. That is, when the region reduction rule is applied, evaluation value calculator 12A can calculate the improvement amount (that is, $I(y_{new})$) by calculating the expected value of the volume of one small region determined by the existing Pareto boundary and the newly determined Pareto point. To explain this intuitively, evaluation value calculator 12A can calculate the amount of improvement from the amount of increase in the inactive region that can be represented by the expected value of the volume of one small region.

When the $y_d$ coordinate of the new characteristic point $y_{new}$ is $y_{new,d}$, the method of calculating such an improvement amount can be defined as (Formula 10) as the volume of the improvement region (referred to as the improvement amount) when $y_{new}$ is observed.

[Mathematical formula 13]

$$I(y_{new}) = \prod_{d=1}^{D} max\{y'_d - y_{new,d}, 0\} \ \dots \ [\text{Formula 10}]$$

In (Formula 10), $y_{new,d}$ represents the coordinates (d-th component) of dimension d of the new characteristic point, and $y'_d$ represents the coordinates (d-th component) of dimension d of the observed characteristic point (pareto point) defining the pareto boundary. Furthermore, in (Formula 10), if $y_{new,d}$ is less than $y'_d$ with respect to a certain dimension d, the amount of improvement (that is, $I(y_{new})$) becomes a non-negative real number, whereas if $y_{new,d}$ is $y'_d$ or more with respect to a certain dimension d, the amount of improvement (that is, $I(y_{new})$) becomes 0 instead of a negative real number.

Then, it can be considered in the same manner as in the first exemplary embodiment that a characteristic point greatly improved from the provisional experimental result is obtained as the amount of improvement (that is, $I(y_{new})$) represented by the volume of the amount of improvement calculated in this manner is larger.

Furthermore, similarly to EHVI, the acquisition function in the present exemplary embodiment is defined using the predictive distribution number calculated from the Gaussian process regression for each candidate experimental point. More specifically, the acquisition function in the present exemplary embodiment can be defined by an amount obtained by taking an expected value of an improvement amount as in (Formula 4). Then, the quality of the experimental point to be executed next is evaluated by the magnitude of the value of the amount obtained by taking the expected value of the improvement amount.

As described above, according to the method for calculating an acquisition function in the present exemplary embodiment, it is possible to calculate an acquisition function as long as an expected value of a volume of a single D-dimensional super-cuboid is calculated without requiring division into small regions and sum calculation as described in the first exemplary embodiment. As a result, the calculation amount of the acquisition function is independent of the number of pareto points $N_{\_pareto}$, and can be suppressed to an increase in polynomial order with respect to an increase in the number of objective characteristics D, so that high-speed analysis processing can be realized while maintaining search efficiency.

Note that, in the above description, the region reduction rule applied in a case where the standard range is not set has been described, but the present invention is not limited thereto. A standard range may be set, and a region reduction rule is similarly applied.

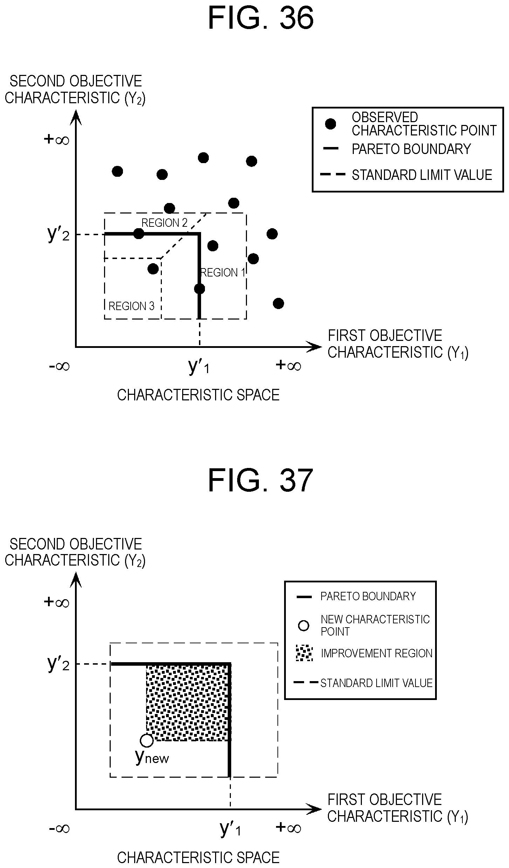

Fig. 36 is a diagram illustrating an example of a pareto boundary in a case where there is a constraint condition according to the present exemplary embodiment. Fig. 37 is a diagram illustrating an example of an improvement region determined in a case where there is a constraint condition under the Pareto boundary illustrated in Fig. 36.

Fig. 36 is different from Fig. 34 in that the standard range is set, and the others are the same. That is, Fig. 36 illustrates an example of the Pareto boundary calculated when the region is divided as illustrated in Fig. 28 and the standard range is set in the characteristic space including the two-dimensional objective characteristic. Note that, also in the example illustrated in Fig. 36, it is assumed that the optimization objective of each of the first objective characteristic and the second objective characteristic is minimization.

Even in such a case, since the region reduction rule is defined within the standard range, the active region is reduced in the same procedure as described above every time a new characteristic point is observed. That is, evaluation value calculator 12A calculates, as an active boundary, a boundary defined by coordinate $y'_d$ of a characteristic point having the smallest $y_d$ coordinate among the characteristic points included in region d and within the standard range by (Formula 9).

Then, since the improvement region is determined as illustrated in Fig. 37, evaluation value calculator 12A can calculate the evaluation of the acquisition function using (Formula 4) and (Formula 5).

Note that, when the region reduction rule is set, search priority may be given to each dimension d of the objective characteristic. Hereinafter, a method of setting the region reduction rule in consideration of the search priority will be described.

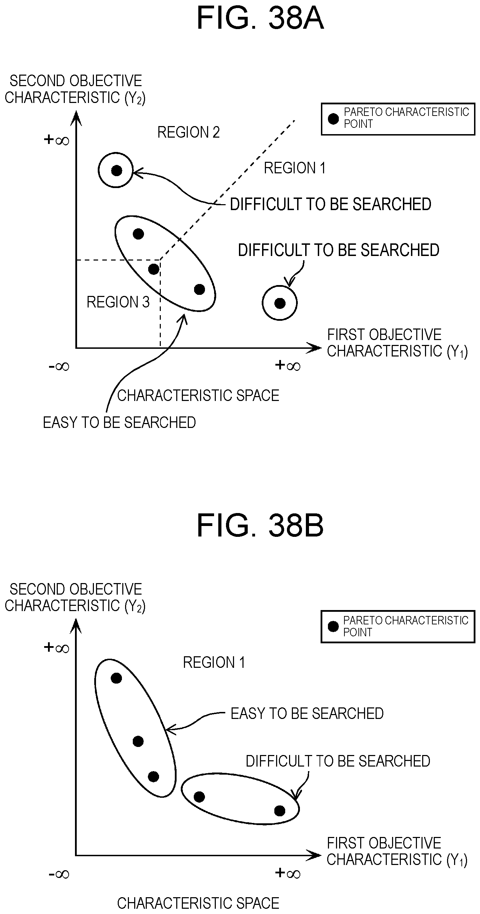

Fig. 38A is a diagram conceptually illustrating search priorities in the divided regions illustrated in Fig. 28.

For example, in Fig. 28, the characteristic space is divided into three regions, that is, region 1, region 2, and region 3, and region 1 and region 2 are divided so as to equally divide the region of the characteristic space excluding the portion of region 3. Note that region 3 is a region of the characteristic space that is not used for calculating the Pareto boundary. Furthermore, it is assumed that the optimization objective of each of the first objective characteristic and the second objective characteristic is minimization. Under these conditions, when the characteristic points are sequentially observed, the probability of entering region 1 and the probability of entering region 2 are almost the same. Therefore, the Pareto boundary moves in the minimum direction of each axis of the objective characteristic at the same speed. That is, in the case of region division as illustrated in Fig. 28, it can be said that search priority is not given.

However, in the first exemplary embodiment, the Pareto boundary is set based on all the Pareto points, whereas in the present exemplary embodiment, the Pareto boundary is set based on some Pareto points. For this reason, in the case of the divided region as illustrated in Fig. 28, as illustrated in Fig. 38A, for example, it is difficult to search for a pareto point in which the coordinate $y_1$ of the first objective characteristic is smaller than the other pareto points, but the coordinate $y_2$ of the second objective characteristic is larger than the other pareto points. Similarly, for example, it is difficult to search for a pareto point in which the coordinate $y_2$ of the second objective characteristic is smaller than the other pareto points, but the coordinate $y_1$ of the first objective characteristic is larger than the other pareto points. Therefore, evaluation value calculator 12A may not be able to search for the pareto point at these positions. Note that a case where it is desired to search for such a pareto point is a rare case, but in a case where it is desired to search without omission, region division as described below may be performed.

For example, in the case of region division as illustrated in Fig. 29A, the inclination of the division line (boundary) dividing region 1 and region 2 is steeper than that of the divided region illustrated in Fig. 28. In a case where the region is divided in this manner, when the characteristic points are observed in order, the probability that a new characteristic point is observed in region 1 becomes higher than the probability that a new characteristic point is observed in region 2. Therefore, the pareto boundary easily moves in the minimum direction of the axis Yi of the first objective characteristic. That is, in a case where the region is divided as illustrated in Fig. 29, it can be interpreted that the priority of the search in the minimum direction of the axis Yi of the first objective characteristic is given.

Fig. 38B is a diagram conceptually illustrating search priorities in the divided regions illustrated in Fig. 29B.

Note that, for example, Fig. 29B can be interpreted as illustrating an extreme case where the characteristic space is divided into one region 1. Also in the example illustrated in Fig. 38B, it is assumed that the optimization objective of each of the first objective characteristic and the second objective characteristic is minimization. When the characteristic points are sequentially observed under these conditions, as illustrated in Fig. 38B, regardless of the position where the characteristic point is observed, if the coordinate $y_1$ of the first objective characteristic is smaller than that of the observed characteristic point, the pareto boundary moves in the minimum direction of the axis Yi direction of the first objective characteristic, so that the characteristic point having the smaller coordinate $y_1$ of the first objective characteristic is easily searched for.

From the above, it can be seen that the priority to be given can be adjusted by setting the size of the divided region and the division line (boundary) when the search priority is given to each objective characteristic. Furthermore, in a case where a search priority is not assigned to each objective characteristic, the divided region may be equally divided.

Note that, in the example of the region division illustrated in Fig. 28, region 3 that is a region of the characteristic space not used for calculating the pareto boundary is set. In other words, since region 3 illustrated in Fig. 28 is not used for calculating the pareto boundary, the active region is not reduced even if a characteristic point that can be a pareto point is observed. There are two intents to provide such region 3 when setting the region reduction rule. The first intention is to suppress the probability of deviating from the standard, and the second intention is to suppress the underflow of the value of the acquisition function.

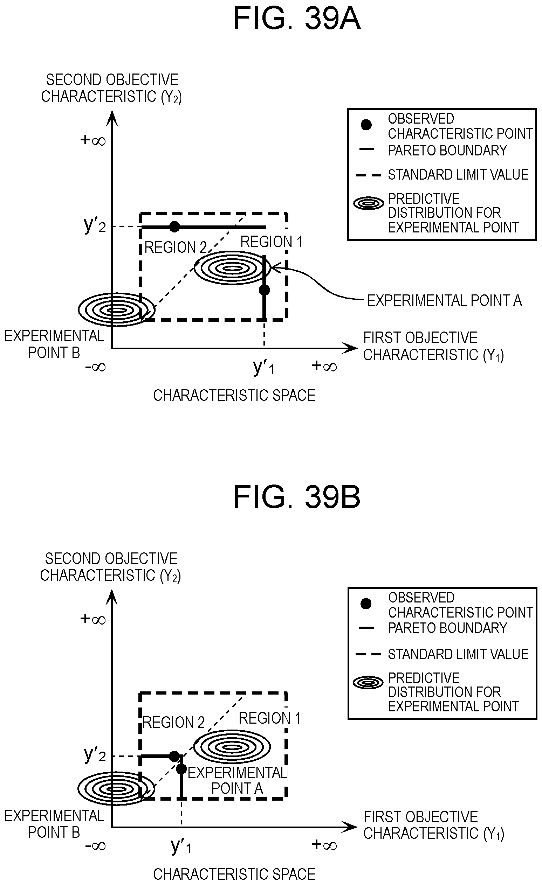

Hereinafter, first, a first intention will be described with reference to Figs. 39A and 39B.

Figs. 39A and 39B are diagrams for explaining the positional relationship between the predictive distribution and the Pareto boundary in a case where the region reduction rule is applied to the standard range according to the present exemplary embodiment. Note that, in Figs. 39A and 39B, the same standard range is set.

Consider a situation in which predictive distributions for experimental points A and B are given in a situation in which a Pareto boundary is calculated from observed characteristic points as illustrated in Fig. 39A or Fig. 39B.

In the situation illustrated in Fig. 39, when the experiment is performed at experimental point A, the probability that the characteristic point is observed at the center of the predictive distribution with respect to experimental point A is high. Therefore, the probability that the volume (improvement amount) of the improvement region determined by the Pareto boundary and the new characteristic point is positive is high, and the probability that the observed characteristic point falls within the standard range is sufficiently high. On the other hand, in the situation illustrated in Fig. 39, when the experiment is performed at experimental point B, there is a high probability that the characteristic point is observed toward the center of the predictive distribution with respect to experimental point B. However, if the observed characteristic point falls within the standard range, a large amount of improvement can be obtained, but the probability that the observed characteristic point falls within the standard range is minimum. Therefore, when the acquisition function is calculated, experimental point A is easily recommended.

Subsequently, the same consideration will be given to Fig. 39B. That is, in the situation illustrated in Fig. 39B, when the experiment is performed at experimental point A, the probability that the characteristic point is observed at the center of the predictive distribution with respect to experimental point A is high, and the probability that the observed characteristic point falls within the standard range is sufficiently high. However, the probability that the volume (improvement amount) of the improvement region determined by the pareto boundary and the new characteristic point is positive is extremely low. On the other hand, in the situation illustrated in Fig. 39B, when the experiment is performed at experimental point B, the probability that the characteristic point is observed in the predictive distribution for experimental point B is high. Furthermore, the probability that the observed characteristic point falls within the standard range is minimal, but if the observed characteristic point falls within the standard range, a large amount of improvement can be obtained. Therefore, when the acquisition function is calculated, experimental point B is easily recommended.

From the above, if one of the purposes is to proceed with the search without deviating from the standard as much as possible even if the amount of improvement is small, it is preferable to secure a region such as region 3 with a certain size. This is because the probability of deviating from the standard can be suppressed by setting such region 3 at the time of region division. Note that it is not necessary to set such region 3 as long as it is intended to search for an optimal solution in a minimum direction without hesitating to deviate the observed characteristic point from the standard range.

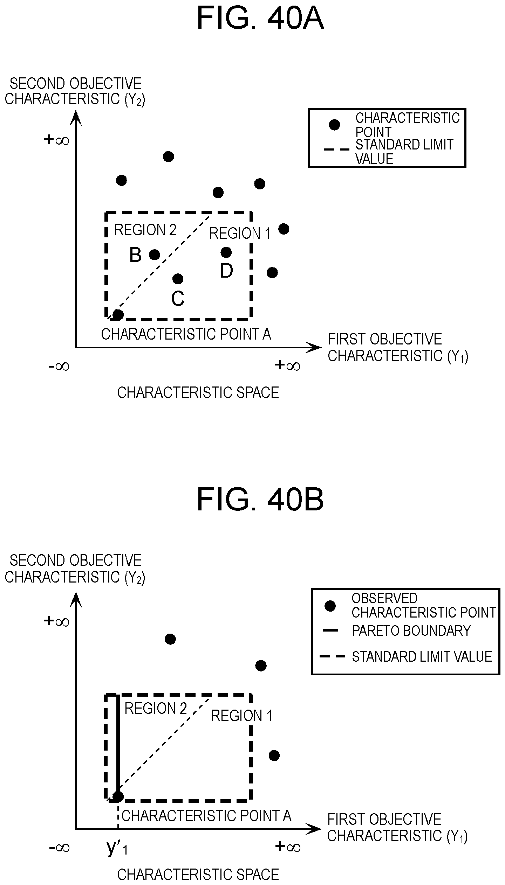

Next, a second intention will be described with reference to Figs. 40A and 40B.

Fig. 40A is a diagram illustrating positions of characteristic points that can be observed in a case where the region reduction rule is applied to the standard range according to the present exemplary embodiment. Fig. 40B is a diagram for explaining the relationship between the order of the characteristic points observed and the Pareto boundary in a case where the region reduction rule is applied to the standard range according to the present exemplary embodiment.

Fig. 40A illustrates the positions of characteristic points that can be observed without calculating the pareto boundary, and illustrates an example of a case where there are four characteristic points A, B, C, and D included in the standard range. Fig. 40B illustrates a situation in which characteristic point A is observed among four characteristic points A, B, C, and D that can be observed at the position as illustrated in Fig. 40A while the characteristic point is being observed after the experiment is performed.

Then, in the situation illustrated in Fig. 40B, the pareto boundary is drawn at coordinate $y_1$ of the first objective characteristic at characteristic point A. In this case, evaluation value calculator 12A evaluates the goodness of the next characteristic point using (Formula 4), and performs the integral calculation of the predictive distribution in a small range surrounded by the standard range and the Pareto boundary illustrated in Fig. 40B. Then, since evaluation value calculator 12A calculates an evaluation value having an extremely small number of digits, there is a possibility that the evaluation value is processed as 0 in arithmetic circuit 102A. Therefore, there is a possibility that evaluation value calculator 12A cannot correctly evaluate the experimental points even if the experimental points have a theoretical difference.

Therefore, it is preferable to secure a region such as region 3 with a certain size so as not to calculate an evaluation value having an extremely small number of digits. This is because the underflow of the value of the acquired function can be suppressed by setting such region 3 at the time of region division.

The method of calculating the acquisition function described above is a method of obtaining a strict solution. In a case where the prediction distribution is calculated using a method obtained by a normal distribution such as Gaussian process regression, the acquisition function can be calculated analytically in this manner.

Note that a method other than the Gaussian process regression may be used as long as the correspondence relationship between the candidate experimental point and the characteristic point can be estimated with some probability distribution. Examples of a method other than the Gaussian process regression include a Kalman filter. However, in a case where another method in which the predictive distribution to be calculated is not necessarily a normal distribution is used, there is a possibility that the acquisition function cannot be calculated analytically. Therefore, the acquisition function may be approximately calculated by a method such as a Monte Carlo method.

Furthermore, in the present exemplary embodiment, it has been described that there is a case where the standard range is provided as the constraint condition, but as in Modification 1 of the first exemplary embodiment, not only the standard range but also a range other than the standard range may be provided. For example, as illustrated in Fig. 17, a management range in which the characteristic points are desired to be contained as much as possible may be set in a standard range in which the characteristic points are desired to be contained at the minimum. Note that details of a case where the management range is set are the same as those in Modification 1 of the first exemplary embodiment, and thus description thereof is omitted.

Furthermore, in the present exemplary embodiment, it has been described that evaluation value calculator 12A calculates the evaluation value, but the evaluation value calculator is not limited thereto. Evaluation value calculator 12A may calculate not only the evaluation value but also the minimum distance as in Modification 2 of the first exemplary embodiment.

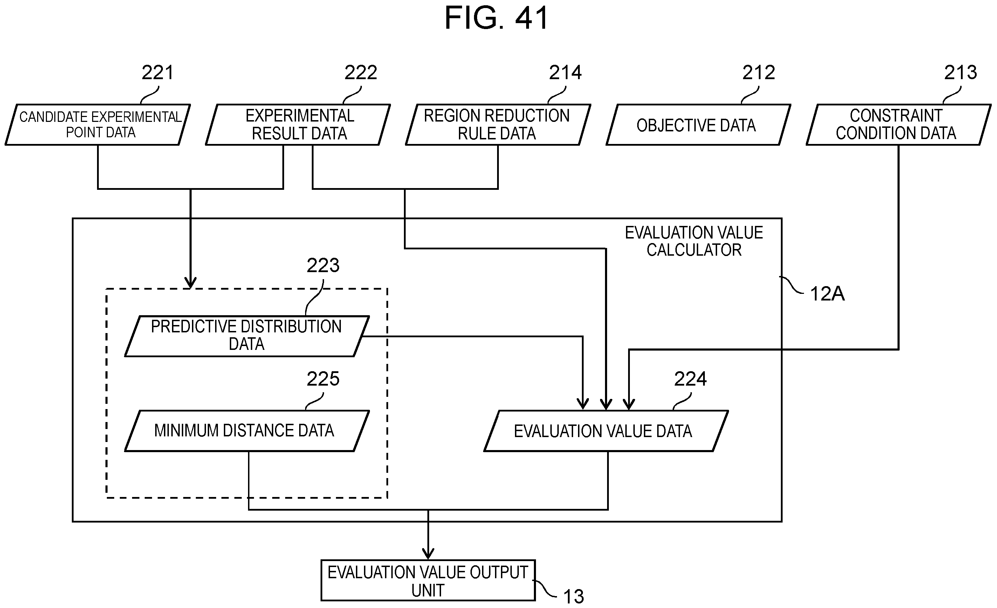

Fig. 41 is a diagram for describing processing in a case where evaluation value calculator 12A according to the present exemplary embodiment also calculates the minimum distance. Elements similar to those in Fig. 27 are denoted by the same reference marks, and a detailed description thereof will be omitted. Note that evaluation value calculator 12A calculates the minimum distance of each candidate experimental point based on candidate experimental point data 221 and experimental result data 222, but this calculation processing is the same as that described in Modification 2 of the first exemplary embodiment, and thus the description thereof will be omitted.

As a result, the user of evaluation device 100A can select a candidate experimental point to be the next experimental point on the basis of not only the evaluation value but also the minimum distance. For example, at the initial stage of optimal solution search, the user can improve the accuracy of the evaluation value and perform appropriate optimization by selecting, as the next experimental point, a candidate experimental point corresponding to an evaluation value having a relatively large evaluation value and a relatively long minimum distance.

Through the above flow, it is possible to quantitatively and quickly analyze the optimum experimental conditions (that is, candidate experimental points) to be performed next from the past experimental results. As a result, it can be expected to shorten the development cycle and speed up the analysis processing regardless of the ability of the analyst such as the user.

That is, according to the second exemplary embodiment, since evaluation value calculator 12A can change the definition of the pareto boundary on the basis of the region reduction rule data, it is possible to calculate the acquisition function in the Bayesian optimization only by calculating the expectation value of the volume of the single super-cuboid. As a result, since evaluation value calculator 12A can suppress the calculation amount of the acquisition function while maintaining the search efficiency, it is possible to evaluate each candidate experimental point at high speed.

Therefore, according to the second exemplary embodiment, it is possible to reduce the calculation amount to the polynomial function order while maintaining the search efficiency with respect to the optimization problem having the constraint condition according to the standard range, and to execute the quantitative evaluation for the optimal solution search at high speed.

(Examples)

An example of a process when the region reduction rule is applied to search for the optimal solution of the objective characteristic, that is, an example of a process of reducing the active region and calculating the Pareto boundary will be described below as an example.

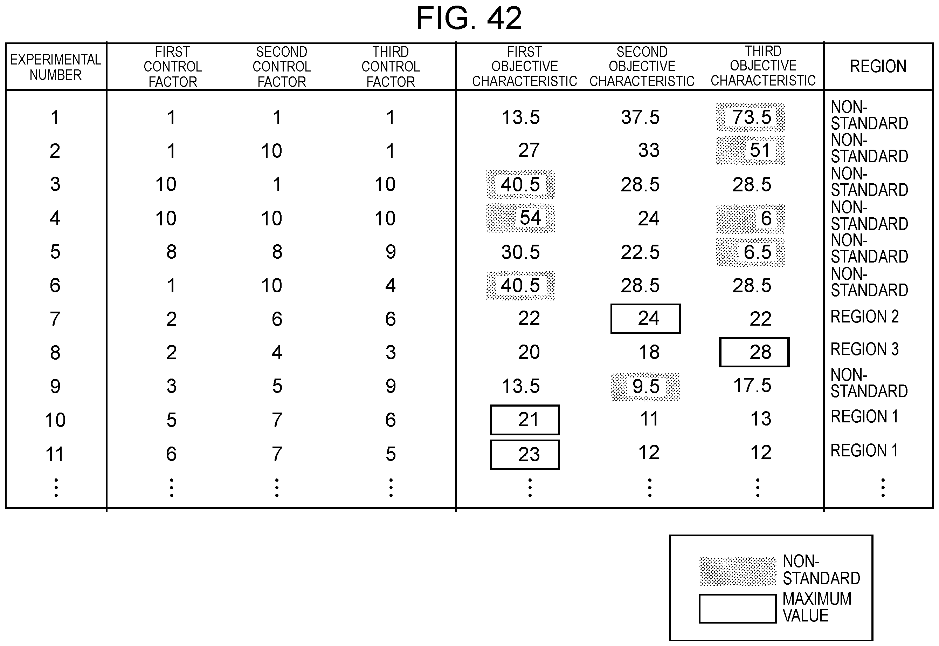

Fig. 42 is a diagram illustrating an example of an experimental result data sheet obtained when an optimal solution is searched according to the example of the present exemplary embodiment. Note that the calculation processing of the predictive distribution and the calculation processing of the acquisition function are the same as those described using EHVI and EHVIC in the first exemplary embodiment, and thus the description thereof will be omitted.

Fig. 42 illustrates, for each experiment number, experimental points used in the experiment identified by the experiment number and characteristic points that are experimental results obtained by the experiment. Furthermore, Fig. 42 illustrates an example in a case where the number of control factors is 3, the number of objective characteristics is 3, and possible levels of each control factor are 1, 2,..., and 10. Furthermore, the optimization objective of each objective characteristic number is minimization, and the standard range of each objective characteristic is 10 to 40. This standard range can be expressed as (Formula 11). Furthermore, the region reduction rule in the present exemplary embodiment is defined as (Formula 12). In (Formula 12), 0 represents the origin (0, 0, 0).

[Mathematical formula 14]

$$R = \left\{ y \in \mathbb{R}^3 \,\middle|\, {}^\forall d \in \{1,2,3\}, 10 \le y_d \le 40 \right\} \ \dots \ [\text{Formula } 11]$$

[Mathematical formula 15]

$$
\begin{aligned}
&\text{Region } 1: \{y \in R | y_1 = L_\infty(y, 0)\} \\
&\text{Region } 2: \{y \in R | y_2 = L_\infty(y, 0), y_2 \ne y_1\} \\
&\text{Region } 3: \{y \in R | y_3 = L_\infty(y, 0), y_3 \ne y_1, y_3 \ne y_2\} \\
&\text{Region } 4: \text{Empty set} \qquad\qquad\qquad\qquad \dots \ [\text{Formula } 12]
\end{aligned}
$$

Hereinafter, a flow of processing when searching for an optimal solution of an objective characteristic by sequentially repeating experiments according to the experiment numbers illustrated in Fig. 42 will be described.

First, the coordinates (Hereinafter, referred to as Pareto boundary coordinates) that define the pareto boundary are initialized to (40, 40, 40) that is the standard maximum value. That is, in the characteristic space represented by the three objective characteristics (the first control factor to the third control factor), the active region is initialized to the region represented by the standard maximum value according to the region reduction rule. Since the active region can be expressed by the pareto boundary coordinates, in the present exemplary embodiment, the reduction of the active region is expressed by deleting the maximum value of the pareto boundary coordinates.

Furthermore, it is assumed that the experimental results obtained by the experiments up to the sixth experiment are given as initial values, but all the characteristic points that are the experimental results obtained by the experiments up to the sixth experiment are non-standard. Therefore, the pareto boundary coordinates are (40, 40, 40) at the time points when the sixth experiment is completed.

Next, evaluation value calculator 12A calculates a predictive distribution for each experimental point candidate having the seventh experimental point number on the basis of the experimental results up to the sixth experimental point number, and calculates an acquisition function for each experimental point candidate using (Formula 4). The experimental point having the maximum evaluation value obtained from the calculated acquisition function is adopted as the seventh experimental point, and the experimental result having the seventh experimental number is given as illustrated in Fig. 42. Here, the characteristic point whose experiment number is the seventh experiment result falls within the standard range, and belongs to region 2 defined by (Formula 12). Therefore, the pareto boundary coordinates are updated with the coordinates of the second objective characteristic, that is, scraped in $Y_2$ dimensions, and become (40, 24, 40).

Next, based on the experimental result with the seventh experimental number, evaluation value calculator 12A calculates a predictive distribution for each experimental point candidate with the eighth experimental number, and calculates an acquisition function for each experimental point candidate using (Formula 4). The experimental point having the maximum evaluation value obtained from the calculated acquisition function is adopted as the eighth experimental point, and the experimental result having the eighth experimental number is given as illustrated in Fig. 42. Here, the characteristic point whose experiment number is the eighth experiment result falls within the standard range, and belongs to region 3 defined by (Formula 12). Therefore, the pareto boundary coordinates are updated with the coordinates of the third objective characteristic, that is, scraped in $Y_3$ dimensions, and become (40, 24, 28).

Next, evaluation value calculator 12A calculates a predictive distribution for each experimental point candidate having the ninth experimental point on the basis of the eighth experimental result of the experimental number, and calculates an acquisition function for each experimental point candidate using (Formula 4). The experimental point having the maximum evaluation value obtained from the calculated acquisition function is adopted as the ninth experimental point, and the experimental result having the ninth experimental number is given as illustrated in Fig. 42. Here, the characteristic point whose experiment number is the ninth experiment result is out of the specification range. Therefore, the pareto boundary coordinates are not updated and remain at (40, 24, 28).

Next, based on the result of the ninth experiment with the experiment number, evaluation value calculator 12A calculates a predictive distribution for each experimental point candidate with the tenth experiment number, and calculates an acquisition function for each experimental point candidate using (Formula 4). The experimental point having the maximum evaluation value obtained from the calculated acquisition function is adopted as the tenth experimental point, and the experimental result having the tenth experimental number is given as illustrated in Fig. 42. Here, the characteristic point whose experiment number is the tenth experiment result falls within the standard range, and belongs to region 1 defined by (Formula 12). Therefore, the pareto boundary coordinates are updated with the coordinates of the first objective characteristic, that is, scraped in the Yi dimension to be (21, 24, 28).

Next, evaluation value calculator 12A calculates a predictive distribution for each experimental point candidate having the eleventh experimental point number on the basis of the experimental result having the tenth experimental point number, and calculates an acquisition function for each experimental point candidate using (Formula 4). The experimental point having the maximum evaluation value obtained from the calculated acquisition function is adopted as the eleventh experimental point, and the experimental result having the eleventh experimental number is given as illustrated in Fig. 42. Here, the characteristic point whose experiment number is the eleventh experiment result falls within the standard range, and belongs to region 1 defined by (Formula 12). However, since the value (y1 coordinate) of the first objective characteristic of the characteristic point whose experiment number is the eleventh experiment result is larger than the $y_1$ coordinate of the pareto boundary, the pareto boundary coordinate is not updated and remains (21, 24, 28).

By performing the above processing every time one set of experimental results is added, it is possible to search for an optimal solution with improved calculation efficiency while maintaining search efficiency.

(Modification)

The division lines divided into regions by the region reduction rule are not limited to those described in the second exemplary embodiment.

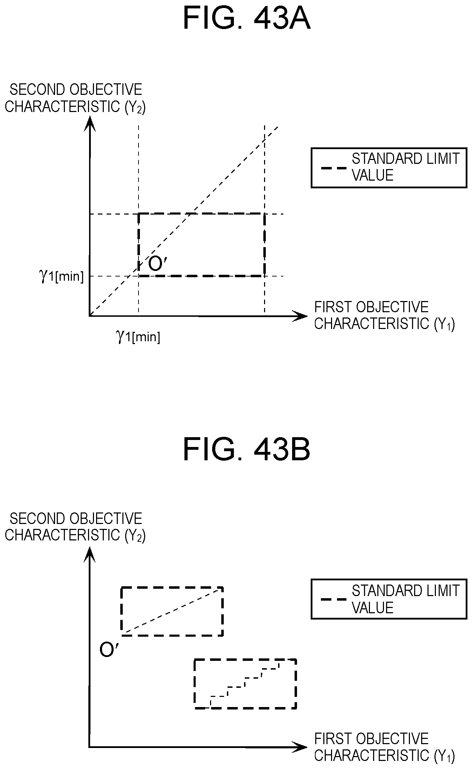

Figs. 43A and 43B are diagrams for explaining another example of division lines for region division according to the region reduction rule.

For example, as illustrated in Fig. 40A, it has been described that the region is divided by the division line using the minimum point of the standard range as the reference point as the region divided by the region reduction rule having the restriction condition of the standard range, but the present invention is not limited thereto.

For example, as illustrated in Fig. 43A, the region may be divided by a division line that does not use the minimum point of the standard range as a reference point. Furthermore, for example, as illustrated in the upper part of Fig. 43B, the division line may not be a straight line defined by an inclination of 45 degrees, or as illustrated in the lower part of Fig. 43B, the division line may be a step-shaped line.

In any case, the method for calculating a Pareto boundary described in the second exemplary embodiment can be applied.

Although evaluation devices 100 and 100A according to one aspect of the present disclosure have been described above based on the above-described exemplary embodiments and modifications, the present disclosure is not limited to the exemplary embodiments and modifications. The present disclosure may include various modifications conceivable by those skilled in the art may be applied to the above-described exemplary embodiment or each modification described above without departing from the scope of the present disclosure.

Note that, in the above-described exemplary embodiments and the like, each component may be configured by dedicated hardware or may be implemented by executing a software program suitable for each component. Each component may be implemented by a program execution unit such as a CPU or a processor reading and executing a software program recorded in a recording medium such as a hard disk or a semiconductor memory. Here, the software that implements the evaluation device and the like of the above-described exemplary embodiment and the like is, for example, a program that causes a computer to execute each step of the flowchart illustrated in Fig. 9 or 26.

Note that the following cases are also included in the present disclosure.

(1) The at least one device is a computer system specifically including a microprocessor, a read only memory (ROM), a random access memory (RAM), a hard disk unit, a display unit, a keyboard, and a mouse. The RAM or the hard disk unit stores a computer program. By the microprocessor operating in accordance with the computer program, the at least one device achieves its functions. Herein, the computer program includes a combination of a plurality of command codes that indicate instructions to the computer, in order to achieve predetermined functions.

(2) A part or all of the constituent elements constituting the at least one device may include one system large scale integration (LSI). The system LSI is a super multifunctional LSI manufactured by integrating a plurality of components on one chip, and is specifically a computer system configured to include a microprocessor, a ROM, and a RAM. The RAM stores a computer program. By the microprocessor operating in accordance with the computer program, the system LSI achieves its functions.

(3) A part or all of the constituent elements constituting the at least one device may include an IC card detachable from the device or a single module. The IC card or the module is a computer system including a microprocessor, a ROM, and a RAM. The IC card or the module may include the above-described super multifunctional LSI. By the microprocessor operating in accordance with the computer program, the IC card or the module achieves its function. This IC card or this module may have tamper resistance.

(4) The present disclosure may be the methods described above. Furthermore, the present disclosure may be a computer program that causes a computer to implement these methods, or may be a digital signal configured of the computer program.

Furthermore, in the present disclosure, a computer program or a digital signal may be recorded in a computer-readable recording medium such as a flexible disk, a hard disk, a compact disc (CD)-ROM, a DVD, a DVD-ROM, a DVD-RAM, a Blu-ray (registered trademark) disc (BD), or a semiconductor memory. Furthermore, the present disclosure may be a digital signal recorded in these recording media.

Furthermore, the present disclosure may be a computer program or a digital signal transmitted via an electric communication line, a wireless or wired communication line, a network represented by the Internet, data broadcasting, or the like.

Furthermore, the program or the digital signal may be recorded on the recording medium and be transferred, or the program or the digital signal may be transferred via the network or the like, by which the present disclosure may be carried out by another independent computer system.

According to the evaluation device of the present disclosure, the Bayesian optimization can be applied to an optimization problem in which a constraint condition is given to an objective characteristic having an objective of the optimization problem.

INDUSTRIAL APPLICABILITY

The evaluation device of the present disclosure achieves an effect of being capable of apply Bayesian optimization to an optimization problem in which a constraint condition is given to an objective characteristic having an objective of the optimization problem, and can be applied not only to industrial product development or manufacturing process development but also to a device or system of optimal control in general development work such as material development.

REFERENCE MARKS IN THE DRAWINGS

    10, 10A: reception controller
    11: candidate experimental point creation unit
    12, 12A: evaluation value calculator
    13: evaluation value output unit
    100, 100A: evaluation device
    101a: input unit
    101b: communicator
    102, 102A: arithmetic circuit
    103: memory
    104: display
    105: storage
    200: program
    201: characteristic point data
    210, 210A: setting information
    211: control factor data
    212: objective data
    213: constraint condition data
    214: region reduction rule data
    221: candidate experimental point data
    222: experimental result data
    223: predictive distribution data
    224: evaluation value data
    225: minimum distance data
    300: acceptance image
    310: control factor region
    311 to 314: input field
    320: objective characteristic region
    321 to 328: input field
    330: region reduction rule region

**Claims**

1. An evaluation device that evaluates, by Bayesian optimization, an unknown characteristic point corresponding to a candidate experimental point based on a known characteristic point corresponding to an experimented experimental point, the evaluation device comprising:

   a first receiver that acquires experimental result data indicating the experimented experimental point and the known characteristic point;
   a second receiver that acquires objective data indicating an optimization objective, the unknown characteristic point indicating values of one or a plurality of objective characteristics, and at least one objective characteristic having the optimization objective;
   a third receiver that acquires constraint condition data indicating a constraint condition given to the at least one objective characteristic;
   a fourth receiver that acquires region reduction rule data indicating a division method for a characteristic space represented by at least two objective characteristics and indicating a dimension for reducing an active region for each region of the characteristic space divided by the division method;
   a calculator that calculates an evaluation value of the unknown characteristic point based on the experimental result data, the objective data, the constraint condition data, and the region reduction rule data; and
   an output unit that outputs the evaluation value, wherein
   the calculator gives a weighting according to a degree of conformity of the constraint condition to the evaluation value for the at least one objective characteristic.

2. The evaluation device according to Claim 1, wherein

   the optimization objective includes a first objective of keeping an objective characteristic within any one of at least one constraint range and a second objective of minimizing or maximizing the objective characteristic, and
   the calculator calculates the evaluation value by performing different weighting processing for each of the at least one objective characteristic
   in a case (i) where an interval of the objective characteristic used to calculate the evaluation value is outside each of the at least one constraint range,
   in a case (ii) where the interval is within any one of the at least one constraint range, and the optimization objective is the first objective, and
   in a case (iii) where the interval is within any one of the at least one constraint range, and the optimization objective is the second objective.

3. The evaluation device according to Claim 2 further comprising a candidate experimental point creation unit that creates the candidate experimental point by combining values that satisfy predetermined conditions of a plurality of control factors.

4. The evaluation device according to Claim 2 or 3, wherein the calculator calculates the evaluation value based on a constraint range having a shape different from a rectangle of the at least one constraint range.

5. The evaluation device according to any one of Claims 2 to 4, wherein in a case where a plurality of constraint ranges is present as the at least one constraint range, the calculator calculates the evaluation value by further dividing the case (ii) into a plurality of cases and performing different weighting processing in each of the plurality of cases, and in each of the plurality of cases, the interval is included in mutually different constraint ranges among the plurality of constraint ranges.

6. The evaluation device according to any one of Claims 1 to 5, wherein

   the calculator further calculates a minimum distance of distances between the candidate experimental point and respective one or more of the experimented experimental points; and
   the output unit further outputs the minimum distance corresponding to the candidate experimental point.

7. The evaluation device according to any one of Claims 1 to 6, wherein the calculator calculates a predictive distribution at the candidate experimental point using a Gaussian process regression or a Kalman filter, and calculates the evaluation value using the calculated predictive distribution.

8. The evaluation device according to any one of Claims 1 to 7, wherein the calculator calculates the evaluation value using a Monte Carlo method.

9. The evaluation device according to any one of Claims 1 to 8, wherein the calculator calculates the evaluation value using at least one of probability of improvement (PI) and expected improvement (EI) that are evaluation methods, respectively.

10. An evaluation method in which an evaluation device evaluates, by Bayesian optimization, an unknown characteristic point corresponding to a candidate experimental point based on a known characteristic point corresponding to an experimented experimental point, the evaluation method comprising:

acquiring experimental result data indicating the experimented experimental point and the known characteristic point;
acquiring objective data indicating an optimization objective, the unknown characteristic point indicating values of one or a plurality of objective characteristics, and at least one objective characteristic having the optimization objective;
acquiring constraint condition data indicating a constraint condition given to the at least one objective characteristic;
acquiring region reduction rule data indicating a division method for a characteristic space represented by at least two objective characteristics and indicating a dimension for reducing an active region for each region of the characteristic space divided by the division method;
calculating an evaluation value of the unknown characteristic point based on the experimental result data, the objective data, the constraint condition data, and the region reduction rule data; and
outputting the evaluation value, wherein in the calculating, a weighting according to a degree of conformity of the constraint condition is given to the evaluation value for the at least one objective characteristic.

11. A program for evaluating, by a computer, an unknown characteristic point corresponding to a candidate experimental point by Bayesian optimization based on a known characteristic point corresponding to an experimented experimental point, the program causing the computer to execute:

acquiring experimental result data indicating the experimented experimental point and the known characteristic point;
acquiring objective data indicating an optimization objective, the unknown characteristic point indicating values of one or a plurality of objective characteristics, and at least one objective characteristic having the optimization objective;
acquiring constraint condition data indicating a constraint condition given to the at least one objective characteristic;
acquiring region reduction rule data indicating a division method for a characteristic space represented by at least two objective characteristics and indicating a dimension for reducing an active region for each region of the characteristic space divided by the division method;
calculating an evaluation value of the unknown characteristic point based on the experimental result data, the objective data, the constraint condition data, and the region reduction rule data; and
outputting the evaluation value, wherein in the calculating, a weighting according to a degree of conformity of the constraint condition is given to the evaluation value for the at least one objective characteristic.

# FIG. 1

EVALUATION VALUE DATA **224**

| CANDIDATE EXPERIMENTAL POINT | EVALUATION VALUE |
|---|---|
| A | 0.87682 |
| B | 0.87680 |
| C | 0.74886 |
| ⋮ | ⋮ |

**100**

CHARACTERISTIC POINT CORRESPONDING TO EXPERIMENTAL POINT

EXPERIMENTAL EQUIPMENT

EXPERIMENT ACCORDING TO EXPERIMENTAL POINT

EXPERIMENTAL POINT

# FIG. 2

(a) SECOND CONTROL FACTOR / FIRST CONTROL FACTOR — EXPERIMENTAL SPACE, with CANDIDATE EXPERIMENTAL POINT

(b) SECOND OBJECTIVE CHARACTERISTIC / FIRST OBJECTIVE CHARACTERISTIC — CHARACTERISTIC SPACE, with CHARACTERISTIC POINT and STANDARD RANGE

$f$

EP 4 498 278 A1

# FIG. 3

SETTING INFORMATION 210

CHARACTERISTIC POINT DATA — 201

CONSTRAINT CONDITION DATA — 213

OBJECTIVE DATA — 212

CONTROL FACTOR DATA — 211

100

101a INPUT UNIT

101b COMMUNICATOR

102 ARITHMETIC CIRCUIT

103 MEMORY

104 DISPLAY

224 EVALUATION VALUE DATA

105 STORAGE

200 PROGRAM

221 CANDIDATE EXPERIMENTAL POINT DATA

222 EXPERIMENTAL RESULT DATA

223 PREDICTIVE DISTRIBUTION DATA

224 EVALUATION VALUE DATA

EP 4 498 278 A1

# FIG. 4

# FIG. 5

EP 4 498 278 A1

300

**310**

▦ FIRST CONTROL FACTOR

NAME | X1 | 311

VALUE | -5,-4,-3,-2,-1,0,1,2,3,4,5 | 312

▦ SECOND CONTROL FACTOR

NAME | X2 | 313

VALUE | -5,-4,-3,-2,-1,0,1,2,3,4,5 | 314

**320**

▦ FIRST OBJECTIVE CHARACTERISTIC

NAME | Y1 | 321

OBJECTIVE ◯ MAXIMIZATION ◯ MINIMIZATION ◉ RANGE | 322

STANDARD RANGE  MINIMUM 30  MAXIMUM 40

323    324

▦ SECOND OBJECTIVE CHARACTERISTIC

NAME | Y2 | 325

OBJECTIVE ◯ MAXIMIZATION ◉ MINIMIZATION ◯ RANGE | 326

STANDARD RANGE  MINIMUM 10  MAXIMUM

327    328

# FIG. 6

(a)

CONTROL FACTOR DATA 211

| | (CONTINUOUS VARIABLE) VALUE |
|---|---|
| FIRST CONTROL FACTOR | -5,-4,-3,-2,-1,0,1,2,3,4,5 |
| SECOND CONTROL FACTOR | -5,-4,-3,-2,-1,0,1,2,3,4,5 |

(b)

CONTROL FACTOR DATA 211

| | (CONTINUOUS VARIABLE) VALUE |
|---|---|
| FIRST CONTROL FACTOR | 10,20,30,40,50 |
| SECOND CONTROL FACTOR | 100,200,300,400,500 |

(c)

CONTROL FACTOR DATA 211

| | VALUE |
|---|---|
| FIRST CONTROL FACTOR | (CONTINUOUS VARIABLE) 10, 20, 30 |
| SECOND CONTROL FACTOR | (RATIO VARIABLE) 0.0, 0.2, 0.4, 0.6, 0.8, 1.0 |
| THIRD CONTROL FACTOR | (RATIO VARIABLE) 0.0, 0.2, 0.4, 0.6, 0.8, 1.0 |

# FIG. 7

(a)                                                                    OBJECTIVE DATA 212

|  | OBJECTIVE | | |
|---|---|---|---|
|  | MAXIMIZATION | MINIMIZATION | RANGE |
| FIRST OBJECTIVE CHARACTERISTIC | - | - | ○ |
| SECOND OBJECTIVE CHARACTERISTIC | - | ○ | - |

(b)                                                      CONSTRAINT CONDITION DATA 213

|  | STANDARD RANGE | |
|---|---|---|
|  | MINIMUM VALUE | MAXIMUM VALUE |
| FIRST OBJECTIVE CHARACTERISTIC | 30 | 40 |
| SECOND OBJECTIVE CHARACTERISTIC | 10 | +∞ |

# FIG. 8A

STANDARD RANGE OF FIRST OBJECTIVE CHARACTERISTIC:
MINIMUM VALUE 30, MAXIMUM VALUE 40
STANDARD RANGE OF SECOND OBJECTIVE CHARACTERISTIC:
MINIMUM VALUE 10, MAXIMUM VALUE NONE

SECOND OBJECTIVE
CHARACTERISTIC

STANDARD RANGE

10

30          40     FIRST OBJECTIVE
                    CHARACTERISTIC
CHARACTERISTIC SPACE

# FIG. 8B

STANDARD RANGE: INSIDE OF CIRCLE WITH CENTER (20, 20)
AND RADIUS 10

SECOND OBJECTIVE
CHARACTERISTIC

STANDARD RANGE

20

10    20      FIRST OBJECTIVE
              CHARACTERISTIC
CHARACTERISTIC SPACE

# FIG. 9

**SETTING INFORMATION**

START

/ 211
CONTROL FACTOR DATA → CREATE CANDIDATE EXPERIMENTAL POINT — S1

/ 212
OBJECTIVE DATA → ACQUIRE OBJECTIVE DATA — S2

/ 213
CONSTRAINT CONDITION DATA → ACQUIRE CONSTRAINT CONDITION DATA — S3

ACQUIRE EXPERIMENTAL RESULT DATA — S4

CALCULATE EVALUATION VALUE — S5

OUTPUT EVALUATION VALUE — S6

CONTINUE OR END? — S7

END → END

**STORAGE**

EXPERIMENTAL RESULT DATA — 222

RECORD NEW EXPERIMENTAL RESULT — S8

CONTINUE

# FIG. 10A

VALUE OF FIRST CONTROL FACTOR (CONTINUOUS VARIABLE): 10, 20, 30, 40, 50
VALUE OF SECOND CONTROL FACTOR (CONTINUOUS VARIABLE): 100, 200, 300, 400, 500

| EXPERIMENTAL POINT NUMBER | CANDIDATE EXPERIMENTAL POINT (VALUE OF FIRST CONTROL FACTOR, VALUE OF SECOND CONTROL FACTOR) |
|---|---|
| 1 | (10,100) |
| 2 | (10,200) |
| 3 | (10,300) |
| 4 | (10,400) |
| 5 | (10,500) |
| 6 | (20,100) |
| 7 | (20,200) |
| 8 | (20,300) |
| 9 | (20,400) |
| 10 | (20,500) |
| ⋮ | ⋮ |
| 23 | (50,300) |
| 24 | (50,400) |
| 25 | (50,500) |

CANDIDATE EXPERIMENTAL POINT DATA 221

# FIG. 10B

VALUE OF FIRST CONTROL FACTOR (CONTINUOUS VARIABLE): 10, 20, 30
VALUE OF SECOND CONTROL FACTOR (RATIO VARIABLE): 0.0, 0.2, 0.4, 0.6, 0.8, 1.0
VALUE OF THIRD CONTROL FACTOR (RATIO VARIABLE): 0.0, 0.2, 0.4, 0.6, 0.8, 1.0

| EXPERIMENTAL POINT NUMBER | CANDIDATE EXPERIMENTAL POINT (VALUE OF FIRST CONTROL FACTOR, VALUE OF SECOND CONTROL FACTOR, VALUE OF THIRD CONTROL FACTOR) |
|---|---|
| 1 | (10,0.0,1.0) |
| 2 | (10,0.2,0.8) |
| 3 | (10,0.4,0.6) |
| 4 | (10,0.6,0.4) |
| 5 | (10,0.8,0.2) |
| 6 | (10,1.0,0.0) |
| 7 | (20,0.0,1.0) |
| 8 | (20,0.2,0.8) |
| 9 | (20,0.4,0.6) |
| 10 | (20,0.6,0.4) |
| 11 | (20,0.8,0.2) |
| 12 | (20,1.0,0.0) |
| ⋮ | ⋮ |
| 16 | (30,0.6,0.4) |
| 17 | (30,0.8,0.2) |
| 18 | (30,1.0,0.0) |

CANDIDATE EXPERIMENTAL POINT DATA 221

# FIG. 11

EXPERIMENTAL RESULT DATA 222

| EXPERIMENTAL NUMBER | FIRST CONTROL FACTOR | SECOND CONTROL FACTOR | FIRST OBJECTIVE CHARACTERISTIC | SECOND OBJECTIVE CHARACTERISTIC |
|---|---|---|---|---|
| 1 | 10 | 100 | 8 | 0.0 |
| 2 | 10 | 500 | 40 | 1.6 |
| 3 | 50 | 100 | 40 | 1.6 |
| 4 | 50 | 500 | 72 | 3.2 |
| 5 | 30 | 300 | 32 | 0.8 |
| ⋮ | ⋮ | ⋮ | ⋮ | ⋮ |

# FIG. 12

EP 4 498 278 A1

## FIG. 13

| EXPERIMENTAL POINT NUMBER | FIRST OBJECTIVE CHARACTERISTIC | | SECOND OBJECTIVE CHARACTERISTIC | |
|:---:|:---:|:---:|:---:|:---:|
| | MEAN | VARIANCE | MEAN | VARIANCE |
| 1 | 23.5322 | 19.4012 | 0.77661 | 0.97006 |
| 2 | 30.2536 | 21.5521 | 1.11268 | 1.07761 |
| 3 | 37.9799 | 22.5370 | 1.49899 | 1.12685 |
| 4 | 39.8555 | 21.5521 | 1.59277 | 1.07761 |
| 5 | 40.0000 | 19.4012 | 1.60000 | 0.97006 |
| 6 | 30.2536 | 21.5521 | 1.11268 | 1.07761 |
| 7 | 34.2329 | 22.2566 | 1.31164 | 1.11283 |
| 8 | 38.8221 | 22.5958 | 1.54111 | 1.12979 |
| 9 | 40.0000 | 22.2566 | 1.60000 | 1.11283 |
| 10 | 40.1445 | 21.5521 | 1.60723 | 1.07761 |
| ⋮ | ⋮ | ⋮ | ⋮ | ⋮ |
| 23 | 42.0201 | 22.5370 | 1.70101 | 1.12685 |
| 24 | 49.7464 | 21.5521 | 2.08732 | 1.07761 |
| 25 | 56.4678 | 19.4012 | 2.42339 | 0.97006 |

# FIG. 14A

# FIG. 14B

# FIG. 15A

(a) SECOND OBJECTIVE
CHARACTERISTIC

| | PARETO POINT |
| --- | --- |
| | PARETO BOUNDARY |
| | MAXIMUM VALUE OF STANDARD RANGE |
| O | NEW CHARACTERISTIC POINT |
| | IMPROVEMENT REGION |

STANDARD RANGE

$y_{new}$

STANDARD RANGE

FIRST OBJECTIVE CHARACTERISTIC

CHARACTERISTIC SPACE

DIVIDE INTO SMALL REGIONS, AND ADD EXPECTATION VALUE OF VOLUME FOR EACH SMALL REGION

(b)

IMPROVEMENT REGION

(c)

# FIG. 15B

SECOND OBJECTIVE
CHARACTERISTIC

Legend:
- ● PARETO POINT
- --- STANDARD VALUE
- ○ NEW CHARACTERISTIC POINT

STANDARD RANGE

$y_{new}$

STANDARD RANGE

FIRST OBJECTIVE
CHARACTERISTIC

CHARACTERISTIC SPACE

# FIG. 15C

SECOND OBJECTIVE
CHARACTERISTIC

UPPER END POINT:
$(y'_1, y'_2)$
LOWER END POINT:
$(y_1, y_2)$

UPPER END POINT

LOWER END POINT

$y'_2$

$y_2$

$y_1$

$y'_1$

FIRST OBJECTIVE
CHARACTERISTIC

# FIG. 16

EVALUATION VALUE DATA 224

| EXPERIMENTAL POINT NUMBER | EVALUATION VALUE | RANK |
|---|---|---|
| 1 | 0.00000 | 23 |
| 2 | 0.87682 | 1 |
| 3 | 0.62342 | 4 |
| 4 | 0.55940 | 8 |
| 5 | 0.00000 | 24 |
| 6 | 0.87682 | 2 |
| 7 | 0.74886 | 3 |
| 8 | 0.59519 | 6 |
| 9 | 0.55550 | 11 |
| 10 | 0.54936 | 13 |
| ⋮ | ⋮ | ⋮ |
| 23 | 0.48971 | 18 |
| 24 | 0.25715 | 21 |
| 25 | 0.00000 | 25 |

# FIG. 17

STANDARD RANGE OF FIRST OBJECTIVE CHARACTERISTIC:
    MINIMUM VALUE 10, MAXIMUM VALUE 50
STANDARD RANGE OF SECOND OBJECTIVE CHARACTERISTIC:
    MINIMUM VALUE 10, MAXIMUM VALUE 50
MANAGEMENT RANGE OF FIRST OBJECTIVE CHARACTERISTIC:
    MINIMUM VALUE 20, MAXIMUM VALUE 40
MANAGEMENT RANGE OF SECOND OBJECTIVE CHARACTERISTIC:
    MINIMUM VALUE 20, MAXIMUM VALUE 40

SECOND OBJECTIVE CHARACTERISTIC

STANDARD RANGE

MANAGEMENT RANGE

FIRST OBJECTIVE CHARACTERISTIC

CHARACTERISTIC SPACE

# FIG. 18

- 213 CONSTRAINT CONDITION DATA
- 212 OBJECTIVE DATA
- 222 EXPERIMENTAL RESULT DATA
- 221 CANDIDATE EXPERIMENTAL POINT DATA
- 12 EVALUATION VALUE CALCULATOR
- 223 PREDICTIVE DISTRIBUTION DATA
- 225 MINIMUM DISTANCE DATA
- 224 EVALUATION VALUE DATA
- 13 EVALUATION VALUE OUTPUT UNIT

# FIG. 19

SECOND CONTROL FACTOR

CANDIDATE ● EXPERIMENTAL POINT

A: CANDIDATE EXPERIMENTAL POINT
B, C, D, E: PAST EXPERIMENTAL POINT
   $L_2(A,B)=3$
   $L_2(A,C)=1.41412$
   $L_2(A,D)=4.47214$
   $L_2(A,E)=4.12311$
=> MINIMUM $L_2$ DISTANCE FOR CANDIDATE
EXPERIMENTAL POINT A: 1.41412

EXPERIMENTAL SPACE

FIRST CONTROL FACTOR

# FIG. 20

MINIMUM DISTANCE DATA 225

| EXPERIMENTAL POINT NUMBER | MINIMUM DISTANCE |
|---|---|
| 1 | 0.00000 |
| 2 | 1.00000 |
| 3 | 2.00000 |
| 4 | 1.00000 |
| 5 | 0.00000 |
| 6 | 1.00000 |
| 7 | 1.41421 |
| 8 | 2.23607 |
| 9 | 1.41421 |
| 10 | 1.00000 |
| ⋮ | ⋮ |
| 23 | 2.00000 |
| 24 | 1.00000 |
| 25 | 0.00000 |

# FIG. 21

EVALUATION VALUE DATA 224

| EVALUATION VALUE RANK | EVALUATION VALUE | CANDIDATE EXPERIMENTAL POINT | MINIMUM DISTANCE |
|---|---|---|---|
| 1 | 0.87682 | (10,200) | 1.00000 |
| 2 | 0.87682 | (20,100) | 1.00000 |
| 3 | 0.74886 | (20,200) | 1.41421 |
| 4 | 0.62342 | (10,300) | 2.00000 |
| 5 | 0.62342 | (30,100) | 2.00000 |
| 6 | 0.59519 | (20,300) | 2.23607 |
| 7 | 0.59519 | (30,200) | 2.23607 |
| 8 | 0.55940 | (10,400) | 1.00000 |
| 9 | 0.55940 | (40,100) | 1.00000 |
| 10 | 0.55604 | (30,300) | 2.82843 |
| ⋮ | ⋮ | ⋮ | ⋮ |
| 23 | 0.00000 | (50,300) | 0.00000 |
| 24 | 0.00000 | (50,400) | 0.00000 |
| 25 | 0.00000 | (50,500) | 0.00000 |

# FIG. 22

SETTING INFORMATION 210A

CHARACTERISTIC POINT DATA — 201

CONSTRAINT CONDITION DATA — 213

OBJECTIVE DATA — 212

CONTROL FACTOR DATA — 211

REGION REDUCTION RULE DATA — 214

100A

INPUT UNIT — 101a

COMMUNICATOR — 101b

ARITHMETIC CIRCUIT — 102A

MEMORY — 103

DISPLAY — 104

EVALUATION VALUE DATA — 224

STORAGE — 105

PROGRAM — 200

CANDIDATE EXPERIMENTAL POINT DATA — 221

EXPERIMENTAL RESULT DATA — 222

PREDICTIVE DISTRIBUTION DATA — 223

EVALUATION VALUE DATA — 224

EP 4 498 278 A1

# FIG. 23

```
                                                    102A
ARITHMETIC CIRCUIT                                    11
                                          CANDIDATE EXPERIMENTAL
                              10A         POINT CREATION UNIT
                                                     12A
      RECEPTION CONTROLLER
                                          EVALUATION VALUE
                                          CALCULATOR
                                                     13

                                          EVALUATION VALUE OUTPUT
                                          UNIT
```

# FIG. 24

```
                                                    330
 ■ ACTIVE REGION REDUCTION RULE
                                                    331
      ◉ APPLY          ○ NOT APPLY
 ■ REGION DIVISION
                                                    332
   EMPTY SET SETTING   ◉ PRESENT  ○ NONE
```

# FIG. 25

REGION REDUCTION RULE DATA 214

| | |
|---|---|
| DEFINITION OF PARETO BOUNDARY | CHANGE |
| DEFINITION OF ACTIVE REGION | CHANGE |
| REGION DIVISION | APPLY |

EP 4 498 278 A1

# FIG. 26

SETTING INFORMATION

CONTROL FACTOR DATA — 211

OBJECTIVE DATA — 212

CONSTRAINT CONDITION DATA — 213

REGION REDUCTION RULE DATA — 214

START

CREATE CANDIDATE EXPERIMENTAL POINT — S21

ACQUIRE OBJECTIVE DATA — S22

ACQUIRE CONSTRAINT CONDITION DATA — S23

ACQUIRE REGION REDUCTION RULE DATA — S24

ACQUIRE EXPERIMENTAL RESULT DATA — S25

CALCULATE EVALUATION VALUE — S26

OUTPUT EVALUATION VALUE — S27

CONTINUE OR END? — S28

END

STORAGE

EXPERIMENTAL RESULT DATA — 222

RECORD NEW EXPERIMENTAL RESULT — S29

CONTINUE

FIG. 27

EP 4 498 278 A1

# FIG. 28

$$
\left[
\begin{array}{l}
\text{REGION 1: } \{y \in R^2 \mid y_1 > 10,\ y_1 > y_2\} \\
\text{REGION 2: } \{y \in R^2 \mid y_2 > 10,\ y_1 \leq y_2\} \\
\text{REGION 3: } \{y \in R^2 \mid -\infty < y_1 \leq 10,\ -\infty < y_2 \leq 10\}
\end{array}
\right]
$$

SECOND OBJECTIVE
CHARACTERISTIC (Y$_2$)

$+\infty$

REGION 2

10

REGION 1

REGION 3

FIRST OBJECTIVE
CHARACTERISTIC (Y$_1$)

$-\infty$　　10　　$+\infty$

CHARACTERISTIC SPACE

# FIG. 29A

REGION 1: $\{y \in R^2 \mid y_2 \leq 2y_1 - 20\}$

REGION 2: $\{y \in R^2 \mid y_2 > 2y_1 - 20\}$

REGION 3: NONE (EMPTY SET)

SECOND OBJECTIVE CHARACTERISTIC (Y2)

$+\infty$

REGION 2

REGION 1

FIRST OBJECTIVE CHARACTERISTIC (Y1)

$-\infty$    10    $+\infty$

CHARACTERISTIC SPACE

# FIG. 29B

REGION 1: $= R^2$

REGION 2: NONE (EMPTY SET)

REGION 3: NONE (EMPTY SET)

SECOND OBJECTIVE CHARACTERISTIC (Y2)

$+\infty$

REGION 1

FIRST OBJECTIVE CHARACTERISTIC (Y1)

$-\infty$    10    $+\infty$

CHARACTERISTIC SPACE

# FIG. 29C

$$\left[\begin{array}{l} \text{REGION 1: } \{y \in R^2 \mid (y_1 - 10)^2 + (y_2 - 10)^2 \leq 5^2\} \\ \text{REGION 2: } \{y \in R^2 \mid (y_1 - 10)^2 + (y_2 - 10)^2 > 5^2\} \\ \text{REGION 3: NONE (EMPTY SET)} \end{array}\right]$$

SECOND OBJECTIVE CHARACTERISTIC (Y$_2$)

REGION 2

REGION 1

FIRST OBJECTIVE CHARACTERISTIC (Y$_1$)

CHARACTERISTIC SPACE

# FIG. 30A

BEFORE DEFINITION CHANGE

SECOND OBJECTIVE
CHARACTERISTIC ($Y_2$)

$y_{new}$ (1)

FIRST OBJECTIVE
CHARACTERISTIC ($Y_1$)

# FIG. 30B

AFTER DEFINITION CHANGE

SECOND OBJECTIVE
CHARACTERISTIC ($Y_2$)

REGION 1

$y_{new\,2(1)}$

$y_{new}$ (1)

REGION 2

$y_{new\,1(1)}$    FIRST OBJECTIVE
CHARACTERISTIC ($Y_1$)

☐ ACTIVE REGION

▧ INACTIVE REGION

└ PARETO BOUNDARY

● PAST CHARACTERISTIC
POINT

○ NEW CHARACTERISTIC
POINT

EP 4 498 278 A1

# FIG. 31A

## BEFORE DEFINITION CHANGE

SECOND OBJECTIVE
CHARACTERISTIC ($Y_2$)

$y_{new}$ (2)

FIRST OBJECTIVE
CHARACTERISTIC ($Y_1$)

# FIG. 31B

## AFTER DEFINITION CHANGE

SECOND OBJECTIVE
CHARACTERISTIC ($Y_2$)

$y_{new \, 2(2)}$

$y_{new}$ (2)

REGION 1

REGION 2

$y_{new \, 1(2)}$

FIRST OBJECTIVE
CHARACTERISTIC ($Y_1$)

☐ ACTIVE REGION

▨ INACTIVE REGION

L PARETO BOUNDARY

● PAST CHARACTERISTIC
   POINT

○ NEW CHARACTERISTIC
   POINT

EP 4 498 278 A1

# FIG. 32A

BEFORE DEFINITION CHANGE

SECOND OBJECTIVE
CHARACTERISTIC ($Y_2$)

$y_{new}$ (3)

FIRST OBJECTIVE
CHARACTERISTIC ($Y_1$)

# FIG. 32B

AFTER DEFINITION CHANGE

SECOND OBJECTIVE
CHARACTERISTIC ($Y_2$)

REGION 1

$y_{new}$ (3)

REGION 2

FIRST OBJECTIVE
CHARACTERISTIC ($Y_1$)

☐ ACTIVE REGION

▨ INACTIVE REGION

∟ PARETO BOUNDARY

● PAST CHARACTERISTIC
POINT

○ NEW CHARACTERISTIC
POINT

EP 4 498 278 A1

# FIG. 33A

BEFORE DEFINITION CHANGE

SECOND OBJECTIVE
CHARACTERISTIC ($Y_2$)

$y_{new}$ (4)

FIRST OBJECTIVE
CHARACTERISTIC ($Y_1$)

# FIG. 33B

AFTER DEFINITION CHANGE

SECOND OBJECTIVE
CHARACTERISTIC ($Y_2$)

$y_{new}$ (4)

REGION 1

REGION 2

FIRST OBJECTIVE
CHARACTERISTIC ($Y_1$)

| | |
|---|---|
| ☐ | ACTIVE REGION |
| ▨ | INACTIVE REGION |
| ⌐ | PARETO BOUNDARY |
| ● | PAST CHARACTERISTIC POINT |
| ○ | NEW CHARACTERISTIC POINT |

EP 4 498 278 A1

# FIG. 34

SECOND OBJECTIVE
CHARACTERISTIC ($Y_2$)

REGION 2

REGION 1

$y'_2$

REGION 3

CHARACTERISTIC
POINT

PARETO BOUNDARY

$+\infty$

$-\infty$

$y'_1$

$+\infty$

FIRST OBJECTIVE
CHARACTERISTIC ($Y_1$)

CHARACTERISTIC SPACE

# FIG. 35

SECOND OBJECTIVE
CHARACTERISTIC ($Y_2$)

$+\infty$

$y'_2$

PARETO BOUNDARY

NEW CHARACTERISTIC
POINT

IMPROVEMENT REGION

$y_{new}$

$-\infty$

$y'_1$

$+\infty$

FIRST OBJECTIVE
CHARACTERISTIC ($Y_1$)

CHARACTERISTIC SPACE

# FIG. 36

SECOND OBJECTIVE
CHARACTERISTIC (Y₂)

$+\infty$

OBSERVED
CHARACTERISTIC POINT
— PARETO BOUNDARY
– – STANDARD LIMIT VALUE

REGION 2

$y'_2$

REGION 1

REGION 3

FIRST OBJECTIVE
CHARACTERISTIC (Y₁)

$-\infty$     $y'_1$     $+\infty$

CHARACTERISTIC SPACE

# FIG. 37

SECOND OBJECTIVE
CHARACTERISTIC (Y₂)

$+\infty$

— PARETO BOUNDARY
○ NEW CHARACTERISTIC POINT
IMPROVEMENT REGION
– – STANDARD LIMIT VALUE

$y'_2$

$y_{new}$

FIRST OBJECTIVE
CHARACTERISTIC (Y₁)

$-\infty$     $y'_1$     $+\infty$

CHARACTERISTIC SPACE

# FIG. 38A

SECOND OBJECTIVE
CHARACTERISTIC (Y₂)

# FIG. 38B

SECOND OBJECTIVE
CHARACTERISTIC (Y₂)

# FIG. 39A

# FIG. 39B

# FIG. 40A

CHARACTERISTIC SPACE

# FIG. 40B

CHARACTERISTIC SPACE

# FIG. 41

EP 4 498 278 A1

## FIG. 42

| EXPERIMENTAL NUMBER | FIRST CONTROL FACTOR | SECOND CONTROL FACTOR | THIRD CONTROL FACTOR | FIRST OBJECTIVE CHARACTERISTIC | SECOND OBJECTIVE CHARACTERISTIC | THIRD OBJECTIVE CHARACTERISTIC | REGION |
|---|---|---|---|---|---|---|---|
| 1 | 1 | 1 | 1 | 13.5 | 37.5 | 73.5 | NON-STANDARD |
| 2 | 1 | 10 | 1 | 27 | 33 | 51 | NON-STANDARD |
| 3 | 10 | 1 | 10 | 40.5 | 28.5 | 28.5 | NON-STANDARD |
| 4 | 10 | 10 | 10 | 54 | 24 | 6 | NON-STANDARD |
| 5 | 8 | 8 | 9 | 30.5 | 22.5 | 6.5 | NON-STANDARD |
| 6 | 1 | 10 | 4 | 40.5 | 28.5 | 28.5 | NON-STANDARD |
| 7 | 2 | 6 | 6 | 22 | 24 | 22 | REGION 2 |
| 8 | 2 | 4 | 3 | 20 | 18 | 28 | REGION 3 |
| 9 | 3 | 5 | 9 | 13.5 | 9.5 | 17.5 | NON-STANDARD |
| 10 | 5 | 7 | 6 | 21 | 11 | 13 | REGION 1 |
| 11 | 6 | 7 | 5 | 23 | 12 | 12 | REGION 1 |
| ⋮ | ⋮ | ⋮ | ⋮ | ⋮ | ⋮ | ⋮ | ⋮ |

▨ NON-STANDARD
☐ MAXIMUM VALUE

EP 4 498 278 A1

# FIG. 43A

# FIG. 43B

<div align="center">

**INTERNATIONAL SEARCH REPORT**

</div>

| International application No. |
|---|
| **PCT/JP2022/043278** |

| A. | CLASSIFICATION OF SUBJECT MATTER |
|---|---|

*G06F 30/20*(2020.01)i; *G06Q 10/04*(2023.01)i
FI:   G06F30/20; G06Q10/04

According to International Patent Classification (IPC) or to both national classification and IPC

| B. | FIELDS SEARCHED |
|---|---|

Minimum documentation searched (classification system followed by classification symbols)

G06F30/20; G06Q10/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-45266 A (HITACHI LTD) 22 March 2018 (2018-03-22)<br>abstract, paragraphs [0001]-[0013], fig. 1-9 | 1-11 |
| A | JP 2012-123592 A (FUJITSU LTD) 28 June 2012 (2012-06-28)<br>abstract, paragraphs [0001]-[0010], fig. 1-23 | 1-11 |
| A | JP 2011-48768 A (HITACHI LTD) 10 March 2011 (2011-03-10)<br>abstract, paragraphs [0001]-[0020], fig. 1-11 | 1-11 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/043278**

| Patent document cited in search report | | | Publication date (day/month/year) | Patent family member(s) | Publication date (day/month/year) |
|---|---|---|---|---|---|
| JP | 2018-45266 | A | 22 March 2018 | (Family: none) | |
| JP | 2012-123592 | A | 28 June 2012 | US 2012/0150500 A1 abstract, fig. 1-23, paragraphs [0002]-[0032] | |
| JP | 2011-48768 | A | 10 March 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019113985 A

**Non-patent literature cited in the description**

- The computation of the expected improvement in dominated hypervolume of Pareto front approximations. **M.EMMERICH** ; **A.DEUTZ** ; **J.W.KLINKENBERG**. Repport Technique. Leiden University, 2008, vol. 34

- **M.ABDOLSHAH** ; **A.SHILTON** ; **S.RANA** ; **S.GUPTA** ; **S.VENKATESH**. Expected Hypervolume Improvement with Constraints. *International Conference on Pattern Recognition (ICPR)*, 2018